# EUROPEAN PATENT SPECIFICATION

(11) **EP 3 705 287 B1**
(45) Date of publication and mention of the grant of the patent: **09.12.2026**
(21) Application number: 18874523.6
(22) Date of filing: 30.10.2018
(51) Int. Cl.: B32B 3/08, B32B 27/00, C08L 71/00, B32B 3/02, B32B 7/12, B32B 15/00, B32B 17/10, B32B 27/28, B32B 27/30, B32B 27/32, B32B 27/34, B32B 27/36

(54) **LAYERED PRODUCT**
SCHICHTPRODUKT
STRATIFIÉ

(30) Priority: 31.10.2017 JP 2017211200
(43) Date of publication of application: 09.09.2020
(73) Proprietor: Daikin Industries, Ltd., Osaka-shi, Osaka 530-0001 (JP); Daikin America, Inc., Orangeburg, NY 10962 (US)
(72) Inventor: HONDA, Yoshiaki, Osaka-shi Osaka 530-8323 (JP); FUKUDA, Teruyuki, Osaka-shi Osaka 530-8323 (JP); OHYA, Akiko, San Jose California 95131 (US)
(74) Representative: Hoffmann Eitle
(86) International application number: PCT/JP2018/040328
(87) International publication number: WO 2019/088098

(56) References cited:
- WO-A1-2017/026318
- WO-A1-2017/026318
- WO-A1-2017/130988
- WO-A1-2017/183247
- JP-A- 2016 132 719
- JP-A- 2016 183 319
- JP-A- 2016 219 782
- US-A1- 2008 050 600
- US-A1- 2018 162 771

## Description

### Technical Field

The present invention relates to a laminated product and an article comprising the laminated product.

### Background Art

Display assemblies, touch panel assemblies, solar cell assemblies, and the like include laminated products where various base material layers are pasted, as constituent materials. Such a laminated product includes base material layers such as a liquid crystal panel, a touch panel, electrode glass and cover glass pasted by an adhesive. Patent Literature 2 discloses a glass plate with an antifouling layer. Patent Literatures 3 and 4 disclose compositions for forming an antifouling layer on a substrate.

### Citation List

### Patent Literature

Patent Literature 1: JP 2017-105069 A
Patent Literature 2: WO 2017/026318 A1
Patent Literature 3: US 2008/050600 A1
Patent Literature 4: WO 2017/130988 A1

### Summary of Invention

### Technical Problem

The present inventors have found that an article including such a laminated product, when used for a long period, may cause an adhesion layer to be swollen in some cases. The reason for this has been considered by the present inventors that such swelling is caused by the presence of an exposed portion where the adhesive layer is exposed on the edge face of the laminated product including the base material layers pasted by an adhesive. If such an exposed portion is present, a problem which can occur is that the adhesive layer is swollen when a chemical substance or the like is externally attached to the edge face of the laminated product.

Accordingly, an object of the present invention is to provide a laminated product having excellent resistance to chemical substance.

### Solution to Problem

The present inventors have made intensive studies in order to solve the above problems, and as a result, have found that resistance to chemical substance is enhanced by protecting, by a perfluoropolyether group-containing compound, the edge face of a laminated product in which base material layers are pasted by an adhesive, thereby leading to completion of the present invention.

A first aspect of the present invention provides
a laminated product in which a first base material layer, an adhesive layer and a second base material layer are stacked in this order, wherein
an edge face of the laminated product is covered with a layer formed by a curable composition including a perfluoropolyether group-containing compound wherein 50% or more of the surface area of the adhesive layer exposed on an edge face of the laminated product is covered with the layer formed by a curable composition.

A second aspect of the present invention provides an article comprising the laminated product of the present invention.

### Effects of Invention

The present invention can provide a laminated product having high resistance to chemical substance by protecting the edge face of a laminated product in which a first base material layer, an adhesive layer and a second base material layer are stacked, by a curable composition including a perfluoropolyether group-containing compound wherein 50% or more of the surface area of the adhesive layer exposed on an edge face of the laminated product is covered with the layer formed by a curable composition.

### Description of Embodiments

The laminated product of the present invention comprises a first base material layer, an adhesive layer and a second base material layer. The first base material layer, the adhesive layer and the second base material layer are stacked in this order. That is, the first base material layer and the second base material layer are pasted by the adhesive layer, thereby forming the laminated product.

The materials forming the first base material layer and the second base material layer are not limited, and, for example, are selected from the group consisting of a resin, a metal, a metal oxide, a ceramic and glass.

The resin is not limited, and examples thereof include an acrylic resin, a polycarbonate-based resin, an ABS resin, a polyester-based resin, a polyimide-based resin, a polyamide-based resin and a polyolefin-based resin.

The metal is not limited, and examples thereof include aluminum, copper, iron, stainless steel and an alloy thereof.

The metal oxide is not limited, and examples thereof include ITO (indium tin oxide) and anodized aluminum.

The ceramic is not limited, and examples thereof include aluminum oxide, silicon oxide and zirconium.

The glass is not limited, and is preferably soda-lime glass, alkali aluminosilicate glass, borosilicate glass, alkali-free glass, crystal glass or quartz glass, and examples include chemically strengthened soda-lime glass, chemically strengthened alkali aluminosilicate glass and chemically bonded borosilicate glass.

The materials forming the first base material layer and the second base material layer may be the same as or different from each other.

The shapes of the first base material layer and the second base material layer are not limited, and may be each, for example, a film shape or a plate shape.

The thicknesses of the first base material layer and the second base material layer are not limited, and maybe each, for example, 0.01 mm or more and 10.0 mm or less, 0.1 mm or more and 5 mm or less, or 0.5 mm or more and 2 mm or less.

The first base material layer and the second base material layer may be each one member. Examples of such a member include a touch panel, cover glass, an anti-scattering film, a liquid crystal panel, an electrode film and a protecting sheet. The member may be, for example, a printed circuit board (PCB: Printed Circuit Board) and an electron element mounted thereon, for example, a large scale integration (LSI: Large Scale Integration), a housing and an electron element secured thereto, for example, a speaker and a display module.

The material forming the adhesive layer is not limited as long as the material can paste the first base material layer and the second base material layer. The material forming the adhesive layer is not limited, and, for example, any of a photo-curing adhesive such as an ultraviolet-curing adhesive, and various curing adhesives such as a reaction-curing adhesive, a thermosetting adhesive and an anaerobic adhesive can be used. Such an adhesive is not limited, and examples thereof include an epoxy resin, an acrylic resin, a silicone resin, a phenol resin, an amino resin, a polyimide resin, an imide resin, a polyvinyl resin, a polyester resin, a PVC (polyvinyl chloride) resin, a PVB (polyvinyl butyral) resin and an EVA (ethylene vinyl acetate) resin.

The thickness of the adhesive layer is not limited, and may be, for example, 0.01 mm or more and 1.0 mm or less, 0.05 mm or more and 0.8 mm or less, or 0.1 mm or more and 0.6 mm or less.

The adhesive layer may be an adhesion sheet, a pressure-sensitive adhesion sheet, or a sheet-shaped or film-shaped adhesive, and, for example, an OCA (optical clear adhesive) film, or an adhesive (so-called liquid OCA) which is to be cured by UV, heat or the like after a liquid pressure-sensitive adhesive is injected can be suitably used.

The laminated product may be obtained by pasting the first base material layer and the second base material layer by the adhesive layer. The pasting method is not limited, and such pasting can be made by any method known in each field.

The laminated product is not limited, and examples thereof include one obtained by pasting a touch panel and cover glass by an adhesive layer, one obtained by pasting a liquid crystal panel and cover glass by an adhesive layer, one obtained by pasting a touch panel and a liquid crystal panel by an adhesive layer, one obtained by pasting an electrode film and cover glass by an adhesive layer, and one obtained by pasting glass and an anti-scattering film by an adhesive layer.

The edge face of the laminated product is covered with a layer formed by a curable composition including a perfluoropolyether group-containing compound (hereinafter, also referred to as "PFPE-containing compound"). That is, the edge face of the laminated product is protected by a layer formed by a curable composition including a perfluoropolyether group-containing compound.

The shape of the protecting layer is not limited as long as at least one portion of the adhesion layer exposed on the edge face of the laminated product is covered with the protecting layer.

In the invention, one embodiment, 50% or more, preferably 80% or more, further preferably substantially 100% of the surface area of the adhesion layer exposed on the edge face of the laminated product is covered with the protecting layer.

In one embodiment, the edge faces of the first base material layer and the second base material layer, beyond the adhesion layer region exposed on the edge face of the laminated product, may also be covered with the protecting layer. The protecting layer may extend to a main surface of the laminated product, namely, main surfaces of the first base material layer and the second base material layer, beyond the edge of the laminated product.

The thickness of the protecting layer is not limited, and may be, for example, 10 µm or more and 1.0 mm or less, preferably 20 µm or more and 500 µm or less, more preferably 30 µm or more and 200 µm or less.

A conventional laminated product, the edge face of which is not protected, can cause any failures such as expanding and bleaching of an adhesion layer, generation of bubbles, and releasing of any layer, due to an external contamination substance, for example, oil such as machine oil or oleic acid, water, rain water, sweat or sebum, or a chemical substance such as acid or alkali because the adhesion layer is exposed. The laminated product of the present invention includes the protecting layer, and thus allows the adhesion layer to be protected from the contamination substance and has excellent resistance.

Hereinafter, the PFPE-containing compound will be described.

The "2-10 valent organic group", as used herein, means a 2-10 valent group containing carbon. The 2-10 valent organic group is not limited, and examples thereof include a 2-10 valent group where 1 to 9 hydrogen atoms are further removed from a hydrocarbon group. The divalent organic group is not limited, and examples thereof include a divalent group where one hydrogen atom is further removed from a hydrocarbon group.

The "hydrocarbon group", as used herein, means a group which contains carbon and hydrogen and which is obtained by removing one hydrogen atom from a molecule. The hydrocarbon group is not limited, and examples thereof include a hydrocarbon group having 1 to 20 carbon atoms, optionally substituted with one or more substituents, such as an aliphatic hydrocarbon group and an aromatic hydrocarbon group. For example, the "aliphatic hydrocarbon group" may be any linear, branched or cyclic group, and may be any saturated or unsaturated group. For example, the hydrocarbon group may contain one or more ring structures. The hydrocarbon group may have one or more N, O, S, Si, amide, sulfonyl, siloxane, carbonyl, carbonyloxy, and the like at an end thereof or in a molecular chain thereof.

Each substituent of the "hydrocarbon group", as used herein, is not limited, and examples thereof include a halogen atom; and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5 to 10-membered heterocyclyl group, a 5 to 10-membered unsaturated heterocyclyl group, a C₆₋₁₀ aryl group and a 5 to 10-membered heteroaryl group each optionally substituted with one or more halogen atoms.

The alkyl group and the phenyl group may be herein unsubstituted or substituted, unless particularly noted. Each substituent of such groups is not limited, and examples thereof include one or more groups selected from a halogen atom, a C₁₋₆ alkyl group, a C₂₋₆ alkenyl group and a C₂₋₆ alkynyl group.

The PFPE-containing compound is not limited, and is typically a perfluoropolyether group-containing silane compound (hereinafter, also referred to as "PFPE-containing silane compound") or a perfluoropolyether group-containing compound having a carbon-carbon double bond at a molecular end (hereinafter, also referred to as "PFPE-containing unsaturated compound"). The PFPE-containing compound may be adopted singly or in combinations of two or more kinds thereof.

The PFPE-containing silane compound has a Si atom bonded to at least one group selected from the group consisting of a hydroxyl group and a hydrolyzable group, at each of both molecular ends.

In one embodiment, the PFPE-containing silane compound is at least one compound represented by formula (A), (B), (C) or (D).

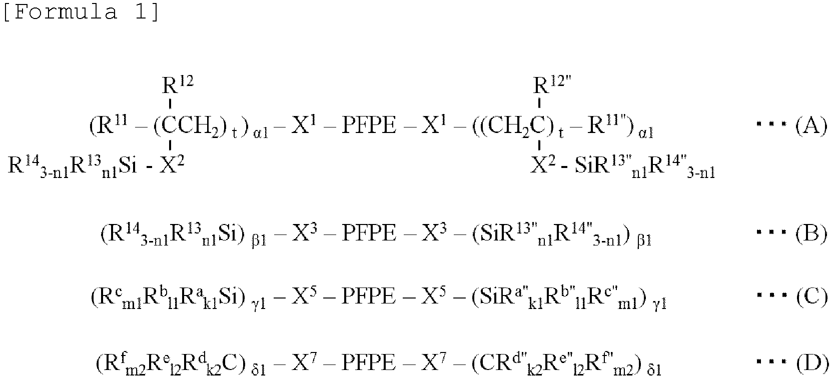

Formula (A):

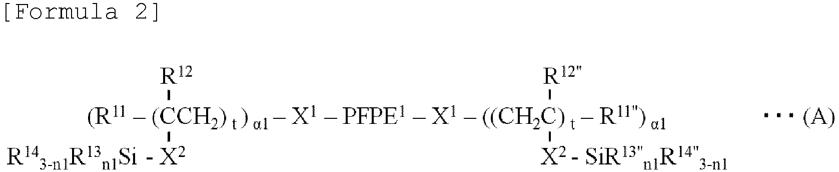

In the formulae, PFPE, at each occurrence, is each independently a group represented by:

- (OC₆F₁₂)ₐ-(OC₅F₁₀)_{b}-(OC₄F₈)_{c}-(OC₃X¹⁰₆)_{d}-(OC₂F₄)ₑ-(OCF₂)_{f}-.

In the formulae, a, b, c, d, e and f are each independently an integer of 0 or more and 200 or less, and the sum of a, b, c, d, e and f is at least 1. Preferably, the sum of a, b, c, d, e and f is 5 or more, more preferably 10 or more. Preferably, the sum of a, b, c, d, e and f is 200 or less, more preferably 200 or less, for example, 10 or more and 200 or less, more specifically 10 or more and 100 or less. The occurrence order of the respective repeating units in parentheses with a, b, c, d, e or f is not limited in the formula. X¹⁰, at each occurrence, each independently represents a hydrogen atom, a fluorine atom or a chlorine atom, preferably a hydrogen atom or a fluorine atom, more preferably a fluorine atom.

Here, a and b are each independently preferably 0 or more and 30 or less, and, for example, may be 0.

In one embodiment, a, b, c and d are each independently preferably an integer of 0 or more and 30 or less, more preferably an integer of 20 or less, particularly preferably an integer of 10 or less, further preferably an integer of 5 or less, or, for example, may be 0.

In one embodiment, the sum of a, b, c and d is preferably 30 or less, more preferably 20 or less, further preferably 10 or less, particularly preferably 5 or less.

In one embodiment, the sum of e and f is preferably 30 or more, more preferably 40 or more, further preferably 50 or more.

Such repeating units may, for example, be linear or branched, and are preferably linear. For example, - (OC₆F₁₂)- may be -(OCF₂CF₂CF₂CF₂CF₂CF₂)-, - (OCF(CF₃)CF₂CF₂CF₂CF₂)-, -(OCF₂CF(CF₃)CF₂CF₂CF₂)-, - (OCF₂CF₂CF(CF₃)CF₂CF₂)-, -(OCF₂CF₂CF₂CF(CF₃)CF₂)-, - (OCF₂CF₂CF₂CF₂CF(CF₃))-, or the like, and is preferably - (OCF₂CF₂CF₂CF₂CF₂CF₂)-. For example, -(OC₅F₁₀)- may be - (OCF₂CF₂CF₂CF₂CF₂)-, -(OCF(CF₃)CF₂CF₂CF₂)-, - (OCF₂CF(CF₃)CF₂CF₂)-, -(OCF₂CF₂CF(CF₃)CF₂)-, - (OCF₂CF₂CF₂CF(CF₃))-, or the like, and is preferably - (OCF₂CF₂CF₂CF₂CF₂)-. -(OC₄F₈)- may be any of - (OCF₂CF₂CF₂CF₂)-, -(OCF(CF₃)CF₂CF₂)-, -(OCF₂CF(CF₃)CF₂)-, - (OCF₂CF₂CF (CF₃))-, -(OC(CF₃)₂CF₂)-, -(OCF₂C(CF₃)₂)-, - (OCF(CF₃)CF(CF₃))-, -(OCF(C₂F₅)CF₂)- and -(OCF₂CF(C₂F₅))-, and is preferably -(OCF₂CF₂CF₂CF₂)-. -(OC₃F₆)- (namely, in the formulae, X¹⁰ represents a fluorine atom) may be any of -(OCF₂CF₂CF₂)-, -(OCF(CF₃)CF₂)- and -(OCF₂CF(CF₃))-, and is preferably -(OCF₂CF₂CF₂)-. -(OC₂F₄)- may be any of - (OCF₂CF₂)- and - (OCF(CF₃))-, and is preferably -(OCF₂CF₂)-.

In one embodiment, PFPE is -(OC₃F₆)_{d}-, wherein d is an integer of 1 or more and 200 or less, preferably 5 or more and 200 or less, more preferably 10 or more and 200 or less. Preferably, PFPE is -(OCF₂CF₂CF₂)_{d}-, wherein d is an integer of 1 or more and 200 or less, preferably 5 or more and 200 or less, more preferably 10 or more and 200 or less, or - (OCF(CF₃)CF₂)_{d}-, wherein d is an integer of 1 or more and 200 or less, preferably 5 or more and 200 or less, more preferably 10 or more and 200 or less. More preferably, PFPE is -(OCF₂CF₂CF₂)_{d}-, wherein d is an integer of 1 or more and 200 or less, preferably 5 or more and 200 or less, more preferably 10 or more and 200 or less.

In another embodiment, PFPE is - (OC₄F₈)_{c}-(OC₃F₆)_{d}-(OC₂F₄)ₑ-(OCF₂)_{f}-, wherein c and d are each independently an integer of 0 or more and 30 or less, e and f are each independently 1 or more and 200 or less, preferably 5 or more and 200 or less, more preferably an integer of 10 or more and 200 or less, the sum of c, d, e and f is at least 5 or more, preferably 10 or more, and the occurrence order of the respective repeating units in parentheses with the subscript c, d, e or f is not limited in the formulae. Preferably, PFPE is -(OCF₂CF₂CF₂CF₂)_{c}-(OCF₂CF₂CF₂)_{d}-(OCF₂CF₂)ₑ-(OCF₂)_{f}-.

In one embodiment, PFPE may be -(OC₂F₄)ₑ-(OCF₂)_{f}-, wherein e and f are each independently an integer of 1 or more and 200 or less, preferably 5 or more and 200 or less, more preferably 10 or more and 200 or less, and the occurrence order of the respective repeating units in parentheses with the subscript e or f is not limited in the formulae. The curable composition used in the present invention, which includes the PFPE-containing silane compound, can contribute to formation of a cured product which can keep rubber properties even at a low temperature.

In still another embodiment, PFPE is a group represented by -(R⁶-R⁷)ⱼ-. In the formulae, R⁶ represents OCF₂ or OC₂F₄, preferably OC₂F₄. In the formula, R⁷ represents a group selected from OC₂F₄, OC₃F₆, OC₄F₈, OC₅F₁₀ and OC₆F₁₂, or a combination of two or three groups independently selected from the above groups. Preferably, R⁷ represents a group selected from OC₂F₄, OC₃F₆ and OC₄F₈, a group selected from OC₃F₆, OC₄F₈, OC₅F₁₀ and OC₆F₁₂, or a combination of two or three groups independently selected from the above groups. Such a combination of two or three groups independently selected from OC₂F₄, OC₃F₆ and OC₄F₈ is not limited, and examples thereof include -OC₂F₄OC₃F₆-, - OC₂F₄OC₄F₈-, -OC₃F₆OC₂F₄-, -OC₃F₆OC₃F₆-, -OC₃F₆OC₄F₈-, - OC₄F₈OC₄F₈-, -OC₄F₈OC₃F₆-, -OC₄F₈OC₂F₄-, -OC₂F₄OC₂F₄OC₃F₆-, - OC₂F₄OC₂F₄OC₄F₈-, -OC₂F₄OC₃F₆OC₂F₄-, -OC₂F₄OC₃F₆OC₃F₆-, - OC₂F₄OC₄F₈OC₂F₄-, -OC₃F₆OC₂F₄OC₂F₄-, -OC₃F₆OC₂F₄OC₃F₆-, - OC₃F₆OC₃F₆OC₂F₄-, and -OC₄F₈OC₂F₄OC₂F₄-. Here, j is an integer of 2 or more, preferably 3 or more, more preferably 5 or more, and an integer of 100 or less, preferably 50 or less. In the formulae, OC₂F₄, OC₃F₆, OC₄F₈, OC₅F₁₀ and OC₆F₁₂ may be linear or branched, and is preferably linear. In this embodiment, PFPE is preferably -(OC₂F₄OC₃F₆)ⱼ- or -(OC₂F₄-OC₄F₈)ⱼ-.

The ratio of e to f in PFPE (hereinafter, referred to as "e/f ratio") is 0.1 or more and 10 or less, preferably 0.2 or more and 5 or less, more preferably 0.2 or more and 2 or less, further preferably 0.2 or more and 1.5 or less. The e/f ratio, which falls within the range, can more enhance water-repellency, oil-repellency and chemical resistance (for example, durability to brine, aqueous acidic or basic solution, acetone, oleic acid or hexane) of a cured product obtained from the compound. A lower e/f ratio more enhances water-repellency, oil-repellency and chemical resistance of the cured product. On the other hand, an e/f ratio of 0.1 or more can more enhance stability of the compound. A higher e/f ratio more enhances stability of the compound.

In one embodiment, the e/f ratio is less than 1.0. The e/f ratio is preferably 0.10 or more, more preferably 0.20 or more, further preferably 0.40 or more. The e/f ratio is preferably 0.90 or less, more preferably 0.85 or less, further preferably 0.80 or less. In the present embodiment, the e/f ratio is preferably 0.10 or more and 1.0 or less, 0.20 or more and 0.90 or less, further preferably 0.40 or more and 0.85 or less, particularly preferably 0.40 or more and 0.80 or less.

In one embodiment, the e/f ratio is 1.0 or more. The e/f ratio is preferably 1.1 or more, more preferably 1.2 or more. The e/f ratio is preferably 10.0 or less, more preferably 5.0 or less, further preferably 2.0 or less, particularly preferably 1.5 or less. In the present embodiment, the e/f ratio is preferably 1.0 or more and 10.0 or less, more preferably 1.0 or more and 5.0 or less, further preferably 1.0 or more and 2.0 or less, particularly preferably 1.0 or more and 1.5 or less.

The number average molecular weight of the -PFPE-portion in the PFPE-containing silane compound is not limited, and is, for example, 500 to 30,000, preferably 1,500 to 30,000, more preferably 2,000 to 10,000. The number average molecular weight is defined as a value obtained by ¹⁹F-NMR measurement.

The number average molecular weight of the -PFPE-portion may be in the range from 2000 to 200000, and is preferably in the range from 3000 to 100000. The number average molecular weight is defined as a value obtained by ¹⁹F-NMR measurement.

In one embodiment, the number average molecular weight of the -PFPE- portion may be in the range from 1,000 to 3,000, and is preferably in the range from 2000 to 3000. The compound may have such a number average molecular weight of the -PFPE- portion to thereby allow the curable composition to be low in viscosity and be improved in handleability.

In one embodiment, the number average molecular weight of the -PFPE- portion may be in the range from 5,000 to 10,000, and is preferably in the range from 6000 to 9000. The compound may have such a number average molecular weight of the -PFPE- portion to thereby allow the curable composition to be improved in physical properties such as stretching properties after curing.

In the formulae, R¹³, at each occurrence, each independently represents a hydroxyl group or a hydrolyzable group. The hydrolyzable group is as defined above.

In the formulae, R¹⁴, at each occurrence, each independently represents a hydrogen atom or an alkyl group having 1 to 22 carbon atoms, preferably an alkyl group having 1 to 4 carbon atoms.

In the formulae, R¹¹, at each occurrence, each independently represents a hydrogen atom or a halogen atom. The halogen atom is preferably an iodine atom, a chlorine atom or a fluorine atom, more preferably a fluorine atom.

In the formulae, R¹², at each occurrence, each independently represents a hydrogen atom or a lower alkyl group. The lower alkyl group is preferably an alkyl group having 1 to 20 carbon atoms, more preferably an alkyl group having 1 to 6 carbon atoms, and examples thereof include a methyl group, an ethyl group and a propyl group.

In the formulae, R^{11"}, R^{12"}, R^{13"} and R^{14"} are as defined for R¹¹, R¹², R¹³ and R¹⁴, respectively.

In formula (A), the Si atom bonded to at least one group selected from the group consisting of a hydroxyl group and a hydrolyzable group indicates a Si atom included in (-SiR¹³ₙ₁R¹⁴₃₋ₙ₁) or (-SiR^{13"}ₙ₁R^{14"}₃₋ₙ₁) where n1 is an integer of 1 to 3.

In the formulae, n1 with respect to each (-SiR¹³ₙ₁R¹⁴₃₋ₙ₁) unit or each (-SiR^{13"}ₙ₁R^{14"}₃₋ₙ₁) unit is independently an integer of 0 to 3, preferably 1 to 3, more preferably 3. In the formulae, at least two n1 are each an integer of 1 to 3, namely, there is not any case where all n1 are simultaneously 0. In the formulae, at least one R¹³ and at least one R^{13"} are present. In formula (A), at least one - SiR¹³ₙ₁R¹⁴₃₋ₙ₁ structure (namely, -SiR¹³ portion) where n1 is 1 or more and at least one -SiR^{13"}ₙ₁R^{14"}₃₋ₙ₁ structure (namely, - SiR^{13"} portion) where n1 is 1 or more are present.

Preferably, the Si atom bonded to at least one group selected from the group consisting of a hydroxyl group and a hydrolyzable group is present at both ends of a molecular backbone in formula (A). That is, at least one -SiR¹³ₙ₁R¹⁴₃₋ₙ₁ structure (namely, -SiR¹³ portion) where n1 is 1 or more and at least one -SiR^{13"}ₙ₁R^{14"}₃₋ₙ₁ structure (namely, -SiR^{13"} portion) where n1 is 1 or more are present in formula (A).

In the formulae, X¹ each independently represents a single bond or a 2-10 valent organic group. X¹ is understood to be a linker which links a perfluoropolyether portion (namely, -PFPE- portion) mainly providing water-repellency, surface lubricity, and the like, and a silane portion (namely, group in parentheses with α1) providing a binding ability to the base material, in any compound represented by formula (A). Accordingly, X¹ may be a single bond or any organic group as long as such any compound represented by formula (A) may be stably present. Herein, a left portion and a right portion of the group designated as X¹ are bonded to the group represented by PFPE and the group in parentheses with α1, respectively.

In another embodiment, X¹ may be X^{e}. X^{e} represents a single bond or a 2-10 valent organic group, preferably represents a single bond or a 2-10 valent organic group having at least one selected from the group consisting of - C₆H₄- (namely, -phenylene-, hereinafter, representing a phenylene group), -CO- (carbonyl group), -NR⁴- and -SO₂-. R⁴ each independently represents a hydrogen atom, a phenyl group, or a C₁₋₆ alkyl group (preferably a methyl group), preferably represents a hydrogen atom or a methyl group. Such -C₆H₄-, -CO-, -NR⁴- or -SO₂- is preferably contained in a molecular backbone of the PFPE-containing silane compound.

X^{e} more preferably represents a single bond or a 2-10 valent organic group having at least one selected from the group consisting of -C₆H₄-, -CONR⁴-, -CONR⁴-C₆H₄-, -CO-, -CO-C₆H₄-, -SO₂NR⁴-, -SO₂NR⁴-C₆H₄-, -SO₂-, and -SO₂-C₆H₄-. Such - C₆H₄-, -CONR⁴-, -CONR⁴ -C₆H₄-, -CO-, -CO-C₆H₄-, -SO₂NR⁴-, - SO₂NR⁴-C₆H₄-, -SO₂-, or -SO₂-C₆H₄- is preferably contained in a molecular backbone of the PFPE-containing silane compound.

In the formulae, α1 is an integer of 1 to 9, and may be varied depending on the valence of X¹. In formula (A), α1 corresponds to a value obtained by subtracting 1 from the valence of X¹. In the case where X¹ is a single bond, α1 is 1.

X¹ is preferably a 2-7 valent, more preferably 2-4 valent, further preferably divalent organic group.

In one embodiment, X¹ is a 2-4 valent organic group, and α1 is 1 to 3.

In another embodiment, X¹ is a divalent organic group, and α1 is 1. In such a case, formula (A) is represented by the following formula (A').

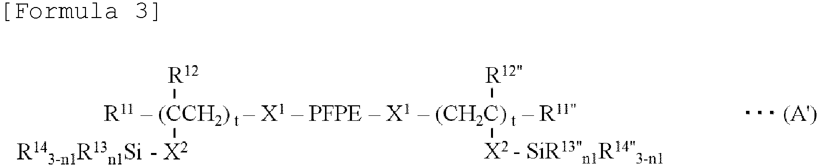

Examples of X¹ are not limited, and include a divalent group represented by the following formula:

-(R³¹)_{p'}-(X^{a})_{q'}-

wherein:
R³¹ represents a single bond, -(CH₂)_{s'}-, or an o-, m-or p-phenylene group, preferably represents -(CH₂)_{s'}-,
s' is an integer of 1 to 20, preferably an integer of 1 to 6, more preferably an integer of 1 to 3, still more preferably 1 or 2,
X^{a} represents, -(X^{b})_{1'}-,
X^{b}, at each occurrence, each independently represents a group selected from the group consisting of -O-, -S-, o-, m- or p-phenylene group, -C(O)O-, -Si(R³³)₂-, -(Si(R³³)₂O)_{m'}-Si(R³³)₂-, -CONR³⁴-, -O-CONR³⁴-, -NR³⁴- and -(CH₂)_{n'}-,
R³³, at each occurrence, each independently represents a phenyl group, a C₁₋₆ alkyl group or a C₁₋₆ alkoxy group, preferably represents a phenyl group or a C₁₋₆ alkyl group, more preferably represents a methyl group,
R³⁴, at each occurrence, each independently represents a hydrogen atom, a phenyl group, or a C₁₋₆ alkyl group (preferably a methyl group),
m', at each occurrence, is each independently an integer of 1 to 100, preferably an integer of 1 to 20,
n', at each occurrence, is each independently an integer of 1 to 20, preferably an integer of 1 to 6, more preferably an integer of 1 to 3,
l' is an integer of 1 to 10, preferably an integer of 1 to 5, more preferably an integer of 1 to 3,
p' is 0 or 1, and
q' is 0 or 1,
provided that at least one of p' and q' is 1, and the occurrence order of the respective repeating units in parentheses with p' or q' is not limited. Here, R³¹ and X^{a} (typically, any hydrogen atom in R³¹ and X^{a}) are each optionally substituted with one or more substituents selected from a fluorine atom, a C₁₋₃ alkyl group and a C₁₋₃ fluoroalkyl group.

In one embodiment, l' is 1.

Preferably, X¹ is -(R³¹)_{p'}-(X^{a})_{q'}-R³²-. R³² represents a single bond, -(CH₂)_{t'}-, or an o-, m- or p-phenylene group, preferably -(CH₂)_{t'}-. Here, t' is an integer of 1 to 20, preferably an integer of 2 to 6, more preferably an integer of 2 to 3. Here, R³² (typically, any hydrogen atom in R³²) is optionally substituted with one or more substituents selected from a fluorine atom, a C₁₋₃ alkyl group and a C₁₋₃ fluoroalkyl group.

Preferably, X¹ may be
a single bond,
a C₁₋₂₀ alkylene group,
-R³¹-X^{c}-R³²-, or
-X^{d}-R³²-
wherein R³¹ and R³² are as defined above. Herein, such an alkylene group is a group having a -(C_{δ}H_{2δ})- structure, and is optionally substituted or unsubstituted and is optionally linear or branched.

Further preferably, X¹ is
-X^{f}-,
a -X^{f}-C₁₋₂₀ alkylene group,
-X^{f}-(CH₂)_{s'}-X^{c}-,
-X^{f}-(CH₂)_{s'}-X^{c}-(CH₂)_{t'}-
-X^{f}-X^{d}-, or
-X^{f}-X^{d}-(CH₂)_{t'}-
wherein s' and t' are as defined above.

In the formulae, X^{f} is an alkylene group having 1 to 6 carbon atoms, preferably 1 to 4 carbon atoms, more preferably 1 to 2 carbon atoms, for example, a methylene group. Any hydrogen atom in X^{f} is optionally substituted with one or more substituents selected from a fluorine atom, a C₁₋₃ alkyl group and a C₁₋₃ fluoroalkyl group, and is preferably substituted. X^{f} may be linear or branched, and is preferably linear.

More preferably, X¹ is
a single bond,
a C₁₋₂₀ alkylene group,
-(CH₂)_{s'}-X^{c}-,
-(CH₂)_{s'}-X^{c}-(CH₂)_{t'}-
-X^{d}-, or
-X^{d}-(CH₂)_{t'}-
wherein s' and t' are as defined above.

In the formulae, X^{c} represents
-O-,
-S-,
-C(O)O-,
-CONR³⁴-,
-O-CONR³⁴-,
-Si(R³³)₂-,
-(Si(R³³)₂O)_{m'}-Si(R³³)₂-,
-O-(CH₂)_{u'}-(Si(R³³)₂O)_{m'}-Si(R³³)₂-,
-O-(CH₂)_{u'-}Si(R³³)₂-O-Si(R³³)₂-CH₂CH₂-Si(R³³)₂-O-Si(R³³)₂-,
-O-(CH₂)_{u'}-Si(OCH₃)₂OSi(OCH₃)₂-,
-CONR³⁴-(CH₂)_{u'}-(Si(R³³)₂O)_{m'}-Si(R³³)₂-,
-CONR³⁴-(CH₂)_{u'}-N(R³⁴)-, or
-CONR³⁴-(o-, m- or p-phenylene) -Si(R³³)₂-
wherein R³³, R³⁴ and m' are as defined above, and
   u' is an integer of 1 to 20, preferably an integer of 2 to 6, more preferably an integer of 2 to 3. X^{c} is preferably -O-.

In the formulae, X^{d} represents
-S-,
-C(O)O-,
-CONR³⁴-,
-CONR³⁴-(CH₂)_{u'}-(Si(R³³)₂O)_{m'}-Si(R³³)₂-,
-CONR³⁴-(CH₂)_{u'}-N(R³⁴)-, or
-CONR³⁴-(o-, m- or p-phenylene) -Si(R³³)₂-
wherein each symbol is as defined above.

Particularly preferably, X¹ is a group represented by
-X¹-,
a -X^{f}-C₁₋₂₀ alkylene group,
-X^{f}-(CH₂)_{s'}-X^{c}-,
-X^{f}-(CH₂)_{s'}-X^{c}-(CH₂)_{t'}-
-X^{f}-X^{d}-, or
-X^{f}-X^{d}-(CH₂)_{t'}-
wherein X^{f}, s' and t' are as defined above;
   X^{c} represents -O-, or -CONR³⁴-,
   X^{d} represents -CONR³⁴-, and
   R³⁴, at each occurrence, each independently represents a hydrogen atom, a phenyl group, or a C₁₋₆ alkyl group (preferably a methyl group).

In one embodiment, X¹ is a group represented by
-X^{f}-(CH₂)_{s'}-X^{c}-,
-X^{f}-(CH₂)_{s'}-X^{c}-(CH₂)ₜ,-
-X^{f}-X^{d}-, or
-X^{f}-X^{d}-(CH₂)_{t'}-
wherein X^{f}, s' and t' are as defined above;
   X^{c} represents -CONR³⁴-,
   X^{d} represents -CONR³⁴-, and
   R³⁴, at each occurrence, each independently represents a hydrogen atom, a phenyl group or a C₁₋₆ alkyl group (preferably a methyl group).

In one embodiment, X¹ may be,
a single bond,
a C₁₋₂₀ alkylene group,
-(CH₂)_{s'}-X^{c}-(CH₂)_{t'}-, or
-X^{d}-(CH₂)_{t'}-
wherein each symbol is as defined above.

Preferably, X¹ is
a single bond,
a C₁₋₂₀ alkylene group,
-(CH₂)_{s'}-O-(CH₂)_{t'}-,
-(CH₂)_{s'}-(Si(R³³)₂O)_{m'}-Si(R³³)₂-(CH₂)_{t'}-,
-(CH₂)_{s'}-O-(CH₂)_{u'}-(Si(R³³)₂O)_{m'}-Si(R³³)₂-(CH₂)_{t'}-, or
-(CH₂)_{s'}-O-(CH₂)_{t'}-Si(R³³)₂-(CH₂)_{u'}-Si(R³³)₂-(CᵥH₂ᵥ)-
wherein R³³, m', s', t' and u' are as defined above, and v is an integer of 1 to 20, preferably an integer of 2 to 6, more preferably an integer of 2 to 3.

In the formulae, -(CᵥH₂ᵥ)- is optionally linear or branched, and may be, for example, -CH₂-, -CH₂CH₂-, - CH₂CH₂CH₂-, -CH(CH₃)- or -CH(CH₃)CH₂-.

The X¹ group is optionally substituted with one or more substituents selected from a fluorine atom, a C₁₋₃ alkyl group and a C₁₋₃ fluoroalkyl group (preferably C₁₋₃perfluoroalkyl group).

In one embodiment, the X¹ group may be other than a - O-C₁₋₆ alkylene group.

In another embodiment, examples of the X¹ group include the following groups: 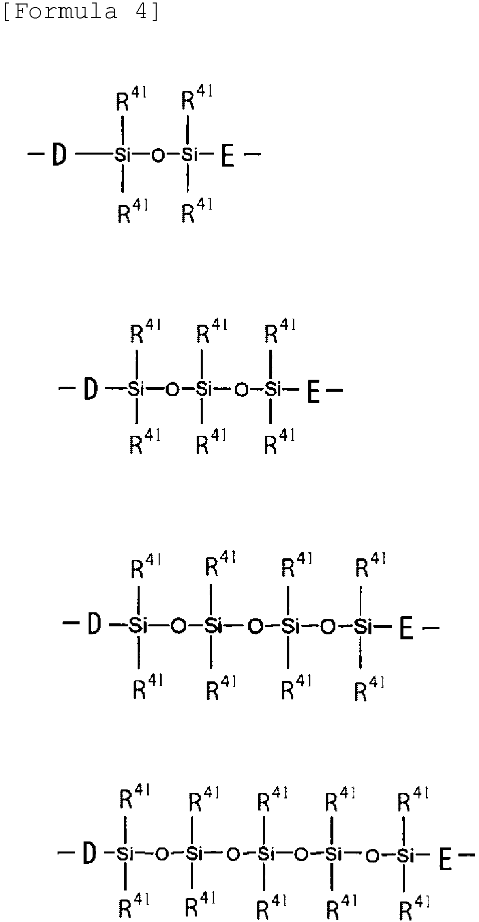 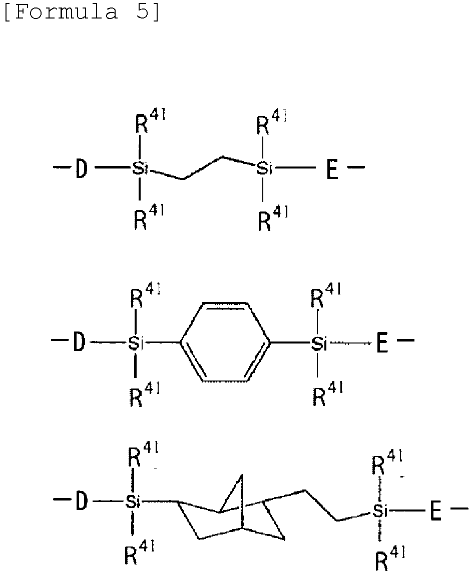
wherein R⁴¹ each independently represents a hydrogen atom, a phenyl group, an alkyl group having 1 to 6 carbon atoms, or a C₁₋₆ alkoxy group, preferably a methyl group;
   D is a group selected from
-CH₂O(CH₂)₂-,
-CH₂O(CH₂)₃-,
-CF₂O(CH₂)₃-,
-(CH₂)₂-,
-(CH₂)₃-,
-(CH₂)₄-,
-CONH-(CH₂)₃-,
-CON(CH₃)-(CH₂)₃-,
-CON(Ph)-(CH₂)₃-, wherein Ph means phenyl; and 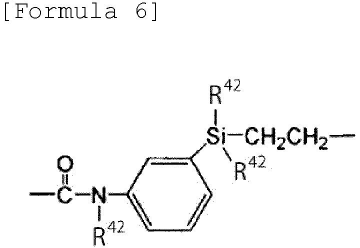
wherein R⁴² each independently represents a hydrogen atom, a C₁₋₆ alkyl group or a C₁₋₆ alkoxy group, preferably a methyl group or a methoxy group, more preferably a methyl group;
   E is -(CH₂)ₙₑ- (ne is an integer of 2 to 6),
   D is bonded to PFPE as a molecular backbone, and E is bonded to an opposite group to PFPE.

Specific examples of X¹ include:
a single bond,
-CH₂OCH₂-,
-CH₂O(CH₂)₂-,
-CH₂O(CH₂)₃-,
-CH₂O(CH₂)₆-,
-CF₂-CH₂-O-CH₂-,
-CF₂-CH₂-O-(CH₂)₂-,
-CF₂-CH₂-O-(CH₂)₃-,
-CF₂-CH₂-O-(CH₂)₆-,
-CH₂O(CH₂)₃Si(CH₃)₂OSi(CH₃)₂(CH₂)₂-,
-CH₂O(CH₂)₃Si(CH₃)₂OSi(CH₃)₂OSi(CH₃)₂(CH₂)₂-,
-CH₂O(CH₂)₃Si(CH₃)₂O(Si(CH₃)₂O)₂Si(CH₃)₂(CH₂)₂-,
-CH₂O(CH₂)₃Si(CH₃)₂O(Si(CH₃)₂O)₃Si(CH₃)₂(CH₂)₂-,
-CH₂O(CH₂)₃Si(CH₃)₂O(Si(CH₃)₂O)₁₀Si(CH₃)₂(CH₂)₂-,
-CH₂O(CH₂)₃Si(CH₃)₂O(Si(CH₃)₂O)₂₀Si(CH₃)₂(CH₂)₂-,
-CH₂OCF₂CHFOCF₂-,
-CH₂OCF₂CHFOCF₂CF₂-,
-CH₂OCF₂CHFOCF₂CF₂CF₂-,
-CH₂OCH₂CF₂CF₂OCF₂-,
-CH₂OCH₂CF₂CF₂OCF₂CF₂-,
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF₂CF₂-,
-CH₂OCH₂CF₂CF₂OCF(CF₃)CF₂OCF₂CF₂CF₂-,
-CH₂OCH₂CHFCF₂OCF₂-,
-CH₂OCH₂CHFCF₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-,
-CH₂OCF₂CHFOCF₂CF₂CF₂-C(O)NH-CH₂-,
CH₂OCH₂(CH₂)₇CH₂Si(OCH₃)₂OSi(OCH₃)₂(CH₂)₂Si(OCH₃)₂OSi(OCH₃)₂(CH₂ )₂-,
-CH₂OCH₂CH₂CH₂Si(OCH₃)₂OSi(OCH₃)₂(CH₂)₃-,
-CH₂OCH₂CH₂CH₂Si(OCH₂CH₃)₂OSi(OCH₂CH₃)₂(CH₂)₃-,
-CH₂OCH₂CH₂CH₂Si(OCH₃)₂OSi(OCH₃)₂(CH₂)₂-,
-CH₂OCH₂CH₂CH₂Si(OCH₂CH₃)₂OSi(OCH₂CH₃)₂(CH₂)₂-,
-(CH₂)₂-Si(CH₃)₂-(CH₂)₂-,
-CH₂-,
-(CH₂)₂-,
-(CH₂)₃-,
-(CH₂)₄-,
-(CH₂)₅-,
-(CH₂)₆-,
-CF₂-,
-(CF₂)₂-,
-CF₂-CH₂-,
-CF₂-(CH₂)₂-,
-CF₂-(CH₂)₃-,
-CF₂-(CH₂)₄-,
-CF₂-(CH₂)₅-,
-CF₂-(CH₂)₆-,
-CO-
-CONH-
-CONH-CH₂-,
-CONH-(CH₂)₂-,
-CONH-(CH₂)₃-,
-CONH-(CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CON(CH₃)-(CH₂)₃-,
-CON(Ph)-(CH₂)₃-, wherein Ph means phenyl,
-CON(CH₃)-(CH₂)₆-,
-CON(Ph)-(CH₂)₆-, wherein Ph means phenyl,
-CF₂-CON(CH₃)-(CH₂)₃-,
-CF₂-CON(Ph)-(CH₂)₃-, wherein Ph means phenyl,
-CF₂-CON(CH₃)-(CH₂)₆-,
-CF₂-CON(Ph)-(CH₂)₆-, wherein Ph means phenyl,
-CONH-(CH₂)₂NH(CH₂)₃-,
-CONH-(CH₂)₆NH(CH₂)₃-,
-CH₂O-CONH-(CH₂)₃-,
-CH₂O-CONH-(CH₂)₆-,
-S-(CH₂)₃-,
-(CH₂)₂S(CH₂)₃-,
-CONH-(CH₂)₃Si(CH₃)₂OSi(CH₃)₂(CH₂)₂-,
-CONH-(CH₂)₃Si(CH₃)₂OSi(CH₃)₂OSi(CH₃)₂(CH₂)₂-,
-CONH-(CH₂)₃Si(CH₃)₂O(Si(CH₃)₂O)₂Si(CH₃)₂(CH₂)₂-,
-CONH-(CH₂)₃Si(CH₃)₂O(Si(CH₃)₂O)₃Si(CH₃)₂(CH₂)₂-,
-CONH-(CH₂)₃Si(CH₃)₂O(Si(CH₃)₂O)₁₀Si(CH₃)₂(CH₂)₂-,
-CONH-(CH₂)₃Si(CH₃)₂O(Si(CH₃)₂O)₂₀Si(CH₃)₂(CH₂)₂-,
-C(O)O-(CH₂)₃-,
-C(O)O-(CH₂)₆-,
-CH₂-O-(CH₂)₃-Si(CH₃)₂-(CH₂)₂-Si(CH₃)₂-(CH₂)₂-,
-CH₂-O-(CH₂)₃-Si(CH₃)₂-(CH₂)₂-Si(CH₃)₂-CH(CH₃)-,
-CH₂-O-(CH₂)₃-Si(CH₃)₂-(CH₂)₂-Si(CH₃)₂-(CH₂)₃-,
-CH₂-O-(CH₂)₃-Si(CH₃)₂-(CH₂)₂-Si(CH₃)₂-CH(CH₃)-CH₂-,
-OCH₂-,
-O(CH₂)₃-, and
-OCFHCF₂-

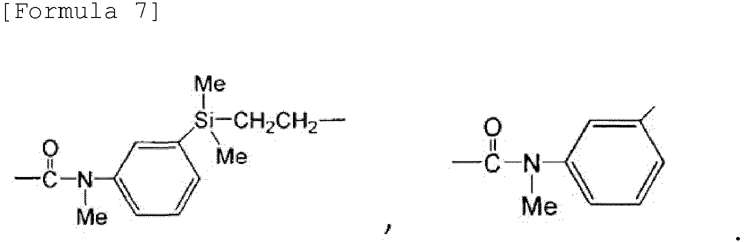

In particular, X¹ is preferably
-CH₂OCH₂-,
-CH₂O(CH₂)₂-,
-CH₂O(CH₂)₃-,
-CH₂O(CH₂)₆-,
-CF₂-CH₂-O-CH₂-,
-CF₂-CH₂-O-(CH₂)₂-,
-CF₂-CH₂-O-(CH₂)₃-,
-CF₂-CH₂-O-(CH₂)₆-,
-CH₂OCF₂CHFOCF₂-,
-CH₂OCF₂CHFOCF₂CF₂-,
-CH₂OCF₂CHFOCF₂CF₂CF₂-,
-CH₂OCH₂CF₂CF₂OCF₂-,
-CH₂OCH₂CF₂CF₂OCF₂CF₂-,
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF₂CF₂-,
-CH₂OCH₂CF₂CF₂OCF(CF₃)CF₂OCF₂CF₂CF₂-,
-CH₂OCH₂CHFCF₂OCF₂-,
-CH₂OCH₂CH FC F₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-,
-CH₂OCF₂CHFOCF₂CF₂CF₂-C(O)NH-CH₂-,
-CH₂-,
-(CH₂)₂-,
-(CH₂)₃-,
- (CH₂)₄-,
- (CH₂)₅-,
- (CH₂)₆-,
-CF₂-,
- (CF₂)₂-,
-CF₂-CH₂-,
-CF₂-(CH₂)₂-,
-CF₂-(CH₂)₃-,
-CF₂-(CH₂)₄-,
-CF₂-(CH₂)₅-,
-CF₂-(CH₂)₆-,
-CONH-,
-CONH-CH₂-,
-CONH-(CH₂)₂-,
-CONH-(CH₂)₃-,
-CONH-(CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CON(CH₃)-(CH₂)₃-,
-CON(Ph)-(CH₂)₃-, wherein Ph means phenyl,
-CON(CH₃)-(CH₂)₆-,
-CON(Ph)-(CH₂)₆-, wherein Ph means phenyl,
-CF₂-CON(CH₃)-(CH₂)₃-,
-CF₂-CON(Ph)-(CH₂)₃-, wherein Ph means phenyl,
-CF₂-CON(CH₃)-(CH₂)₆-,
-CF₂-CON(Ph)-(CH₂)₆-, wherein Ph means phenyl,
-CONH-(CH₂)₂NH(CH₂)₃-,
-CONH-(CH₂)₆NH(CH₂)₃-,
-CH₂O-CONH-(CH₂)₃-,
-CH₂O-CONH-(CH₂)₆-,
-OCH₂-,
-O(CH₂)₃-, or
-OCFHCF₂-.

In particular, X¹ is more preferably
-CH₂OCF₂CHFOCF₂CF₂CF₂-C(O)NH-CH₂-,
-CONH-,
-CONH-CH₂-,
-CONH-(CH₂)₂-,
-CONH-(CH₂)₃-,
-CONH-(CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CON(CH₃)-(CH₂)₃-,
-CON (Ph)-(CH₂)₃-, wherein Ph means phenyl,
-CON(CH₃)-(CH₂)₆-,
-CON(Ph)-(CH₂)₆-, wherein Ph means phenyl,
-CF₂-CON(CH₃)-(CH₂)₃-,
-CF₂-CON(Ph)-(CH₂)₃-, wherein Ph means phenyl,
-CF₂-CON(CH₃)-(CH₂)₆-,
-CF₂-CON(Ph)-(CH₂)₆-, wherein Ph means phenyl,
-CONH-(CH₂)₂NH(CH₂)₃-,
-CONH-(CH₂)₆NH(CH₂)₃-.

In a more preferable embodiment, X¹ represents X^{e'}. X^{e'} is a single bond, an alkylene group having 1 to 6 carbon atoms, -R⁵¹-C₆H₄-R⁵²-, -R⁵¹-CONR⁴-R⁵²-, -R⁵¹-CONR⁴-C₆H₄-R⁵²-, -R⁵¹-CO-R⁵²-, -R⁵¹-CO-C₆H₄-R⁵²-, -R⁵¹-SO₂NR⁴-R⁵²-, -R⁵¹-SO₂NR⁴-C₆H₄-R⁵²-, -R⁵¹-SO₂-R⁵²-, or-R⁵¹-SO₂-C₆H₄-R⁵²-. R⁵¹ and R³² each independently represent a single bond or an alkylene group having 1 to 6 carbon atoms, preferably a single bond or an alkylene group having 1 to 3 carbon atoms. R⁴ is as defined above. The alkylene group is substituted or unsubstituted, preferably unsubstituted. Examples of the substituent of the alkylene group may include a halogen atom, preferably a fluorine atom. The alkylene group is linear or branched, preferably linear.

In a further preferable embodiment, X^{e'} may be
a single bond,
-X^{f}-,
an alkylene group having 1 to 6 carbon atoms, preferably 1 to 3 carbon atoms,
a -X^{f}-C₁₋₆ alkylene group, preferably a -X^{f}-C₁₋₃ alkylene group, more preferably
a -X^{f}-C₁₋₂ alkylene group,
-C₆H₄-R^{52'}-,
-CONR^{4'}-R^{52'}-,
-CONR^{4'}-C₆H₄-R^{52'}-,
-X^{f}-CONR^{4'}-R^{52'}-,
-X^{f}-CONR⁴'-C₆H₄-R^{52'}-,
-CO-R^{52'}-,
-CO-C₆H₄-R^{52'}-,
-SO₂NR^{4'}-R^{52'}-,
-SO₂NR^{4'}-C₆H₄-R^{52'}-,
-SO₂-R^{52'}-,
-SO₂-C₆H₄-R^{52'}-,
-R^{51'}-C₆H₄-,
-R^{51'}-CONR^{4'}-,
-R^{51'}-CONR^{4'}-C₆H₄-,
-R^{51'}-CO-,
-R^{51'}-CO-C₆H₄-,
-R^{51'}-SO₂NR^{4'}-,
-R^{51'}-SO₂NR^{4'}-C₆H₄-,
-R^{51'}-SO₂-,
-R^{51'}-SO₂-C₆H₄-,
-C₆H₄-
-CONR^{4'}-,
-CONR^{4'}-C₆H₄-,
-X^{f}-CONR^{4'}-,
-X^{f}-CONR^{4'}-C₆H₄-,
-CO-,
-CO-C₆H₄-,
-SO₂NR^{4'}-,
-SO₂NR^{4'}-C₆H₄-
-SO₂-, or
-SO₂-C₆H₄-
wherein R^{51'} and R^{52'} each independently represent a linear alkylene group having 1 to 6 carbon atoms, preferably 1 to 3 carbon atoms, the alkylene group is substituted or unsubstituted, as described above, and examples of the substituent of the alkylene group may include a halogen atom, preferably a fluorine atom, and
R^{4'} is a hydrogen atom or a methyl group.

In particular, X^{e'} may be preferably
-X^{f}-,
an alkylene group having 1 to 6 carbon atoms, preferably 1 to 3 carbon atoms, or
a -X^{f}-C₁₋₆ alkylene group, preferably a -X^{f}-C₁₋₃ alkylene group, more preferably
a -X^{f}-C₁₋₂ alkylene group,
-CONR^{4'}-R^{52'}-,
-CONR^{4'}-C₆H₄-R^{52'}-,
-X^{f}-CONR^{4'}-R^{52'}-,
-X^{f}-CONR^{4'}-C₆H₄-R^{52'}-,
-R^{51'}-CONR^{4'}-,
-R^{51'}-CONR^{4'}-C₆H₄-,
-CONR^{4'}-,
-CONR^{4'}-C₆H₄-,
-X¹-CONR^{4'}-,
-X^{f}-CONR^{4'}-C₆H₄-,
-R^{51'}-CONR^{4'}-, or
-R^{51'}-CONR^{4'}-C₆H₄-. In the formulae, X^{f}, R^{4'}, R^{51'} and R^{52'} each are as defined above.

In particular, X^{e'} may be more preferably
-CONR^{4'}-R^{52'}-,
-CONR^{4'}-C₆H₄-R^{52'}-,
-X^{f}-CONR^{4'}-R^{52'}-,
-X^{f}-CONR^{4'}-C₆H₄-R^{52'}-,
-R^{51'}-CONR^{4'}-,
-R^{51'}-CONR^{4'}-C₆H₄-,
-CONR^{4'}-,
-CONR^{4'}-C₆H₄-,
-X^{f}-CONR^{4'}-, or
-X^{f}-CONR^{4'}-C₆H₄-.

In the present embodiment, specific examples of X^{e'} include
a single bond,
a perfluoroalkylene group having 1 to 6 carbon atoms (for example, -CF₂-, -(CF₂)₂-),
an alkylene group having 1 to 6 carbon atoms,
-CF₂-C₁₋₆ alkylene group,
-CONH-,
-CONH-CH₂-,
-CONH-(CH₂)₂-
-CONH-(CH₂)₃-,
-CF₂-CONH-,
-CF₂CONHCH₂-,
-CF₂CONH(CH₂)₂-,
-CF₂CONH(CH₂)₃-,
-CON(CH₃)-,
-CON(CH₃)-CH₂-,
-CON(CH₃)-(CH₂)₂-,
-CON(CH₃)-(CH₂)₃-,
-CF₂-CON(CH₃)-,
-CF₂-CON(CH₃)CH₂-,
-CF₂-CON(CH₃)-(CH₂)₂-,
-CF₂-CON(CH₃)-(CH₂)₃-,
-CH₂-CONH-,
-CH₂-CONH-CH₂-,
-CH₂-CONH-(CH₂)₂-,
-CH₂-CONH-(CH₂)₃-,
-CF₂-CH₂-CONH-,
-CF₂-CH₂-CONH-CH₂-,
-CF₂-CH₂-CONH-(CH₂)₂-,
-CF₂-CH₂-CONH-(CH₂)₃-,
-CONH-C₆H₄-,
-CON(CH₃)-C₆H₄-,
-CH₂-CON(CH₃)-CH₂-,
-CH₂-CON(CH₃)-(CH₂)₂-,
-CH₂-CON(CH₃)-(CH₂)₃-,
-CON(CH₃)-C₆H₄-,
-CF₂-CONH-C₆H₄-,
-CF₂-CON(CH₃)-C₆H₄-,
-CF₂-CH₂-CON(CH₃)-CH₂-,
-CF₂-CH₂-CON(CH₃)-(CH₂)₂-,
-CF₂-CH₂-CON(CH₃)-(CH₂)₃-,
-CF₂-CON(CH₃)-C₆H₄-,
-CO-,
-CO-C₆H₄-,
-C₆H₄-,
-SO₂NH-,
-SO₂NH-CH₂-,
-SO₂NH-(CH₂)₂-,
-SO₂NH-(CH₂)₃-,
-SO₂NH-C₆H₄-,
-SO₂N(CH₃)-,
-SO₂N(CH₃)-CH₂-,
-SO₂N(CH₃)-(CH₂)₂-,
-SO₂N(CH₃)-(CH₂)₃-,
-SO₂N(CH₃)-C₆H₄-,
-SO₂-,
-SO₂-CH₂-,
-SO₂-(CH₂)₂-,
-SO₂-(CH₂)₃-, or
-SO₂-C₆H₄-.

In the above list, examples of preferable X^{e'} include an alkylene group having 1 to 6 carbon atoms,
a perfluoroalkylene group having 1 to 6 carbon atoms (for example, -CF₂- and -(CF₂)₂-),
a -CF₂-C₁₋₆ alkylene group,
-CONH-,
-CONH-CH₂-,
-CONH-(CH₂)₂-,
-CONH-(CH₂)₃-,
-CF₂CONH-,
-CF₂CONHCH₂-,
-CF₂CONH(CH₂)₂-,
-CF₂CONH(CH₂)₃-,
-CON(CH₃)-,
-CON(CH₃)-CH₂-,
-CON(CH₃)-(CH₂)₂-,
-CON(CH₃)-(CH₂)₃-,
-CF₂-CON(CH₃)-,
-CF₂-CON(CH₃)CH₂-,
-CF₂-CON(CH₃)-(CH₂)₂-,
-CF₂-CON(CH₃)-(CH₂)₃-,
-CH₂-CONH-,
-CH₂-CONH-CH₂-,
-CH₂-CONH-(CH₂)₂-,
-CH₂-CONH-(CH₂)₃-,
-CF₂-CH₂-CONH-,
-CF₂-CH₂-CONH-CH₂-,
-CF₂-CH₂-CONH-(CH₂)₂-,
-CF₂-CH₂-CONH-(CH₂)₃-,
-CONH-C₆H₄-,
-CON(CH₃)-C₆H₄-,
-CH₂-CON(CH₃)-CH₂-,
-CH₂-CON(CH₃)-(CH₂)₂-,
-CH₂-CON(CH₃)-(CH₂)₃-,
-CON(CH₃)-C₆H₄-
-CF₂-CONH-C₆H₄-,
-CF₂-CON(CH₃)-C₆H₄-,
-CF₂-CH₂-CON(CH₃)-CH₂-,
-CF₂-CH₂-CON(CH₃)-(CH₂)₂-,
-CF₂-CH₂-CON(CH₃)-(CH₂)₃-, and
-CF₂-CON(CH₃)-C₆H₄.

In the above list, examples of more preferable X^{e'} include
-CONH-,
-CONH-CH₂-,
-CONH-(CH₂)₂-,
-CONH-(CH₂)₃-,
-CF₂CONH-,
-CF₂CONHCH₂-,
-CF₂CONH(CH₂)₂-,
-CF₂CONH(CH₂)₃-,
-CON(CH₃)-,
-CON(CH₃)-CH₂-,
-CON(CH₃)-(CH₂)₂-,
-CON(CH₃)-(CH₂)₃-,
-CF₂-CON(CH₃)-,
-CF₂-CON(CH₃)CH₂-,
-CF₂-CON(CH₃)-(CH₂)₂-,
-CF₂-CON(CH₃)-(CH₂)₃-,
-CH₂-CONH-,
-CH₂-CONH-CH₂-,
-CH₂-CONH-(CH₂)₂-,
-CH₂-CONH-(CH₂)₃-,
-CF₂-CH₂-CONH-,
-CF₂-CH₂-CONH-CH₂-,
-CF₂-CH₂-CONH-(CH₂)₂-,
-CF₂-CH₂-CONH-(CH₂)₃-,
-CONH-C₆H₄-,
-CON(CH₃)-C₆H₄-,
-CH₂-CON(CH₃)-CH₂-,
-CH₂-CON(CH₃)-(CH₂)₂-,
-CH₂-CON(CH₃)-(CH₂)₃-,
-CON(CH₃)-C₆H₄-
-CF₂-CONH-C₆H₄-,
-CF₂-CON(CH₃)-C₆H₄-,
-CF₂-CH₂-CON(CH₃)-CH₂-,
-CF₂-CH₂-CON(CH₃)-(CH₂)₂-,
-CF₂-CH₂-CON(CH₃)-(CH₂)₃-, or
-CF₂-CON(CH₃)-C₆H₄-.

In one embodiment, X^{e'} is a single bond. In the present embodiment, PFPE and a group having a binding ability to the base material (namely, group in parentheses with α1 in (A)) are directly bonded.

In still another embodiment, X¹ is a group represented by formula: -(R¹⁶)ₓ-(CFR¹⁷)_{y}-(CH₂)_{z}-. In the formula, x, y and z are each independently an integer of 0 to 10, the sum of x, y and z is 1 or more, and the occurrence order of the respective repeating units in parentheses is not limited in the formula.

In the formula, R¹⁶, at each occurrence, each independently represents an oxygen atom, phenylene, carbazolylene, -NR¹⁸-, wherein R¹⁸ represents a hydrogen atom or an organic group, or a divalent organic group. Preferably, R¹⁶ is an oxygen atom or a divalent polar group.

The "divalent polar group" is not limited, and examples thereof include -C(O)-, -C(=NR¹⁹)-, and -C(O)NR¹⁹-, wherein R¹⁹ represents a hydrogen atom or a lower alkyl group. The "lower alkyl group" is, for example, an alkyl group having 1 to 6 carbon atoms, such as a methyl group, an ethyl group, or a n-propyl group, and such a group is optionally substituted with one or more fluorine atoms.

In the formula, R¹⁷, at each occurrence, is each independently a hydrogen atom, a fluorine atom or a lower fluoroalkyl group, preferably a fluorine atom. The "lower fluoroalkyl group" is, for example, a fluoroalkyl group having 1 to 6 carbon atoms, preferably 1 to 3 carbon atoms, preferably a perfluoroalkyl group having 1 to 3 carbon atoms, more preferably a trifluoromethyl group or a pentafluoroethyl group, further preferably a trifluoromethyl group.

In this embodiment, X¹ is preferably a group represented by formula: -(O)ₓ-(CF₂)_{y}-(CH₂)_{z}-, wherein x, y and z are as defined above, and the occurrence order of the respective repeating units in parentheses is not limited in the formula.

Examples of the group represented by formula: -(O)ₓ-(CF₂)_{y}-(CH₂)_{z}- include any group represented by -(O)_{x'}-(CH₂)_{z"}-O-[(CH₂)_{z‴}-O-]_{z‴}, and -(O)_{x'}-(CF₂)_{y"}-(CH₂)_{z"}-O-[(CH₂)_{z‴}-O-]_{zʺʺ}, wherein x' is 0 or 1, y", z" and z‴ are each independently an integer of 1 to 10, and z"" is 0 or 1. Herein, a left end of such a group is bonded to PFPE.

In another preferable embodiment, X¹ is -O-CFR²⁰-(CF₂)_{e'}-.

R²⁰ each independently represents a fluorine atom or a lower fluoroalkyl group. The lower fluoroalkyl group is, for example, a fluoroalkyl group having 1 to 3 carbon atoms, preferably a perfluoroalkyl group having 1 to 3 carbon atoms, more preferably a trifluoromethyl group or a pentafluoroethyl group, further preferably a trifluoromethyl group.

e' is each independently 0 or 1.

In one specific example, R²⁰ is a fluorine atom and e' is 1.

In still another embodiment, examples of the X¹ group include the following groups: 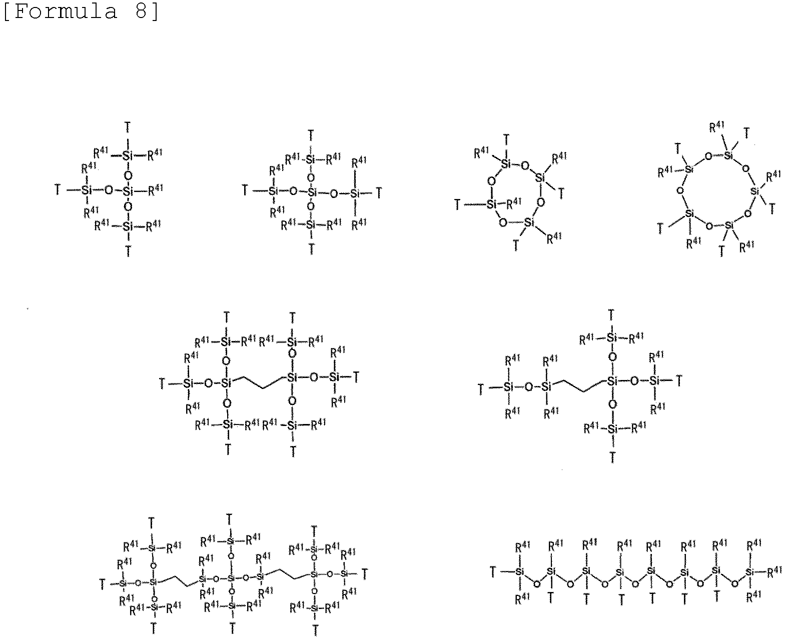 wherein
R⁴¹ each independently represents a hydrogen atom, a phenyl group, an alkyl group having 1 to 6 carbon atoms, or a C₁₋₆ alkoxy group, preferably a methyl group;
any number of the Ts in each X¹ group is the following group bonded to PFPE as a molecular backbone:
   -CH₂O(CH₂)₂-,
   -CH₂O(CH₂)₃-,
   -CF₂O(CH₂)₃-,
   -CH₂-,
   -(CH₂)₂-,
   -(CH₂)₃-,
   -(CH₂)₄-,
   -CONH-(CH₂)₃-,
   -CON(CH₃)-(CH₂)₃-,
   -CON(Ph)-(CH₂)₃-, wherein Ph means phenyl, or 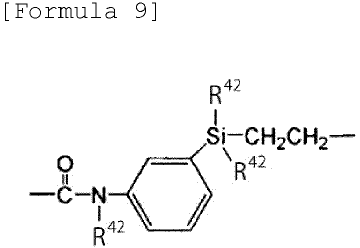
   wherein R⁴² each independently represents a hydrogen atom, a C₁₋₆ alkyl group or a C₁₋₆ alkoxy group, preferably a methyl group or a methoxy group, more preferably a methyl group, some other of the Ts is -(CH₂)_{n"}- (n" is an integer of 2 to 6) bonded to an opposite group to PFPE as a molecular backbone, and the remaining T, if present, may be independently a methyl group, a phenyl group, a C₁₋₆ alkoxy group, or a radical scavenging group or an UV absorbing group. Also in the embodiment, a left portion and a right portion of the group designated as X¹ are bonded to the group represented by PFPE and the group in parentheses with α1, respectively.

The radical scavenging group is not limited as long as it may scavenge a radial generated by light irradiation, and examples thereof include a residue of benzophenones, benzotriazoles, benzoates, phenyl salicylates, crotonic acids, malonates, organoacrylates, hindered amines, hindered phenols, or triazines.

The UV absorbing group is not limited as long as it can absorb ultraviolet light, and examples thereof include a residue of benzotriazoles, hydroxybenzophenones, esters of substituted and unsubstituted benzoic acid or salicylic acid compounds, acrylates or alkoxy cinnamates, oxamides, oxanilides, benzoxazinones, and benzoxazoles.

In a preferable embodiment, examples of a preferable radical scavenging group or an UV absorbing group include

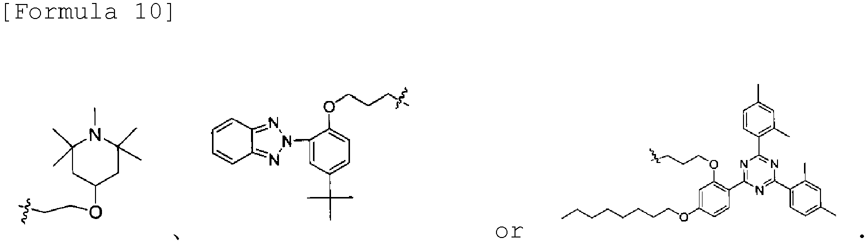

In this embodiment, X¹ (and, the following X³, X⁵ and X⁷) may be a 3-10 valent organic group.

In the formulae, X², at each occurrence, each independently represents a single bond or a divalent organic group. X² is preferably an alkylene group having 1 to 20 carbon atoms, more preferably -(CH₂)ᵤ-, wherein u is an integer of 0 to 2.

In the formulae, t is each independently an integer of 1 to 10. In a preferable embodiment, t is an integer of 1 to 6. In another preferable embodiment, t is an integer of 2 to 10, preferably an integer of 2 to 6.

A preferable compound represented by formula (A) is a compound represented by the following formula (A'): 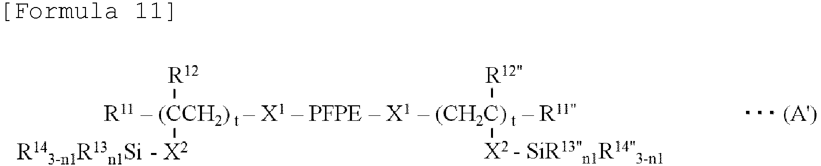 wherein:
PFPE, at each occurrence, is each independently a group represented by formula:

   -(OC₆F₁₂)ₐ-(OC₅F₁₀)_{b}-(OC₄F₈)_{c}-(OC₃F₆)_{d}-(OC₂F₄)ₑ-(OCF₂)_{f}-

   wherein a, b, c, d, e and f are each independently an integer of 0 or more and 200 or less, the sum of a, b, c, d, e and f is at least 1, and the occurrence order of the respective repeating units in parentheses with a, b, c, d, e or f is not limited in the formula;
R¹³, at each occurrence, each independently represents a hydroxyl group or a hydrolyzable group;
R¹⁴, at each occurrence, each independently represents a hydrogen atom or an alkyl group having 1 to 22 carbon atoms;
R¹¹, at each occurrence, each independently represents a hydrogen atom or a halogen atom;
R¹², at each occurrence, each independently represents a hydrogen atom or a lower alkyl group;
R^{11"}, R^{12"}, R^{13"}, R^{14"} are as defined for R¹¹, R¹², R¹³, R¹⁴, respectively;
n1 is an integer of 1 to 3, preferably 3;
X¹, at each occurrence, is each independently -O-CFR²⁰-(CF₂)_{e'}-:
R²⁰, at each occurrence, is each independently a fluorine atom or a lower fluoroalkyl group;
e', at each occurrence, is each independently 0 or 1;
X² is -(CH₂)ᵤ-;
u, at each occurrence, is each independently an integer of 0 to 2; and
t, at each occurrence, is each independently an integer of 2 to 10.

Such any compound represented by formula (A) may be obtained by, for example, introducing iodine into an end of a perfluoropolyether derivative corresponding to a -PFPE-portion, as a raw material, and reacting a vinyl monomer corresponding to -CH₂CR¹²(X²-SiR¹³ₙ₁R¹⁴₃₋ₙ₁)-.
Formula (B):
[Formula 12]

(R¹⁴₃₋ₙ₁¹³ₙ₁Si)_{β1}-X³-PFPE-X³-(SiR^{13"}ₙ₁R^{14"}₃₋ₙ₁)_{β1} ··· (B)

In formula (B), PFPE, R¹³, R^{13"}, R¹⁴, R^{14"} and n1 are as defined for the formula (A).

In formula (B), the Si atom bonded to at least one group selected from the group consisting of a hydroxyl group and a hydrolyzable group indicates a Si atom included in (SiR¹³ₙ₁R¹⁴₃₋ₙ₁) or (-SiR^{13"}ₙ₁R^{14"}₃₋ₙ₁) where n1 is an integer of 1 to 3.

In the formulae, n1 with respect to each (-SiR¹³ₙ₁R¹⁴₃₋ₙ₁) unit or each (-SiR^{13"}ₙ₁R^{14"}₃₋ₙ₁) unit is independently an integer of 0 to 3, preferably 1 to 3, more preferably 3. In the formulae, at least two n1 are each an integer of 1 to 3, namely, there is not any case where all n1 are simultaneously 0. That is, at least two R¹³ or R^{13"} are present in the formulae. That is, at least two structures selected from the group consisting of a -SiR¹³ₙ₁R¹⁴₃₋ₙ₁ structure (namely, -SiR¹³ portion) where n1 is 1 or more and a -SiR^{13"}ₙ₁R^{14"}₃₋ₙ₁ structure (namely, -SiR^{13"} portion) where n1 is 1 or more are present in formula (B).

More preferably, at least one Si bonded to the hydroxyl group or the hydrolyzable group is present at each of both ends of a molecular backbone of the PFPE-containing silane compound, in formula (B). That is, at least one SiR¹³ portion is present, and at least one SiR^{13"} portion is present.

In the formulae, X³ each independently represents a single bond or a 2-10 valent organic group. X³ is understood to be a linker which links a perfluoropolyether portion (namely, -PFPE- portion) mainly providing waterrepellency, surface lubricity, and the like, and a silane portion (specifically, -SiR¹³ₙ₁R¹⁴₃₋ₙ₁ or -SiR^{13"}ₙ₁R^{14"}₃₋ₙ₁) providing a binding ability to the base material, in any compound represented by formula (B). Accordingly, X³ may be a single bond or any organic group as long as such any compound represented by formula (B) may be stably present. Herein, a left portion and a right portion of the structure designated as X³ are bonded to the group represented by PFPE and the group in parentheses with β1, respectively.

In another embodiment, X³ represents X^{e}. X^{e} is as defined above.

In the formulae, β1 is an integer of 1 to 9, and may be varied depending on the valence of X³. In formula (B), β1 corresponds to a value obtained by subtracting 1 from the value of the valence of X³. In the case where X³ is a single bond, β1 is 1.

X³ is preferably a 2-7 valent, more preferably 2-4 valent, further preferably divalent organic group.

In one embodiment, X³ is a 2-4 valent organic group, and β1 is 1 to 3.

In another embodiment, X³ is a divalent organic group, and β1 is 1. In such a case, formula (B) is represented by the following formula (B').
[Formula 13]

R¹⁴₃₋ₙ₁R¹³ₙ₁Si - X³ - PFPE - X³ - SiR^{13"}ₙ₁R^{14"}₃₋ₙ₁ ··· (B')

Examples of X³ are not limited, and include the same as described with respect to X¹.

In particular, preferable specific examples of X³ include
a single bond,
-CH₂OCH₂-,
-CH₂O(CH₂)₂-,
-CH₂O(CH₂)₃-,
-CH₂O(CH₂)₆-,
-CF₂-CH₂-O-CH₂-,
-CF₂-CH₂-O-(CH₂)₂-,
-CF₂-CH₂-O-(CH₂)₃-,
-CF₂-CH₂-O-(CH₂)₆-,
-CH₂O(CH₂)₃Si(CH₃)₂OSi(CH₃)₂(CH₂)₂-,
-CH₂O(CH₂)₃Si(CH₃)₂OSi(CH₃)₂OSi(CH₃)₂(CH₂)₂-,
-CH₂O(CH₂)₃Si(CH₃)₂O(Si(CH₃)₂O)₂Si(CH₃)₂(CH₂)₂-,
-CH₂O(CH₂)₃Si(CH₃)₂O(Si (CH₃)₂O)₃Si(CH₃)₂(CH₂)₂-,
-CH₂O(CH₂)₃Si(CH₃)₂O(Si(CH₃)₂O)₁₀Si(CH₃)₂(CH₂)₂-,
-CH₂O(CH₂)₃Si(CH₃)₂O(Si(CH₃)₂O)₂₀Si(CH₃)₂(CH₂)₂-,
-CH₂OCF₂CHFOCF₂-,
-CH₂OCF₂CHFOCF₂CF₂-,
-CH₂OCF₂CHFOCF₂CF₂CF₂-,
-CH₂OCH₂CF₂CF₂OCF₂-,
-CH₂OCH₂CF₂CF₂OCF₂CF₂-,
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF₂CF₂-,
-CH₂OCH₂CF₂CF₂OCF(CF₃)CF₂OCF₂CF₂CF₂-,
-CH₂OCH₂CHFCF₂OCF₂-,
-CH₂OCH₂CHFCF₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-,
-CH₂OCF₂CHFOCF₂CF₂CF₂-C(O)NH-CH₂-,
-CH₂OCH₂(CH₂)₇CH₂Si(OCH₃)₂OSi(OCH₃)₂(CH₂)₂Si(OCH₃)₂OSi(OCH₃)₂(CH₂ )₂-,
-CH₂OCH₂CH₂CH₂Si(OCH₃)₂₀Si(OCH₃)₂(CH₂)₃-,
-CH₂OCH₂CH₂CH₂Si(OCH₂CH₃)₂OSi(OCH₂CH₃)₂(CH₂)₃-,
-CH₂OCH₂CH₂CH₂Si(OCH₃)₂₀Si(OCH₃)₂(CH₂)₂-,
-CH₂OCH₂CH₂CH₂Si(OCH₂CH₃)₂OSi(OCH₂CH₃)₂(CH₂)₂-,
-(CH₂)₂-Si(CH₃)₂-(CH₂)₂-,
-CH₂-,
-(CH₂)₂-,
-(CH₂)₃-,
-(CH₂)₄-,
-(CH₂)₅-,
-(CH₂)₆-,
-CF₂-,
-(CF₂)₂-,
-CF₂-CH₂-,
-CF₂-(CH₂)₂-,
-CF₂-(CH₂)₃-,
-CF₂-(CH₂)₄-,
-CF₂-(CH₂)₅-,
-CF₂-(CH₂)₆-,
-CO-,
-CONH-,
-CONH-CH₂-,
-CONH-(CH₂)₂-,
-CONH-(CH₂)₃-,
-CONH-(CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CON(CH₃)-(CH₂)₃-,
-CON(Ph)-(CH₂)₃-, wherein Ph means phenyl,
-CON(CH₃)-(CH₂)₆-,
-CON(Ph)-(CH₂)₆-, wherein Ph means phenyl,
-CF₂-CON(CH₃)-(CH₂)₃-,
-CF₂-CON(Ph)-(CH₂)₃-, wherein Ph means phenyl,
-CF₂-CON(CH₃)-(CH₂)₆-,
-CF₂-CON(Ph)-(CH₂)₆-, wherein Ph means phenyl,
-CONH-(CH₂)₂NH(CH₂)₃-,
-CONH-(CH₂)₆NH(CH₂)₃-,
-CH₂O-CONH-(CH₂)₃-,
-CH₂O-CONH-(CH₂)₆-,
-S-(CH₂)₃-,
-(CH₂)₂S(CH₂)₃-,
-CONH-(CH₂)₃Si(CH₃)₂OSi(CH₃)₂(CH₂)₂-,
-CONH-(CH₂)₃Si(CH₃)₂OSi(CH₃)₂OSi(CH₃)₂(CH₂)₂-,
-CONH-(CH₂)₃Si(CH₃)₂O(Si(CH₃)₂O)₂Si(CH₃)₂(CH₂)₂-,
-CONH-(CH₂)₃Si(CH₃)₂O(Si(CH₃)₂O)₃Si(CH₃)₂(CH₂)₂-,
-CONH-(CH₂)₃Si(CH₃)₂O(Si(CH₃)₂O)₁₀Si(CH₃)₂(CH₂)₂-,
-CONH-(CH₂)₃Si(CH₃)₂O(Si(CH₃)₂O)₂₀Si(CH₃)₂(CH₂)₂-,
-C(O)O-(CH₂)₃-,
-C(O)O-(CH₂)₆-,
-CH₂-O-(CH₂)₃-Si(CH₃)₂-(CH₂)₂-Si(CH₃)₂-(CH₂)₂-,
-CH₂-O-(CH₂)₃-Si(CH₃)₂-(CH₂)₂-Si(CH₃)₂-CH(CH₃)-,
-CH₂-O-(CH₂)₃-Si(CH₃)₂-(CH₂)₂-Si(CH₃)₂-(CH₂)₃-,
-CH₂-O-(CH₂)₃-Si(CH₃)₂-(CH₂)₂-Si(CH₃)₂-CH(CH₃)-CH₂-,
-OCH₂-,
-O(CH₂)₃-, and
-OCFHCF₂-

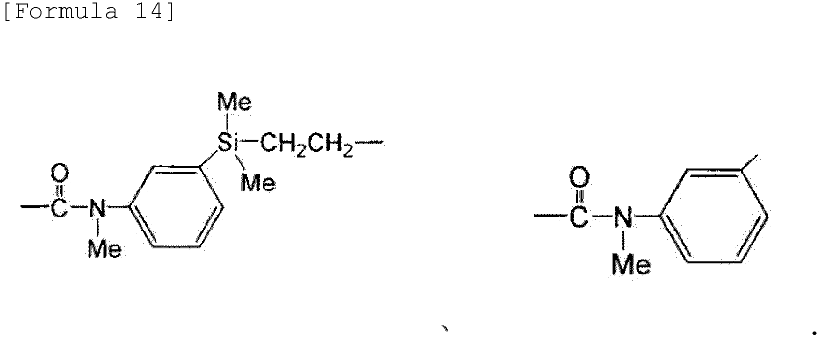

In particular, X³ is preferably
-CH₂OCH₂-,
-CH₂O(CH₂)₂-,
-CH₂O(CH₂)₃-,
-CH₂O(CH₂)₆-,
-CF₂-CH₂-O-CH₂-,
-CF₂-CH₂-O-(CH₂)₂-,
-CF₂-CH₂-O-(CH₂)₃-,
-CF₂-CH₂-O-(CH₂)₆-,
-CH₂OCF₂CHFOCF₂-,
-CH₂OCF₂CHFOCF₂CF₂-,
-CH₂OCF₂CHFOCF₂CF₂CF₂-,
-CH₂OCH₂CF₂CF₂OCF₂-,
-CH₂OCH₂CF₂CF₂OCF₂CF₂-,
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF₂CF₂-,
-CH₂OCH₂CF₂CF₂OCF(CF₃)CF₂OCF₂CF₂CF₂-,
-CH₂OCH₂CHFCF₂OCF₂-,
-CH₂OCH₂CHFCF₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-,
-CH₂OCF₂CHFOCF₂CF₂CF₂-C(O)NH-CH₂-,
-CF₂-CH₂OCF₂CHFOCF₂CF₂CF₂-C(O)NH-CH₂-,
-CH₂-,
- (CH₂)₂-,
- (CH₂)₃-,
- (CH₂)₄-,
- (CH₂)₅-,
- (CH₂)₆-,
-CF₂-,
-(CF₂)₂-,
-CF₂-CH₂-,
-CF₂-(CH₂)₂-,
-CF₂-(CH₂)₃-,
-CF₂-(CH₂)₄-,
-CF₂-(CH₂)₅-,
-CF₂-(CH₂)₆-,
-CONH-,
-CONH-CH₂-,
-CONH- (CH₂)₂-,
-CONH- (CH₂)₃-,
-CONH- (CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CON(CH₃)-(CH₂)₃-,
-CON (Ph) - (CH₂)₃-, wherein Ph means phenyl,
-CON (CH₃)- (CH₂)₆-,
-CON (Ph) - (CH₂)₆-, wherein Ph means phenyl,
-CF₂-CON(CH₃)-(CH₂)₃-,
-CF₂-CON(Ph) - (CH₂)₃-, wherein Ph means phenyl,
-CF₂-CON(CH₃)- (CH₂)₆-,
-CF₂-CON(Ph) - (CH₂)₆-, wherein Ph means phenyl,
-CONH-(CH₂)₂NH(CH₂)₃-,
-CONH-(CH₂)₆NH(CH₂)₃-,
-CH₂O-CONH-(CH₂)₃-,
-CH₂O-CONH-(CH₂)₆-,
-OCH₂-,
-O(CH₂)₃-,
-OCFHCF₂-.

In particular, X³ is more preferably
-CH₂OCF₂CHFOCF₂CF₂CF₂-C(O)NH-CH₂-,
-CF₂-CH₂OCF₂CHFOCF₂CF₂CF₂-C(O)NH-CH₂-,
-CONH-,
-CONH-CH₂-,
-CONH-(CH₂)₂-,
-CONH-(CH₂)₃-,
-CONH-(CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CON(CH₃)-(CH₂)₃-,
-CON (Ph) -(CH₂)₃-, wherein Ph means phenyl,
-CON(CH₃)-(CH₂)₆-,
-CON (Ph) -(CH₂)₆-, wherein Ph means phenyl,
-CF₂-CON(CH₃)-(CH₂)₃-,
-CF₂-CON(Ph) -(CH₂)₃-, wherein Ph means phenyl,
-CF₂-CON(CH₃)-(CH₂)₆-,
-CF₂-CON(Ph)-(CH₂)₆-, wherein Ph means phenyl,
-CONH-(CH₂)₂NH(CH₂)₃-,
-CONH-(CH₂)₆NH(CH₂)₃-

In another preferable embodiment, X³ represents X^{e'}. X^{e'} is as defined above.

In one embodiment, X^{e'} is a single bond. In the present embodiment, PFPE and a group having a binding ability to the base material (namely, group in parentheses with β1 in (B)) are directly bonded.

In one embodiment, at least two Si each bonded to the hydroxyl group or the hydrolyzable group are present in formula (B). That is, at least two SiR¹³ portions are present in formula (B).

A preferable compound represented by formula (B) is a compound represented by the following formula (B'):
[Formula 15]

R¹⁴₃₋ₙ₁R¹³ₙ₁Si-X³-PFPE-X³-SiR^{13"}ₙ₁R^{14"}₃₋ₙ₁ ··· (B')

wherein:
PFPE, at each occurrence, is each independently a group represented by formula:

   -(OC₆F₁₂)ₐ-(OC₅F₁₀)_{b}-(OC₄F₈)_{c}-(OC₃F₆)_{d}-(OC₂F₄)ₑ-(OCF₂)_{f}-

   wherein a, b, c, d, e and f are each independently an integer of 0 or more and 200 or less, the sum of a, b, c, d, e and f is at least 1, and the occurrence order of the respective repeating units in parentheses with a, b, c, d, e or f is not limited in the formula;
R¹³, at each occurrence, each independently represents a hydroxyl group or a hydrolyzable group;
R¹⁴, at each occurrence, each independently represents a hydrogen atom or an alkyl group having 1 to 22 carbon atoms;
R^{13"} and R^{14"} are as defined for R¹³ and R¹⁴, respectively;
n1 is an integer of 1 to 3, preferably 3; and
X³ is -CH₂O(CH₂)₂-, -CH₂O(CH₂)₃- or -CH₂O(CH₂)₆-.

Such any compound represented by formula (B) can be produced by a known method, for example, a method described in JP 2013-117012 A, or an improved method thereof.
Formula (C):
[Formula 16]

(R^{c}ₘ₁R^{b}ₗ₁R^{a}ₖ₁Si)_{γ1}-X⁵-PFPE-X⁵-(SiR^{a"}ₖ₁R^{b"}ₗ₁R^{c"}ₘ₁)_{γ1} ··· (C)

In formula (C), PFPE is as defined above.

In the formula, X⁵ each independently represents a single bond or a 2-10 valent organic group. X⁵ is understood to be a linker which links a perfluoropolyether portion (namely, -PFPE- portion) mainly providing water-repellency, surface lubricity, and the like, and a silane portion (specifically, -SiR^{a}ₖ₁R^{b}ₗ₁R^{c}ₘ₁ group or -SiR^{a"}ₖ₁R^{b"}ₗ₁R^{c"}ₘ₁ group) providing a binding ability to the base material, in any compound represented by formula (C). Accordingly, X⁵ may be a single bond or any organic group as long as such any compound represented by formula (C) may be stably present. Herein, a left portion and a right portion of the structure designated as X⁵ are bonded to the group represented by PFPE and the group in parentheses with γ1, respectively.

In another embodiment, X⁵ represents X^{e}. X^{e} is as defined above.

In the formula, γ1 is an integer of 1 to 9, and γ1 may be varied depending on the valence of X⁵. In formula (C), γ1 corresponds to a value obtained by subtracting 1 from the value of the valence of X⁵.

X⁵ is preferably a 2-7 valent, more preferably 2-4 valent, further preferably divalent organic group.

In one embodiment, X⁵ is a 2-4 valent organic group, and γ1 is 1 to 3.

In another embodiment, X⁵ is a divalent organic group, and γ1 is 1. In such a case, formula (C) is represented by the following formula (C').
[Formula 17]

R^{c}ₘ₁R^{b}ₗ₁R^{a}ₖ₁Si-X⁵-PFPE-X⁵-SiR^{a"}ₖ₁R^{b"}ₗ₁R^{c"}ₘ₁ ··· (C')

Examples of X⁵ are not limited, and include the same as described with respect to X¹.

In particular, preferable specific examples of X⁵ include
a single bond,
-CH₂OCH₂-,
-CH₂O(CH₂)₂-,
-CH₂O(CH₂)₃-,
-CH₂O(CH₂)₆-,
-CF₂-CH₂-O-CH₂-,
-CF₂-CH₂-O-(CH₂)₂-,
-CF₂-CH₂-O-(CH₂)₃-,
-CF₂-CH₂-O-(CH₂)₆-,
-CH₂O(CH₂)₃Si(CH₃)₂OSi(CH₃)₂(CH₂)₂-,
-CH₂O(CH₂)₃Si(CH₃)₂OSi(CH₃)₂OSi(CH₃)₂(CH₂)₂-,
-CH₂O(CH₂)₃Si(CH₃)₂O(Si(CH₃)₂O)₂Si(CH₃)₂(CH₂)₂-,
-CH₂O(CH₂)₃Si(CH₃)₂O(Si(CH₃)₂O)₃Si(CH₃)₂(CH₂)₂-,
-CH₂O(CH₂)₃Si(CH₃)₂O(Si(CH₃)₂O)₁₀Si(CH₃)₂(CH₂)₂-,
-CH₂O(CH₂)₃Si(CH₃)₂O(Si(CH₃)₂O)₂₀Si(CH₃)₂(CH₂)₂-,
-CH₂OCF₂CHFOCF₂-,
-CH₂OCF₂CHFOCF₂CF₂-,
-CH₂OCF₂CHFOCF₂CF₂CF₂-,
-CH₂OCH₂CF₂CF₂OCF₂-,
-CH₂OCH₂CF₂CF₂OCF₂CF₂-,
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF₂CF₂-,
-CH₂OCH₂CF₂CF₂OCF(CF₃)CF₂OCF₂CF₂CF₂-,
-CH₂OCH₂CHFCF₂OCF₂-,
-CH₂OCH₂CHFCF₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-,
-CH₂OCF₂CHFOCF₂CF₂CF₂-C(O)NH-CH₂-,
-CH₂OCH₂(CH₂)₇CH₂Si(OCH₃)₂OSi(OCH₃)₂(CH₂)₂Si(OCH₃)₂OSi(OCH₃)₂(CH₂ )₂-,
-CH₂OCH₂CH₂CH₂Si(OCH₃)₂OSi(OCH₃)₂(CH₂)₃-,
-CH₂OCH₂CH₂CH₂Si(OCH₂CH₃)₂OSi(OCH₂CH₃)₂(CH₂)₃-,
-CH₂OCH₂CH₂CH₂Si(OCH₃)₂OSi(OCH₃)₂(CH₂)₂-,
-CH₂OCH₂CH₂CH₂Si(OCH₂CH₃)₂OSi(OCH₂CH₃)₂(CH₂)₂-,
- (CH₂)₂-Si(CH₃)₂-(CH₂)₂-,
-CH₂-,
- (CH₂)₂-,
- (CH₂)₃-,
- (CH₂)₄-,
- (CH₂)₅-,
- (CH₂)₆-,
-CF₂-,
- (CF₂)₂-,
-CF₂-CH₂-,
-CF₂-(CH₂)₂-,
-CF₂-(CH₂)₃-,
-CF₂-(CH₂)₄-,
-CF₂-(CH₂)₅-,
-CF₂-(CH₂)₆-,
-CO-,
-CONH-,
-CONH-CH₂-,
-CONH-(CH₂)₂-,
-CONH-(CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CONH-(CH₂)₃-,
-CON(CH₃)-(CH₂)₃-,
-CON(Ph)-(CH₂)₃-, wherein Ph means phenyl,
-CON(CH₃)-(CH₂)₆-,
-CON(Ph)-(CH₂)₆-, wherein Ph means phenyl,
-CF₂-CON(CH₃)-(CH₂)₃-,
-CF₂-CON(Ph)-(CH₂)₃-, wherein Ph means phenyl,
-CF₂-CON(CH₃)-(CH₂)₆-,
-CF₂-CON(Ph)-(CH₂)₆-, wherein Ph means phenyl,
-CONH-(CH₂)₂NH(CH₂)₃-,
-CONH-(CH₂)₆NH(CH₂)₃-,
-CH₂O-CONH-(CH₂)₃-,
-CH₂O-CONH-(CH₂)₆-,
-S-(CH₂)₃-,
-(CH₂)₂S(CH₂)₃-,
-CONH-(CH₂)₃Si(CH₃)₂OSi(CH₃)₂(CH₂)₂-,
-CONH-(CH₂)₃Si(CH₃)₂OSi(CH₃)₂OSi(CH₃)₂(CH₂)₂-,
-CONH-(CH₂)₃Si(CH₃)₂O(Si(CH₃)₂O)₂Si(CH₃)₂(CH₂)₂-,
-CONH-(CH₂)₃Si(CH₃)₂O(Si(CH₃)₂O)₃Si(CH₃)₂(CH₂)₂-,
-CONH-(CH₂)₃Si(CH₃)₂O(Si(CH₃)₂O)₁₀Si(CH₃)₂(CH₂)₂-,
-CONH-(CH₂)₃Si(CH₃)₂O(Si(CH₃)₂O)₂₀Si(CH₃)₂(CH₂)₂-,
-C(O)O-(CH₂)₃-,
-C(O)O-(CH₂)₆-,
-CH₂-O-(CH₂)₃-Si(CH₃)₂-(CH₂)₂-Si(CH₃)₂-(CH₂)₂-,
-CH₂-O-(CH₂)₃-Si(CH₃)₂-(CH₂)₂-Si(CH₃)₂-CH(CH₃)-,
-CH₂-O-(CH₂)₃-Si(CH₃)₂-(CH₂)₂-Si(CH₃)₂-(CH₂)₃-,
-CH₂-O-(CH₂)₃-Si(CH₃)₂-(CH₂)₂-Si(CH₃)₂-CH(CH₃)-CH₂-,
-OCH₂-,
-O(CH₂)₃-, and
-OCFHCF₂-

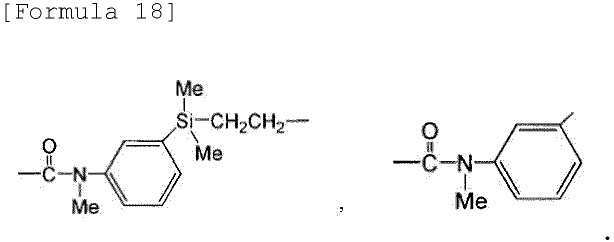

In particular, X⁵ is preferably
-CH₂OCH₂-,
-CH₂O(CH₂)₂-,
-CH₂O(CH₂)₃-,
-CH₂O(CH₂)₆-,
-CF₂-CH₂-O-CH₂-,
-CF₂-CH₂-O-(CH₂)₂-,
-CF₂-CH₂-O-(CH₂)₃-,
-CF₂-CH₂-O-(CH₂)₆-,
-CH₂OCF₂CHFOCF₂-,
-CH₂OCF₂CHFOCF₂CF₂-,
-CH₂OCF₂CHFOCF₂CF₂CF₂-,
-CH₂OCH₂CF₂CF₂OCF₂-,
-CH₂OCH₂CF₂CF₂OCF₂CF₂-,
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF₂CF₂-,
-CH₂OCH₂CF₂CF₂OCF(CF₃)CF₂OCF₂CF₂CF₂-,
-CH₂0CH₂CHFCF₂0CF₂-,
-CH₂OCH₂CHFCF₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-,
-CH₂OCF₂CHFOCF₂CF₂CF₂-C(O)NH-CH₂-,
-CF₂-CH₂OCF₂CHFOCF₂CF₂CF₂-C(O)NH-CH₂-,
-CH₂-,
- (CH₂)₂-,
- (CH₂)₃-,
- (CH₂)₄-,
- (CH₂)₅-,
- (CH₂)₆-,
-CF₂-,
- (CF₂)₂-,
-CF₂-CH₂-,
-CF₂-(CH₂)₂-,
-CF₂-(CH₂)₃-,
-CF₂-(CH₂)₄-,
-CF₂-(CH₂)₅-,
-CF₂-(CH₂)₆-,
-CONH-,
-CONH-CH₂-,
-CONH- (CH₂)₂-,
-CONH- (CH₂)₃-,
-CONH- (CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CON(CH₃)-(CH₂)₃-,
-CON(Ph)-(CH₂)₃-, wherein Ph means phenyl,
-CON(CH₃)-(CH₂)₆-,
-CON(Ph)-(CH₂)₆-, wherein Ph means phenyl,
-CF₂-CON(CH₃)-(CH₂)₃-,
-CF₂-CON(Ph)-(CH₂)₃-, wherein Ph means phenyl,
-CF₂-CON(CH₃)-(CH₂)₆-,
-CF₂-CON(Ph)-(CH₂)₆-, wherein Ph means phenyl,
-CONH-(CH₂)₂NH(CH₂)₃-,
-CONH-(CH₂)₆NH(CH₂)₃-,
-CH₂O-CONH-(CH₂)₃-,
-CH₂O-CONH-(CH₂)₆-,
-OCH₂-,
-O(CH₂)₃-,
-OCFHCF₂-.

In particular, X⁵ is more preferably
-CH₂OCF₂CHFOCF₂CF₂CF₂-C(O)NH-CH₂-,
-CF₂-CH₂OCF₂CHFOCF₂CF₂CF₂-C(O)NH-CH₂-,
-CONH-,
-CONH-CH₂-,
-CONH-(CH₂)₂-,
-CONH-(CH₂)₃-,
-CONH-(CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CON(CH₃)-(CH₂)₃-,
-CON (Ph)-(CH₂)₃-, wherein Ph means phenyl,
-CON(CH₃)-(CH₂)₆-,
-CON (Ph)-(CH₂)₆-, wherein Ph means phenyl,
-CF₂-CON(CH₃)-(CH₂)₃-,
-CF₂-CON(Ph) -(CH₂)₃-, wherein Ph means phenyl,
-CF₂-CON(CH₃)-(CH₂)₆-,
-CF₂-CON(Ph)-(CH₂)₆-, wherein Ph means phenyl,
-CONH-(CH₂)₂NH(CH₂)₃-,
-CONH-(CH₂)₆NH(CH₂)₃-.

In another preferable embodiment, X⁵ represents X^{e'}. X^{e'} is as defined above.

In one embodiment, X^{e'} is a single bond. In the present embodiment, PFPE and a group having a binding ability to the base material (namely, group in parentheses with γ1 in formula (C)) are directly bonded.

In the formula, R^{a}, at each occurrence, each independently represents -Z³-SiR⁷¹ₚ₁R⁷²_{q1}R⁷³ᵣ₁.

In the formula, Z³, at each occurrence, each independently represents an oxygen atom or a divalent organic group.

Z³ is preferably a divalent organic group, and does not encompass any group which is taken together with a Si atom at an end of a molecular backbone in formula (C) (Si atom to which R^{a} is bonded) to form a siloxane bond.

Z³ is preferably a C₁₋₆ alkylene group, -(CH₂)_{g}-O-(CH₂)ₕ-, wherein g is an integer of 1 to 6, h is an integer of 1 to 6), or -phenylene-(CH₂)ᵢ-, wherein i is an integer of 0 to 6), more preferably a C₁₋₃ alkylene group. Such a group is optionally substituted with one or more substituents selected from, for example, a fluorine atom, a C₁₋₆ alkyl group, a C₂₋₆ alkenyl group and a C₂₋₆ alkynyl group. Z³ is more preferably a linear or branched alkylene group, further preferably a linear alkylene group from the viewpoint of particularly favorable ultraviolet durability. The number of carbon atoms constituting the alkylene group of Z³ is preferably in the range from 1 to 6, more preferably in the range from 1 to 3. The alkylene group is as described above.

In the formulae, R⁷¹, at each occurrence, each independently represents R^{a'}. R^{a'} is as defined for R^{a}.

The number of Si linearly linked via a Z³ group is at most 5 in R^{a}. That is, in the case where at least one R⁷¹ is present in R^{a}, two or more Si atoms linearly linked via a Z³ group are present in R^{a}, and the number of such Si atoms linearly linked via a Z³ group is at most 5. Herein, the "number of Si atoms linearly linked via a Z³ group in R^{a}" is equal to the number of repeatings of -Z³-Si-linearly linked in R^{a}.

One example is represented below, where Si atoms are linked via a Z³ group in R^{a}.

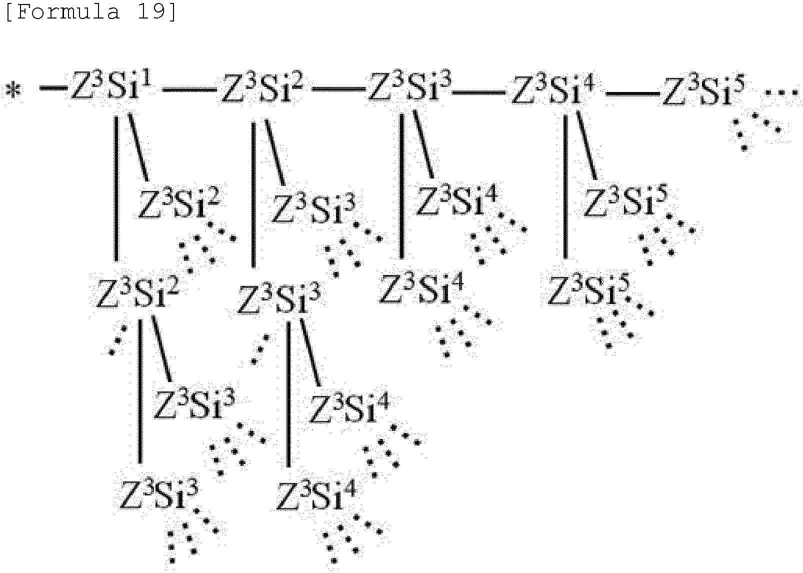

In the formula, "*" means a site bonded to Si of a main chain, and "..." means that a predetermined group other than Z³Si is bonded, namely, "..." means a position at which repeating of Z³Si is terminated in the case where all three bonds of a Si atom are "...". The superscript number in Si means the number of occurrence of Si linearly linked via a Z³ group when counted from "*". That is, a chain where repeating of Z³Si is terminated at Si² is a chain where the "number of Si atoms linearly linked via a Z³ group in R^{a}" is 2, and similarly, chains where repeating of Z³Si is terminated at Si³, Si⁴ and Si⁵ mean chains where the "number of Si atoms linearly linked via a Z³ group in R^{a}" is 3, 4 and 5, respectively. As clear from the formula, a plurality of Z³Si chains are present in R^{a}, and all the chains do not necessarily have the same length, and, for example, may each have any length.

In a preferable embodiment, the "number of Si atoms linearly linked via a Z³ group in R^{a}" is 1 (left formula) or 2 (right formula) in all chains, as represented below.

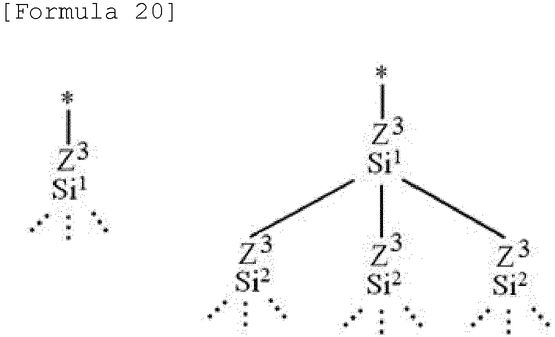

In one embodiment, the number of Si atoms linearly linked via a Z³ group in R^{a} is 1 or 2, preferably 1.

In the formulae, R⁷², at each occurrence, each independently represents a hydroxyl group or a hydrolyzable group. The "hydrolyzable group" is as defined above.

Preferably, R⁷² is -OR, wherein R represents a substituted or unsubstituted C₁₋₃ alkyl group, more preferably a methyl group.

In the formulae, R⁷³, at each occurrence, each independently represents a hydrogen atom or a lower alkyl group. The lower alkyl group is preferably an alkyl group having 1 to 20 carbon atoms, more preferably an alkyl group having 1 to 6 carbon atoms, further preferably a methyl group.

In the formulae, p1, at each occurrence, is each independently an integer of 0 to 3; q1, at each occurrence, is each independently an integer of 0 to 3; and r1, at each occurrence, is each independently an integer of 0 to 3, provided that the sum of p1, q1 and r1 with respect to (-Z³-SiR⁷1ₚ₁R⁷²_{q1}R⁷³ᵣ₁) is 3.

In a preferable embodiment, q1 in R^{a}' (R^{a} in the case where no R^{a}' is present) at an end of R^{a} is preferably 2 or more, for example, 2 or 3, more preferably 3.

In a preferable embodiment, at least one end of R^{a} may be -Si(-Z³-SiR⁷²_{q1}R⁷³ᵣ₁)₂R⁷²_{q1'}R⁷³_{r1'} (provided that at least any one of q1' and r1' is 1 and the other is 0), or -Si(-Z³-SiR⁷²_{q1}R⁷³ᵣ₁)₃, preferably -Si(-Z³-SiR⁷²_{q1}R⁷³ᵣ₁)₃ (wherein the total of q1 and r1 is 3). In the formula, a (-Z³-SiR⁷²_{q1}R⁷³ᵣ₁) unit is preferably (-Z³-SiR⁷²₃). In a further preferable embodiment, all ends of R^{a} may be -Si(-Z³-SiR⁷²_{q1}R⁷³ᵣ₁)₃, preferably -Si(-Z³-SiR⁷²₃)₃.

In a preferable embodiment, an end of a group represented by (SiR^{a}ₖ₁R^{b}ₗ₁R^{c}ₘ₁) may be -Si(-Z³-SiR⁷²_{q1}R⁷³ᵣ₁)₂R^{b}ₗ₁R^{c}ₘ₁ (provided that any one of l1 and m1 is 1 and the other is 0), -Si(-Z³-SiR⁷²_{q1}R⁷³ᵣ₁)₂R⁷²_{q1'}R⁷³_{r1'} (provided that any one of q1' and r1' is 1 and the other is 0), or - Si(-Z³-SiR⁷²_{q1}R⁷³ᵣ₁)₃, preferably -Si(-Z³-SiR⁷²_{q1}R⁷³ᵣ₁)₃ (wherein the total of q1 and r1 is 3).

In the formulae, R^{a"}, at each occurrence, each independently represents -Z³-SiR⁷¹ₚ₁R^{72"}_{q1}R⁷³ᵣ₁. Z³, R⁷¹, R⁷³, p1, q1 and r1 are as defined above. R^{72"} is as defined for R⁷².

In a preferable embodiment, at least one end of R^{a"} may be -Si(-Z³-SiR^{72"}_{q1}R⁷³ᵣ₁)₂R^{72"}_{q1'}R⁷³_{r1'} (provided that at least any one of q1' and r1' is 1 and the other is 0), or - Si(-Z³-SiR^{72"}_{q1}R⁷³ᵣ₁)₃, preferably -Si(-Z³-SiR^{72"}_{q1}R⁷³ᵣ₁)₃ (wherein the total of q1 and r1 is 3). In the formula, a (-Z³-SiR^{72"}_{q1}R⁷³ᵣ₁) unit is preferably (-Z³-SiR^{72"}₃). In a further preferable embodiment, all ends of R^{a} may be -Si(-Z³-SiR^{72"}_{q1}R⁷³ᵣ₁)₃, preferably -Si(-Z³-SiR^{72"}₃)₃.

In a preferable embodiment, an end of a group represented by (SiR^{a"}ₖ₁R^{b"}ₗ₁R^{c"}ₘ₁) may be -Si(-Z³-SiR^{72"}_{q1}R⁷³ᵣ₁)₂R^{b"}ₗ₁R^{c"}ₘ₁ (provided that any one of l1 and m1 is 1 and the other is 0), -Si(-Z³-SiR^{72"}_{q1}R⁷³ᵣ₁)₂R^{72"}_{q1'}R⁷³_{r1'} (provided that any one of q1' and r1' is 1 and the other is 0), or -Si(-Z³-SiR^{72"}_{q1}R⁷³ᵣ₁)₃, preferably -Si(-Z³-SiR^{72"}_{q1}R⁷³ᵣ₁)₃ (wherein the total of q1 and r1 is 3).

At least two Si atoms each bonded to the hydroxyl group or the hydrolyzable group are present in formula (C). That is, at least two structures selected from the group consisting of SiR⁷², SiR^{72"}, SiR^{b} and SiR^{b"} are present. R^{b} and R^{b"} are described below.

At least one Si bonded to the hydroxyl group or the hydrolyzable group is present at each of both ends of a molecular backbone of the PFPE-containing silane compound, in formula (C). That is, at least one SiR⁷² and/or SiR^{b} structure is present, and at least one SiR⁷²" and/or SiR^{b}" structure is present.

In the formulae, R^{b}, at each occurrence, each independently represents a hydroxyl group or a hydrolyzable group.

R^{b} preferably represents a hydroxyl group, -OR, -OCOR, -O-N=C(R)₂, -N (R)₂, -NHR, or halogen, wherein R represents a substituted or unsubstituted alkyl group having 1 to 4 carbon atoms, and R^{b} more preferably represents -OR. Examples of R include unsubstituted alkyl groups such as a methyl group, an ethyl group, a propyl group, an isopropyl group, a n-butyl group and an isobutyl group; and substituted alkyl groups such as a chloromethyl group. Among them, an alkyl group, in particular, an unsubstituted alkyl group is preferable, and a methyl group or an ethyl group is more preferable. The hydroxyl group is not limited, and, may be generated by hydrolyzing the hydrolyzable group. More preferably, R^{b} represents -OR, wherein R represents a substituted or unsubstituted C₁₋₃ alkyl group, more preferably a methyl group.

In the formulae, R^{b"} is as defined for R^{b}.

In the formulae, R^{c}, at each occurrence, each independently represents a hydrogen atom or a lower alkyl group. The lower alkyl group is preferably an alkyl group having 1 to 20 carbon atoms, more preferably an alkyl group having 1 to 6 carbon atoms, further preferably a methyl group.

In the formulae, R^{c"} is as defined for R^{c}.

In the formulae, k1, at each occurrence, is each independently an integer of 0 to 3; 11, at each occurrence, is each independently an integer of 0 to 3; and m1, at each occurrence, is each independently an integer of 0 to 3, provided that the sum of k1, l1 and m1 with respect to (SiR^{a}ₖ₁R^{b}ₗ₁R^{c}ₘ₁) or with respect to (SiR^{a"}ₖ₁R^{b"}ₗ₁R^{c"}ₘ₁) is 3.

In one embodiment, k1 is preferably 1 to 3, more preferably 3.

Such any compound represented by formula (C) can be synthesized as described in WO 2014/069592.
Formula (D):
[Formula 21]

(R^{f}ₘ₂R^{e}ₗ₂R^{d}ₖ₂C)_{δ1} - X⁷ - PFPE - X⁷ - (CR^{d"}ₖ₂R^{e"}ₗ₂R^{f"}ₘ₂)_{δ1} ··· (D)

In formula (D), PFPE described with respect to is as defined forformula (A).

In the formula, X⁷ each independently represents a single bond or a 2-10 valent organic group. X⁷ is understood to be a linker which links a perfluoropolyether portion (namely, -PFPE- portion) mainly providing water-repellency, surface lubricity, and the like, and a portion (namely, group in parentheses with δ1) providing a binding ability to the base material, in any compound represented by formula (D). Accordingly, X⁷ may be a single bond or any organic group as long as such any compound represented by formula (D) may be stably present. Herein, a left portion and a right portion of the structure designated as X⁷ are bonded to the group represented by PFPE and the group in parentheses with δ1, respectively.

In another embodiment, X⁷ represents X^{e}. X^{e} is as defined above.

In the formulae, δ1 is an integer of 1 to 9, and δ1 may be varied depending on the valence of X⁷. In formula (D), δ1 corresponds to a value obtained by subtracting 1 from the valence of X⁷. In the case where X⁷ is a single bond, δ1 is 1.

X⁷ is preferably a 2-7 valent, more preferably 2-4 valent, further preferably divalent organic group.

In one embodiment, X⁷ is a 2-4 valent organic group, and δ1 is 1 to 3.

In another embodiment, X⁷ is a divalent organic group, and δ1 is 1. In such a case, formula (D) is represented by the following formula (D'):
[Formula 22]

R^{f}ₘ₂R^{e}ₗ₂R^{d}ₖ₂C- X⁷ - PFPE - X⁷ - CR^{d"}ₖ₂R^{e"}ₗ₂R^{f"}ₘ₂ ··· (D')

Examples of X⁷ are not limited, and include the same as described with respect to X¹.

In particular, preferable specific examples of X⁷ include
a single bond,
-CH₂OCH₂-,
-CH₂O(CH₂)₂-,
-CH₂O(CH₂)₃-,
-CH₂O(CH₂)₆-,
-CF₂-CH₂-O-CH₂-,
-CF₂-CH₂-O-(CH₂)₂-,
-CF₂-CH₂-O-(CH₂)₃-,
-CF₂-CH₂-O-(CH₂)₆-,
-CH₂O(CH₂)₃Si(CH₃)₂OSi(CH₃)₂(CH₂)₂-,
-CH₂O(CH₂)₃Si(CH₃)₂OSi(CH₃)₂OSi(CH₃)₂(CH₂)₂-,
-CH₂O(CH₂)₃Si(CH₃)₂O(Si(CH₃)₂O)₂Si(CH₃)₂(CH₂)₂-,
-CH₂O(CH₂)₃Si(CH₃)₂O(Si(CH₃)₂O)₃Si(CH₃)₂(CH₂)₂-,
-CH₂O(CH₂)₃Si(CH₃)₂O(Si(CH₃)₂O)₁₀Si(CH₃)₂(CH₂)₂-,
-CH₂O(CH₂)₃Si(CH₃)₂O(Si(CH₃)₂O)₂₀Si(CH₃)₂(CH₂)₂-,
-CH₂OCF₂CHFOCF₂-,
-CH₂OCF₂CHFOCF₂CF₂-,
-CH₂OCF₂CHFOCF₂CF₂CF₂-,
-CH₂OCH₂CF₂CF₂OCF₂-,
-CH₂OCH₂CF₂CF₂OCF₂CF₂-,
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF₂CF₂-,
-CH₂OCH₂CF₂CF₂OCF(CF₃)CF₂OCF₂CF₂CF₂-,
-CH₂OCH₂CHFCF₂OCF₂-,
-CH₂OCH₂CHFCF₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-,
-CH₂OCF₂CHFOCF₂CF₂CF₂-C(O)NH-CH₂-,
-CH₂OCH₂(CH₂)₇CH₂Si(OCH₃)₂OSi(OCH₃)₂(CH₂)₂Si(OCH₃)₂OSi(OCH₃)₂(CH₂ )₂-,
-CH₂OCH₂CH₂CH₂Si(OCH₃)₂OSi(OCH₃)₂(CH₂)₃-,
-CH₂OCH₂CH₂CH₂Si(OCH₂CH₃)₂OSi(OCH₂CH₃)₂(CH₂)₃-,
-CH₂OCH₂CH₂CH₂Si(OCH₃)₂OSi(OCH₃)₂(CH₂)₂-,
-CH₂OCH₂CH₂CH₂Si(OCH₂CH₃)₂OSi(OCH₂CH₃)₂(CH₂)₂-,
- (CH₂)₂-Si(CH₃)₂-(CH₂)₂-,
-CH₂-,
- (CH₂)₂-,
- (CH₂)₃-,
- (CH₂)₄-,
- (CH₂)₅-,
- (CH₂)₆-,
-CF₂-,
- (CF₂)₂-,
-CF₂-CH₂-,
-CF₂-(CH₂)₂-,
-CF₂-(CH₂)₃-,
-CF₂-(CH₂)₄-,
-CF₂-(CH₂)₅-,
-CF₂-(CH₂)₆-,
-CO-,
-CONH-,
-CONH-CH₂-,
-CONH-(CH₂)₂-,
-CONH-(CH₂)₃-,
-CONH-(CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CON(CH₃)-(CH₂)₃-,
-CON (Ph) -(CH₂)₃-, wherein Ph means phenyl,
-CON(CH₃)-(CH₂)₆-,
-CON (Ph) -(CH₂)₆-, wherein Ph means phenyl,
-CF₂-CON(CH₃)-(CH₂)₃-,
-CF₂-CON(Ph) -(CH₂)₃-, wherein Ph means phenyl,
-CF₂-CON(CH₃)-(CH₂)₆-,
-CF₂-CON(Ph) -(CH₂)₆-, wherein Ph means phenyl,
-CONH- (CH₂)₂NH(CH₂)₃-,
-CONH- (CH₂)₆NH(CH₂)₃-,
-CH₂O-CONH-(CH₂)₃-,
-CH₂O-CONH-(CH₂)₆-,
-S-(CH₂)₃-,
- (CH₂)₂S(CH₂)₃-,
-CONH-(CH₂)₃Si(CH₃)₂OSi(CH₃)₂(CH₂)₂-,
-CONH-(CH₂)₃Si(CH₃)₂OSi(CH₃)₂OSi(CH₃)₂(CH₂)₂-,
-CONH-(CH₂)₃Si(CH₃)₂O(Si(CH₃)₂O)₂Si(CH₃)₂(CH₂)₂-,
-CONH-(CH₂)₃Si(CH₃)₂O(Si(CH₃)₂O)₃Si(CH₃)₂(CH₂)₂-,
-CONH-(CH₂)₃Si(CH₃)₂O(Si(CH₃)₂O)₁₀Si(CH₃)₂(CH₂)₂-,
-CONH-(CH₂)₃Si(CH₃)₂O(Si(CH₃)₂O)₂₀Si(CH₃)₂(CH₂)₂-,
-C(O)O-(CH₂)₃-,
-C(O)O-(CH₂)₆-,
-CH₂-O-(CH₂)₃-Si(CH₃)₂-(CH₂)₂-Si(CH₃)₂-(CH₂)₂-,
-CH₂-O-(CH₂)₃-Si(CH₃)₂-(CH₂)₂-Si(CH₃)₂-CH(CH₃)-,
-CH₂-O-(CH₂)₃-Si(CH₃)₂-(CH₂)₂-Si(CH₃)₂-(CH₂)₃-,
-CH₂-O-(CH₂)₃-Si(CH₃)₂-(CH₂)₂-Si(CH₃)₂-CH(CH₃)-CH₂-,
-OCH₂-,
-O(CH₂)₃-, and
-OCFHCF₂-

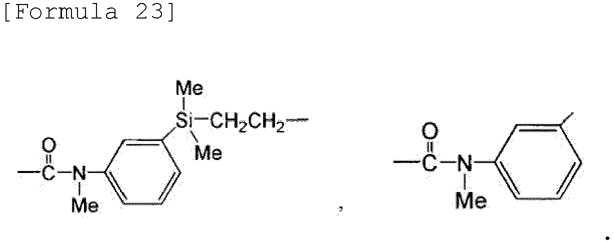

In particular, specific X⁷ is more preferably
-CH₂OCH₂-,
-CH₂O(CH₂)₂-,
-CH₂O(CH₂)₃-,
-CH₂O(CH₂)₆-,
-CF₂-CH₂-O-CH₂-,
-CF₂-CH₂-O-(CH₂)₂-,
-CF₂-CH₂-O-(CH₂)₃-,
-CF₂-CH₂-O-(CH₂)₆-,
-CH₂OCF₂CHFOCF₂-,
-CH₂OCF₂CHFOCF₂CF₂-,
-CH₂OCF₂CHFOCF₂CF₂CF₂-,
-CH₂OCH₂CF₂CF₂OCF₂-,
-CH₂OCH₂CF₂CF₂OCF₂CF₂-,
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF₂CF₂-,
-CH₂OCH₂CF₂CF₂OCF(CF₃)CF₂OCF₂CF₂CF₂-,
-CH₂OCH₂CHFCF₂OCF₂-,
-CH₂OCH₂CHFCF₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-,
-CH₂OCF₂CHFOCF₂CF₂CF₂-C(O)NH-CH₂-,
-CF₂-CH₂OCF₂CHFOCF₂CF₂CF₂-C(O)NH-CH₂-,
-CH₂-,
-(CH₂)₂-,
-(CH₂)₃-,
-(CH₂)₄-,
-(CH₂)₅-,
-(CH₂)₆-,
-CF₂-,
-(CF₂)₂-,
-CF₂-CH₂-,
-CF₂-(CH₂)₂-,
-CF₂-(CH₂)₃-,
-CF₂-(CH₂)₄-,
-CF₂-(CH₂)₅-,
-CF₂-(CH₂)₆-,
-CONH-,
-CONH-CH₂-,
-CONH-(CH₂)₂-,
-CONH-(CH₂)₃-,
-CONH-(CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CON(CH₃)-(CH₂)₃-,
-CON (Ph) -(CH₂)₃-, wherein Ph means phenyl,
-CON(CH₃)-(CH₂)₆-,
-CON (Ph) -(CH₂)₆-, wherein Ph means phenyl,
-CF₂-CON(CH₃)-(CH₂)₃-,
-CF₂-CON(Ph) -(CH₂)₃-, wherein Ph means phenyl,
-CF₂-CON(CH₃)-(CH₂)₆-,
-CF₂-CON(Ph) -(CH₂)₆-, wherein Ph means phenyl,
-CONH-(CH₂)₂NH(CH₂)₃-,
-CONH-(CH₂)₆NH(CH₂)₃-,
-CH₂O-CONH-(CH₂)₃-,
-CH₂O-CONH-(CH₂)₆-,
-OCH₂-,
-O(CH₂)₃-,
-OCFHCF₂- .

In particular, X⁷ is more preferably
-CH₂OCF₂CHFOCF₂CF₂CF₂-C(O)NH-CH₂-,
-CF₂-CH₂OCF₂CHFOCF₂CF₂CF₂-C(O)NH-CH₂-,
-CONH-,
-CONH-CH₂-,
-CONH-(CH₂)₂-,
-CONH-(CH₂)₃-,
-CONH-(CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CON(CH₃)-(CH₂)₃-,
-CON (Ph) -(CH₂)₃-, wherein Ph means phenyl,
-CON (CH₃)-(CH₂)₆-,
-CON (Ph) -(CH₂)₆-, wherein Ph means phenyl,
-CF₂-CON(CH₃)-(CH₂)₃-,
-CF₂-CON(Ph) -(CH₂)₃-, wherein Ph means phenyl,
-CF₂-CON(CH₃)-(CH₂)₆-,
-CF₂-CON(Ph) -(CH₂)₆-, wherein Ph means phenyl,
-CONH-(CH₂)₂NH(CH₂)₃-,
-CONH-(CH₂)₆NH(CH₂)₃-.

In a more preferable embodiment, X⁷ represents X^{e'}. X^{e}' is as defined above.

In one embodiment, X^{e}' is a single bond. In the present embodiment, PFPE and a group having a binding ability to the base material (namely, group in parentheses with δ1 in formula (D)) are directly bonded. It is considered that such a structure is included to thereby strengthen a bonding force between PFPE and the group in parentheses with δ1. It is also considered that a carbon atom (namely, a carbon atom bonded to R^{d}, R^{e} and R^{f} or R^{d"}, R^{e"} and R^{f"} in the group in parentheses with δ1) directly bonded to PFPE is less biased in charge and, as a result, a nucleophilic reaction or the like hardly occurs at the carbon atom and the compound is stably bonded to the base material. Such a structure has the advantage of being capable of more enhancing friction durability of a layer formed by the PFPE silane compound.

In the formulae, R^{d}, at each occurrence, each independently represents -Z⁴-CR⁸¹ₚ₂R⁸²_{q2}R⁸³ᵣ₂.

In the formulae, Z⁴, at each occurrence, each independently represents an oxygen atom or a divalent organic group.

Z⁴ is preferably a C₁₋₆ alkylene group, -(CH₂)_{g}-O-(CH₂)ₕ-, wherein g is an integer of 0 to 6, for example, an integer of 1 to 6, and h is an integer of 0 to 6, for example, an integer of 1 to 6, or -phenylene-(CH₂)ᵢ-, wherein i is an integer of 0 to 6, more preferably a C₁₋₃ alkylene group. Such a group is optionally substituted with one or more substituents selected from, for example, a fluorine atom, a C₁₋₆ alkyl group, a C₂₋₆ alkenyl group and a C₂₋₆ alkynyl group.

In the formulae, R⁸¹, at each occurrence, each independently represents R^{d'}. R^{d'} is as defined for R^{d}.

The number of C linearly linked via a Z⁴ group is at most 5 in R^{d}. That is, in the case where at least one R⁸¹ is present in R^{d}, two or more C atoms linearly linked via a Z⁴ group are present in R^{d}, and the number of such C atoms linearly linked via a Z⁴ group is at most 5. Herein, the "number of C atoms linearly linked via a Z⁴ group in R^{d"} is equal to the number of repeating units of -Z⁴-C- linearly linked in R^{d}.

In a preferable embodiment, the "number of C atoms linearly linked via a Z⁴ group in R^{d"} is 1 (left formula) or 2 (right formula) in all chains, as represented below.

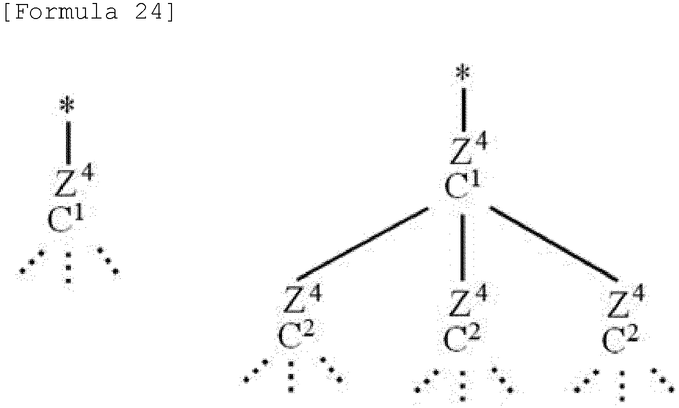

In one embodiment, the number of C atoms linearly linked via a Z⁴ group in R^{d} is 1 or 2, preferably 1.

In the formulae, R⁸², at each occurrence, each independently represents -Y-SiR⁸⁵ₙ₂R⁸⁶₃₋ₙ₂.

Y, at each occurrence, each independently represents a divalent organic group.

In a preferable embodiment, Y is a C₁₋₆ alkylene group, - (CH₂)_{g'}-O-(CH₂)_{h'}-, wherein g' is an integer of 0 to 6, for example, an integer of 1 to 6, and h' is an integer of 0 to 6, for example, an integer of 1 to 6, or -phenylene-(CH₂)_{i'}-, wherein i' is an integer of 0 to 6. Such a group is optionally substituted with one or more substituents selected from, for example, a fluorine atom, a C₁₋₆ alkyl group, a C₂₋₆ alkenyl group and a C₂₋₆ alkynyl group.

In one embodiment, Y may be a C₁₋₆ alkylene group or - phenylene-(CH₂)_{i'}-. In the case where Y is any of the above groups, light resistance, in particular, ultraviolet resistance can be more enhanced.

R⁸⁵, at each occurrence, each independently represents a hydroxyl group or a hydrolyzable group.

Examples of the "hydrolyzable group" include the same as in formula (C).

Preferably, R⁸⁵ is -OR, wherein R represents a substituted or unsubstituted C₁₋₃ alkyl group, more preferably an ethyl group or a methyl group, in particular, a methyl group.

R⁸⁶, at each occurrence, each independently represents a hydrogen atom or a lower alkyl group. The lower alkyl group is preferably an alkyl group having 1 to 20 carbon atoms, more preferably an alkyl group having 1 to 6 carbon atoms, further preferably a methyl group.

n2 with respect to a (-Y-SiR⁸⁵ₙ₂R⁸⁶₃₋ₙ₂) unit or with respect to a (-Y-SiR^{85"}ₙ₂R^{86"}₃₋ₙ₂) unit independently represents an integer of 0 to 3, preferably an integer of 1 to 3, more preferably 2 or 3, particularly preferably 3. R^{85"} and R^{86"} are described below.

R⁸³, at each occurrence, each independently represents a hydrogen atom, a hydroxyl group or a lower alkyl group, preferably a hydrogen atom or a lower alkyl group. The lower alkyl group is preferably an alkyl group having 1 to 20 carbon atoms, more preferably an alkyl group having 1 to 6 carbon atoms, further preferably a methyl group.

In the formulae, p2, at each occurrence, is each independently an integer of 0 to 3; q2, at each occurrence, is each independently an integer of 0 to 3; and r2, at each occurrence, is each independently an integer of 0 to 3, provided that the sum of p2, q2 and r2 with respect to (-Z⁴-CR⁸¹ₚ₂R⁸²_{q2}R⁸³ᵣ₂) or with respect to (-Z⁴-CR⁸¹ₚ₂R^{82"}_{q2}R⁸³ᵣ₂) is 3. R^{82"} is described below.

In a preferable embodiment, q2 in R^{d}' (R^{d} in the case where no R^{d}' is present) at an end of R^{d} is preferably 2 or more, for example, 2 or 3, more preferably 3.

In a preferable embodiment, at least one end of R^{d} may be -C(-Y-SiR⁸⁵ₙ₂R⁸⁶₃₋ₙ₂)₂ (specifically, C(-Y-SiR⁸⁵ₙ₂R⁸⁶₃₋ₙ₂)₂R⁸³) or -C (-Y-SiR⁸⁵ₙ₂R⁸⁶₃₋ₙ₂) ₃, preferably -C(-Y-SiR⁸⁵ₙ₂R⁸⁶₃₋ₙ₂)₃. Here, n2 is an integer of 1 to 3. In the formulae, a (-Y-SiR⁸⁵ₙ₂R⁸⁶₃₋ₙ₂) unit is preferably (-Y-SiR⁸⁵₃). In a further preferable embodiment, all ends of R^{d} may be each -C(-Y-SiR⁸⁵ₙ₂R⁸⁶₃₋ₙ₂)₃, preferably -C(-Y-SiR⁸⁵₃)₃.

In one embodiment, an end of a group represented by (CR^{d}ₖ₂R^{e}ₗ₂R^{f}ₘ₂) is C(-Y-SiR⁸⁵ₙ₂R⁸⁶₃₋ₙ₂)₂R^{f}, C(-Y-SiR⁸⁵ₙ₂R⁸⁶₃₋ₙ₂)₂R⁸³ or C (-Y-SiR⁸⁵ₙ₂R⁸⁶₃₋ₙ₂) ₃, preferably C(-Y-SiR⁸⁵ₙ₂R⁸⁶₃₋ₙ₂)₃. Here, n2 is an integer of 1 to 3. In the formulae, a (-Y-SiR⁸⁵ₙ₂R⁸⁶₃₋ₙ₂) unit is preferably (-Y-SiR⁸⁵₃). In a further preferable embodiment, all ends of the group may be each - C(-Y-SiR⁸⁵ₙ₂R⁸⁶₃₋ₙ₂)₃, preferably -C(-Y-SiR⁸⁵₃)₃.

In the formulae, R^{d"}, at each occurrence, each independently represents -Z⁴-CR⁸¹ₚ₂R^{82"}_{q2}R⁸³ᵣ₂. Z⁴, R⁸¹, R⁸³, p2, q2 and r2 are as defined above. R^{82"}, at each occurrence, each independently represents -Y-SiR^{85"}ₙ₂R^{86"}₃₋ₙ₂. Here, Y and n2 are as defined above. R^{85"} and R^{86"} are as defined for R⁸⁵ and R⁸⁶, respectively.

In a preferable embodiment, q2 in R^{d}' (R^{d"} in the case where no R^{d}' is present) at an end of R^{d"} is preferably 2 or more, for example, 2 or 3, more preferably 3.

In a preferable embodiment, at least one end of R^{d"} may be -C(-Y-SiR^{85"}ₙ₂R^{86"}₃₋ₙ₂)₂ (specifically, -C(-Y-SiR^{85"}ₙ₂R^{86"}₃₋ₙ₂)₂R⁸³) or -C(-Y-SiR^{85"}ₙ₂R^{86"}₃₋ₙ₂)₃, preferably -C(-Y-SiR^{85"}ₙ₂R^{86"}₃₋ₙ₂)₃. Here, n2 is an integer of 1 to 3. In the formulae, a (-Y-SiR^{85"}ₙ₂R^{86"}₃₋ₙ₂) unit is preferably (-Y-SiR^{85"}₃). In a further preferable embodiment, all ends of R^{d} may be each -C(-Y-SiR^{85"}ₙ₂R^{86"}₃₋ₙ₂)₃, preferably -C(-Y-SiR^{85"}₃)₃.

In one embodiment, an end of a group represented by (CR^{d"}ₖ₂R^{e"}ₗ₂R^{f"}ₘ₂) is C(-Y-SiR^{85"}ₙ₂R^{86"}₃₋ₙ₂)₂R^{f"}, C(-Y-SiR^{85"}ₙ₂R^{86"}₃₋ₙ₂)₂R⁸³ or C(-Y-SiR^{85"}ₙ₂R^{86"}₃₋ₙ₂)₃, preferably C(-Y-SiR^{85"}ₙ₂R^{86"}₃₋ₙ₂)₃. Here, n2 is an integer of 1 to 3. In the formulae, a (-Y-SiR^{85"}ₙ₂R^{86"}₃₋ₙ₂) unit is preferably (-Y-SiR^{85"}₃). In a further preferable embodiment, all ends of the group may be each C(-Y-SiR^{85"}ₙ₂R^{86"}₃₋ₙ₂)₃, preferably C(-Y-SiR^{85"}₃)₃.

In the formulae, R^{e}, at each occurrence, each independently represents -Y-SiR⁸⁵ₙ₂R⁸⁶₃₋ₙ₂. Here, Y, R⁸⁵, R⁸⁶ and n2 are as defined for described in R⁸².

In the formulae, R^{e"}, at each occurrence, each independently represents -Y-SiR^{85"}ₙ₂R^{86"}₃₋ₙ₂. Here, R^{85"}, R^{86"}, Y, and n2 are as defined above.

In the formulae, R^{f}, at each occurrence, each independently represents a hydrogen atom, a hydroxyl group or a lower alkyl group. Preferably, R^{f}, at each occurrence, each independently represents a hydrogen atom or a lower alkyl group. The lower alkyl group is preferably an alkyl group having 1 to 20 carbon atoms, more preferably an alkyl group having 1 to 6 carbon atoms, further preferably a methyl group.

In the formulae, R^{f"} is as defined for R^{f}.

In the formulae, k2, at each occurrence, is each independently an integer of 0 to 3; 12, at each occurrence, is each independently an integer of 0 to 3; and m2, at each occurrence, is each independently an integer of 0 to 3, provided that the sum of k2, l2 and m2 is 3.

In one embodiment, at least one k2 is 2 or 3, preferably 3.

In one embodiment, k2 is 2 or 3, preferably 3.

In one embodiment, 12 is 2 or 3, preferably 3.

In formula (D), one or more groups represented by -Y-SiR⁸⁵ and one or more groups represented by -Y-SiR^{85"} are present. More preferably, one or more carbon atoms bonded to two or more -Y-SiR⁸⁵ are present, and one or more carbon atoms bonded to two or more -Y-SiR^{85"} are present. That is, one or more groups represented by -C-(Y-SiR⁸⁵ₙ₂R⁸⁶₃₋ₙ₂)₂ and one or more groups represented by -C-(Y-SiR^{85"}ₙ₂R^{86"}₃₋ₙ₂)₂, wherein n2 is an integer of 1 to 3, are preferably present in formula (D).

In formula (D), n2 is an integer of 1 to 3 and at least one q2 is 2 or 3, or at least one 12 is 2 or 3.

In formula (D), at least two -Y-SiR⁸⁵ₙ₂R⁸⁶₃₋ₙ₂ groups or -Y-SiR^{85"}ₙ₂R^{86"}₃₋ₙ₂ groups are preferably present. In formula (D), one or more -Y-SiR⁸⁵ₙ₂R⁸⁶₃₋ₙ₂ groups and one or more -Y-SiR^{85"}ₙ₂R^{86"}₃₋ₙ₂ groups are more preferably present. That is, a group containing -SiR⁸⁵ and a group containing -SiR^{85"} are preferably present at each of both ends of a molecular backbone of the PFPE-containing silane compound.

The compound represented by formula (D) can be produced by combining known methods.

In one embodiment, the PFPE-containing silane compound is a compound represented by formula (A).

In one embodiment, the PFPE-containing silane compound is a compound represented by formula (B).

In one embodiment, the PFPE-containing silane compound is a compound represented by formula (C).

In one embodiment, the PFPE-containing silane compound is a compound represented by formula (D).

In one embodiment, the PFPE-containing silane compound is represented by formula (A), (C) or (D).

In one embodiment, the PFPE-containing silane compound has two or more, preferably three or more Si atoms each having a hydroxyl group or a hydrolyzable group at at least one end.

The PFPE-containing silane compound may have a number average molecular weight of 5 × 10² to 1 × 10⁵, without any limitation. In particular, the compound preferably has a number average molecular weight of 2,000 to 30,000, more preferably 2,500 to 12,000, further preferably 3,000 to 6,000. In the present invention, the number average molecular weight is defined as a value obtained by ¹⁹F-NMR measurement.

The PFPE-containing unsaturated compound is a PFPE group-containing compound having a carbon-carbon double bond at each of both molecular ends.

The PFPE-containing unsaturated compound is preferably a compound represented by the following formula (I).

CH₂=CH-R^{k1}-PFPE-R^{k1}-CH=CH₂ (I)

In formula (I), PFPE is as defined above.

In formula (I), R^{k1}, at each occurrence, each independently represents a single bond or a divalent organic group.

R^{k1} is understood to be a linker which links a perfluoro(poly)ether portion (namely, -PFPE- portion) mainly providing water-repellency, surface lubricity, and the like, and an alkenyl group. Accordingly, R^{k1} may be a single bond or any organic group as long as the PFPE-containing compound may be stably present. Herein, a left portion and a right portion of R^{k1} are bonded to the group represented by PFPE and the -CH=CH₂ portion of formula (I), respectively.

In one embodiment, R^{k1} (provided that such a group is divalent) may have the same meaning as X^{e} with respect to the PFPE-containing silane compound.

R^{k1} is understood to be a linker which links a perfluoro(poly)ether portion (namely, -PFPE- portion) mainly providing water-repellency, surface lubricity, and the like, and an alkenyl group. Accordingly, R^{k1} may be a single bond or any organic group as long as the PFPE-containing compound may be stably present.

In another embodiment, R^{k1} may be X^{e}. X^{e} represents a single bond or a divalent organic group, preferably represents a single bond or a divalent organic group having at least one selected from the group consisting of -C₆H₄-(namely, -phenylene-, hereinafter, representing a phenylene group), -CO- (carbonyl group), -NR⁴- and -SO₂-. R⁴ each independently represents a hydrogen atom, a phenyl group, or a C₁₋₆ alkyl group (preferably a methyl group), preferably represents a hydrogen atom or a methyl group. Such -C₆H₄-, -CO-, -NR⁴- or -SO₂- is preferably contained in a molecular backbone of the PFPE-containing unsaturated compound. The molecular backbone here represents a relatively longest binding chain in a molecule of the PFPE-containing unsaturated compound.

X^{e} more preferably represents a single bond or a divalent organic group having at least one selected from the group consisting of -C₆H₄-, -CONR⁴-, -CONR⁴-C₆H₄-, -CO-, -CO-C₆H₄-, -SO₂NR⁴-, -SO₂NR⁴-C₆H₄-, -SO₂-, and -SO₂-C₆H₄-. Such -C₆H₄-, -CONR⁴-, -CONR⁴-C₆H₄-, -CO-, -CO-C₆H₄-, -SO₂NR⁴-, -SO₂NR⁴-C₆H₄-, -SO₂-, or -SO₂-C₆H₄- is preferably contained in a molecular backbone of the PFPE-containing unsaturated compound.

Examples of R^{k1} are not limited, and include a divalent group represented by the following formula:

- (R³¹)_{p'}-(X^{a})_{q'}-

wherein:
R³¹ represents a single bond, -(CH₂)_{s'}-, or an o-, m- or p-phenylene group, preferably represents -(CH₂)_{s'}-,
s' is an integer of 1 to 20, preferably an integer of 1 to 6, more preferably an integer of 1 to 3, still more preferably 1 or 2,
X^{a} represents, -(X^{b})_{l'}-,
X^{b}, at each occurrence, each independently represents a group selected from the group consisting of -O-, -S-, o-, m- or p-phenylene group, -C(O)O-, -Si(R³³)₂-, - (Si(R³³)₂O)_{m'}-Si(R³³)₂-, -CONR³⁴-, -O-CONR³⁴-, -NR³⁴- and -(CH₂)_{n'}-,
R³³, at each occurrence, each independently represents a phenyl group, a C₁₋₆ alkyl group or a C₁₋₆ alkoxy group, preferably represents a phenyl group or a C₁₋₆ alkyl group, more preferably represents a methyl group,
R³⁴, at each occurrence, each independently represents a hydrogen atom, a phenyl group, or a C₁₋₆ alkyl group (preferably a methyl group),
m', at each occurrence, is each independently an integer of 1 to 100, preferably an integer of 1 to 20,
n', at each occurrence, is each independently an integer of 1 to 20, preferably an integer of 1 to 6, more preferably an integer of 1 to 3,
l' is an integer of 1 to 10, preferably an integer of 1 to 5, more preferably an integer of 1 to 3,
p' is 0 or 1, and
q' is 0 or 1,
provided that at least one of p' and q' is 1, and the occurrence order of the respective repeating units in parentheses with p' or q' is not limited. Here, R³¹ and X^{a} (typically, any hydrogen atom in R³¹ and X^{a}) are each optionally substituted with one or more substituents selected from a fluorine atom, a C₁₋₃ alkyl group and a C₁₋₃ fluoroalkyl group.

In one embodiment, l' is 1.

Preferably, R^{k1} is -(R₃₁)_{p'}-(X^{a})_{q'}-R³²-. R³² represents a single bond, -(CH₂)_{t'}-, or an o-, m- or p-phenylene group, preferably -(CH₂)_{t'}-. Here, t' is an integer of 1 to 20, preferably an integer of 2 to 6, more preferably an integer of 2 to 3. In one embodiment, t' is an integer of 1 to 6, more preferably an integer of 1 to 3, for example, 1 or 2, more specifically 1. Here, R³² (typically, any hydrogen atom in R³²) is optionally substituted with one or more substituents selected from a fluorine atom, a C₁₋₃ alkyl group and a C₁₋₃ fluoroalkyl group.

Preferably, R^{k1} may be
a single bond,
a C₁₋₂₀ alkylene group,
-R³¹-X^{c}-R³²-, or
-X^{d}-R³²-
wherein R³¹ and R³² are as defined above. Herein, such an alkylene group is a group having a -(C_{δ}H_{2δ})- structure, and is optionally substituted or unsubstituted and is optionally linear or branched.

More preferably, R^{k1} is
a single bond,
a C₁₋₂₀ alkylene group,
- (CH₂)_{s'}-X^{c}-,
- (CH₂)_{s'}-X^{c}-(CH₂)_{t'}-
-X^{d}-, or
-X^{d}-(CH₂)_{t'}-
wherein s' and t' are as defined above.

Further preferably, R^{k1} is
-X^{f}-,
a -X^{f}-C₁₋₂₀ alkylene group,
-X^{f}-(CH₂)_{s'}-X^{c}-,
-X^{f}-(CH₂)_{s'}-X^{c}-(CH₂)_{t'}-
-X^{f}-X^{d}-, or
-X^{f}-X^{d}-(CH₂)_{t'}-
wherein s' and t' are as defined above.

In the formulae, X^{f} is an alkylene group having 1 to 6 carbon atoms, preferably 1 to 4 carbon atoms, more preferably 1 to 2 carbon atoms, for example, a methylene group. Any hydrogen atom in X^{f} is optionally substituted with one or more substituents selected from a fluorine atom, a C₁₋₃ alkyl group and a C₁₋₃ fluoroalkyl group, and is preferably substituted. X^{f} may be linear or branched, and is preferably linear.

In the formulae, X^{c} represents
-O-,
-S-,
-C(O)O-,
-CONR³⁴-,
-O-CONR³⁴-,
-Si(R³³)₂-,
- (Si(R³³)₂O)_{m'}-Si(R³³)₂-,
-O-(CH₂)_{u'}-(Si(R³³)₂O)_{m'}-Si(R³³)₂-,
-O-(CH₂)_{u'}-Si(R³³)₂-O-Si(R³³)₂-CH₂CH₂-Si(R³³)₂-O-Si(R³³)₂-,
-O-(CH₂)_{u'}-Si(OCH₃)₂OSi(OCH₃)₂-,
-CONR³⁴-(CH₂)_{u'}-(Si(R³³)₂O)_{m'}-Si(R³³)₂-,
-CONR³⁴-(CH₂)_{u'}-N(R³⁴)-, or
-CONR³⁴-(o-, m- or p-phenylene) -Si (R³³)₂-
wherein R³³, R³⁴ and m' are as defined above, and
   u' is an integer of 1 to 20, preferably an integer of 2 to 6, more preferably an integer of 2 to 3. X^{c} is preferably -O-.

In the formulae, X^{d} represents
-S-,
-C(O)O-,
-CONR³⁴-,
-CONR³⁴-(CH₂)_{u'}-(Si(R³³)₂O)_{m'}-Si(R³³)₂-,
-CONR³⁴-(CH₂)_{u'}-N(R³⁴)-, or
-CONR³⁴-(o-, m- or p-phenylene)-Si(R³³)₂-
wherein each symbol is as defined above.

Particularly preferably, R^{k1} is a group represented by
-X^{f}-,
a -X^{f}-C₁₋₂₀ alkylene group,
-X^{f}-(CH₂)_{s'}-X^{c}-,
-X^{f}-(CH₂)_{s'}-X^{c}-(CH₂)_{t'}-
-X^{f}-X^{d}-, or
-X^{f}-X^{d}- (CH₂)_{t'}-
wherein X^{f}, s' and t' are as defined above;
   X^{c} represents -O-, or -CONR³⁴-,
   X^{d} represents -CONR³⁴-, and
   R³⁴, at each occurrence, each independently represents a hydrogen atom, a phenyl group, or a C₁₋₆ alkyl group (preferably a methyl group).

In one embodiment, R^{k1} is a group represented by
-X^{f}-(CH₂)_{s'}-X^{c}-,
-X^{f}-(CH₂)_{s'}-X^{c}-(CH₂)_{t'}-
-X^{f}-X^{d}-, or
-X^{f}-X^{d}-(CH₂)_{t'}-
wherein X^{f}, s' and t' are as defined above;
   X^{c} represents -O- or -CONR³⁴-,
   X^{d} represents -CONR³⁴-, and
   R³⁴, at each occurrence, each independently represents a hydrogen atom, a phenyl group or a C₁₋₆ alkyl group (preferably a methyl group).

In one embodiment, R^{k1} may be,
a single bond,
a C₁₋₂₀ alkylene group,
- (CH₂)_{s'}-X^{c}-(CH₂)_{t'}-, or
-X^{d}-(CH₂)_{t'}-
wherein each symbol is as defined above.

Preferably, R^{k1} is
a single bond,
C₁₋₂ alkylene group,
-(CH₂)_{s'}-O-(CH₂)_{t'}-,
-(CH₂)_{s'}-(Si(R³³)₂O)_{m'}-Si(R³³)₂-(CH₂)_{t'}-,
- (CH₂)_{s'}-O-(CH₂)_{u'}-(Si(R³³)₂O)_{m'}-Si(R³³)₂-(CH₂)_{t'}-, or
- (CH₂)_{s'}-O-(CH₂)_{t'}-Si(R³³)₂-(CH₂)_{u'}-Si(R³³)₂-(CᵥH₂ᵥ)-
wherein R³³, m', s', t' and u' are as defined above, and v is an integer of 1 to 20, preferably an integer of 2 to 6, more preferably an integer of 2 to 3.

In the formulae, -(CᵥH₂ᵥ)- is optionally linear or branched, and may be, for example, -CH₂-, -CH₂CH₂-, - CH₂CH₂CH₂-, -CH(CH₃)- or -CH(CH₃)CH₂-.

The R^{k1} group is optionally substituted with one or more substituents selected from a fluorine atom, a C₁₋₃ alkyl group and a C₁₋₃ fluoroalkyl group (preferably C₁₋₃perfluoroalkyl group).

In one embodiment, the R^{k1} group may be other than a - O-C₁₋₆ alkylene group.

In another embodiment, examples of the R^{k1} group include the following groups: 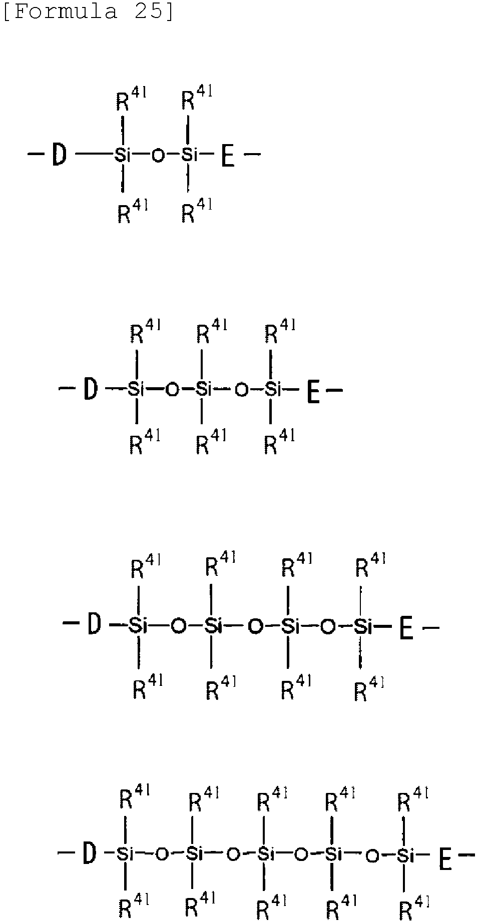 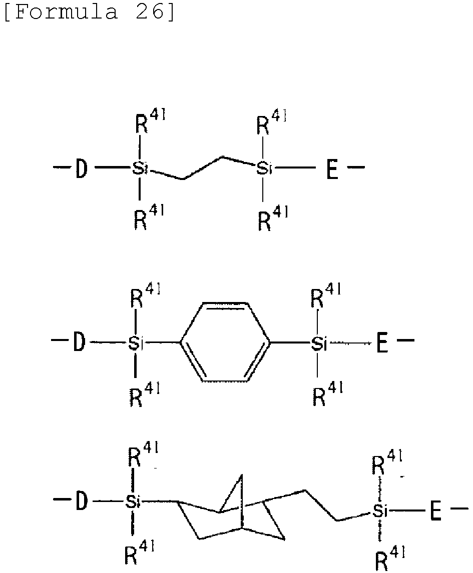 wherein R⁴¹ each independently represents a hydrogen atom, a phenyl group, an alkyl group having 1 to 6 carbon atoms, or a C₁₋₆ alkoxy group, preferably a methyl group;
D is a group selected from
   -CH₂O(CH₂)₂-,
   -CH₂O(CH₂)₃-,
   -CF₂O(CH₂)₃-,
   -(CH₂)₂-,
   - (CH₂)₃-,
   - (CH₂)₄-,
   -CONH-(CH₂)₃-,
   -CON(CH₃)-(CH₂)₃-,
   -CON(Ph)-(CH₂)₃-, wherein Ph means phenyl, and 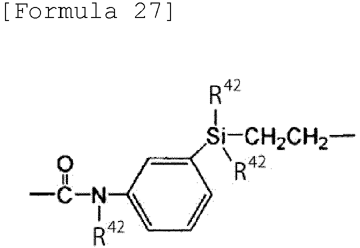
   wherein R⁴² each independently represents a hydrogen atom, a C₁₋₆ alkyl group or a C₁₋₆ alkoxy group, preferably a methyl group or a methoxy group, more preferably a methyl group;
E is -(CH₂)ₙₑ-(ne is an integer of 2 to 6),
D is bonded to PFPE¹ as a molecular backbone, and E is bonded to an opposite group to PFPE¹.

Specific examples of R^{k1} include:
a single bond,
-CH₂OCH₂-,
-CH₂O(CH₂)₂-,
-CH₂O(CH₂)₃-,
-CH₂O(CH₂)₆-,
-CF₂-CH₂-O-CH₂-,
-CF₂-CH₂-O-(CH₂)₂-,
-CF₂-CH₂-O-(CH₂)₃-,
-CF₂-CH₂-O-(CH₂)₆-,
-CH₂O(CH₂)₃Si(CH₃)₂OSi(CH₃)₂(CH₂)₂-,
-CH₂O(CH₂)₃Si(CH₃)₂OSi(CH₃)₂OSi(CH₃)₂(CH₂)₂-,
-CH₂O(CH₂)₃Si(CH₃)₂O(Si(CH₃)₂O)₂Si (CH₃)₂(CH₂)₂-,
-CH₂O(CH₂)₃Si(CH₃)₂O(Si(CH₃)₂O)₃Si(CH₃)₂(CH₂)₂-,
-CH₂O(CH₂)₃Si(CH₃)₂O(Si(CH₃)₂O)₁₀Si(CH₃)₂(CH₂)₂-,
-CH₂O(CH₂)₃Si(CH₃)₂O(Si(CH₃)₂O)₂₀Si(CH₃)₂(CH₂)₂-,
-CH₂OCF₂CHFOCF₂-,
-CH₂OCF₂CHFOCF₂CF₂-,
-CH₂OCF₂CHFOCF₂CF₂CF₂-,
-CH₂OCH₂CF₂CF₂OCF₂-,
-CH₂OCH₂CF₂CF₂OCF₂CF₂-,
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF₂CF₂-,
-CH₂OCH₂CF₂CF₂OCF(CF₃)CF₂OCF₂CF₂CF₂-,
-CH₂OCH₂CHFCF₂OCF₂-,
-CH₂OCH₂CHFCF₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-,
-CH₂OCF₂CHFOCF₂CF₂CF₂-C(O)NH-CH₂-,
-CH₂OCH₂(CH₂)₇CH₂Si(OCH₃)₂OSi(OCH₃)₂(CH₂)₂Si(OCH₃)₂OSi(OCH₃)₂(CH₂ )₂-,
-CH₂OCH₂CH₂CH₂Si(OCH₃)₂OSi(OCH₃)₂(CH₂)₃-,
-CH₂OCH₂CH₂CH₂Si(OCH₂CH₃)₂OSi(OCH₂CH₃)₂(CH₂)₃-,
-CH₂OCH₂CH₂CH₂Si(OCH₃)₂OSi(OCH₃)₂(CH₂)₂-,
-CH₂OCH₂CH₂CH₂Si(OCH₂CH₃)₂OSi(OCH₂CH₃)₂(CH₂)₂-,
- (CH₂)₂-Si(CH₃)₂-(CH₂)₂-,
-CH₂-,
- (CH₂)₂-,
- (CH₂)₃-,
- (CH₂)₄-,
- (CH₂)₅-,
- (CH₂)₆-,
-CF₂-,
-(CF₂)₂-,
-CF₂-CH₂-,
-CF₂-(CH₂)₂-,
-CF₂-(CH₂)₃-,
-CF₂-(CH₂)₄-,
-CF₂-(CH₂)₅-,
-CF₂-(CH₂)₆-,
-CO-,
-CONH-,
-CONH-CH₂-,
-CONH-(CH₂)₂-,
-CONH-(CH₂)₃-,
-CONH-(CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CON(CH₃)-(CH₂)₃-,
-CON(Ph)-(CH₂)₃-, wherein Ph means phenyl,
-CON(CH₃)-(CH₂)₆-,
-CON(Ph)-(CH₂)₆-, wherein Ph means phenyl,
-CF₂-CON(CH₃)-(CH₂)₃-,
-CF₂-CON(Ph)-(CH₂)₃-, wherein Ph means phenyl,
-CF₂-CON(CH₃)-(CH₂)₆-,
-CF₂-CON(Ph)-(CH₂)₆-, wherein Ph means phenyl,
-CONH-(CH₂)₂NH(CH₂)₃-,
-CONH-(CH₂)₆NH(CH₂)₃-,
-CH₂O-CONH-(CH₂)₃-,
-CH₂O-CONH-(CH₂)₆-,
-S-(CH₂)₃-,
-(CH₂)₂S(CH₂)₃-,
-CONH-(CH₂)₃Si(CH₃)₂OSi(CH₃)₂(CH₂)₂-,
-CONH-(CH₂)₃Si(CH₃)₂OSi(CH₃)₂OSi(CH₃)₂(CH₂)₂-,
-CONH-(CH₂)₃Si(CH₃)₂O(Si(CH₃)₂O)₂Si(CH₃)₂(CH₂)₂-,
-CONH-(CH₂)₃Si(CH₃)₂O(Si(CH₃)₂O)₃Si(CH₃)₂(CH₂)₂-,
-CONH-(CH₂)₃Si(CH₃)₂O(Si(CH₃)₂O)₁₀Si(CH₃)₂(CH₂)₂-,
-CONH-(CH₂)₃Si(CH₃)₂O(Si(CH₃)₂O)₂₀Si(CH₃)₂(CH₂)₂-,
-C(O)O-(CH₂)₃-,
-C(O)O-(CH₂)₆-,
-CH₂-O-(CH₂)₃-Si(CH₃)₂-(CH₂)₂-Si(CH₃)₂-(CH₂)₂-,
-CH₂-O-(CH₂)₃-Si(CH₃)₂-(CH₂)₂-Si(CH₃)₂-CH(CH₃)-,
-CH₂-O-(CH₂)₃-Si(CH₃)₂-(CH₂)₂-Si(CH₃)₂-(CH₂)₃-,
-CH₂-O-(CH₂)₃-Si(CH₃)₂-(CH₂)₂-Si(CH₃)₂-CH(CH₃)-CH₂-,
-OCH₂-,
-O(CH₂)₃-, and
-OCFHCF₂-

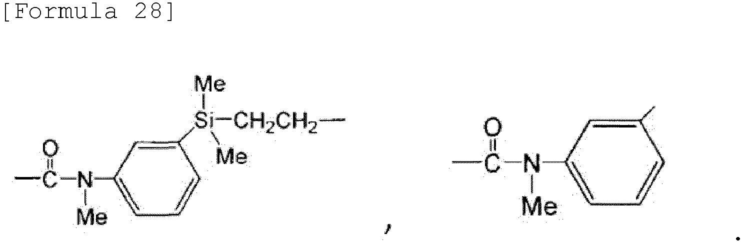

In particular, R^{k1} is preferably
-CH₂OCH₂-,
-CH₂O(CH₂)₂-,
-CH₂O(CH₂)₃-,
-CH₂O(CH₂)₆-,
-CF₂-CH₂-O-CH₂-,
-CF₂-CH₂-O-(CH₂)₂-,
-CF₂-CH₂-O-(CH₂)₃-,
-CF₂-CH₂-O-(CH₂)₆-,
-CH₂OCF₂CHFOCF₂-,
-CH₂OCF₂CHFOCF₂CF₂-,
-CH₂OCF₂CHFOCF₂CF₂CF₂-,
-CH₂OCH₂CF₂CF₂OCF₂-,
-CH₂OCH₂CF₂CF₂OCF₂CF₂-,
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF₂CF₂-,
-CH₂OCH₂CF₂CF₂OCF(CF₃)CF₂OCF₂CF₂CF₂-,
-CH₂OCH₂CHFCF₂OCF₂-,
-CH₂OCH₂CHFCF₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-,
-CH₂OCF₂CHFOCF₂CF₂CF₂-C(O)NH-CH₂-,
-CH₂-,
- (CH₂)₂-,
- (CH₂)₃-,
- (CH₂)₄-,
- (CH₂)₅-,
- (CH₂)₆-,
-CF₂-,
-(CF₂)₂-,
-CF₂-CH₂-,
-CF₂-(CH₂)₂-,
-CF₂-(CH₂)₃-,
-CF₂-(CH₂)₄-,
-CF₂-(CH₂)₅-,
-CF₂-(CH₂)₆-,
-CONH-,
-CONH-CH₂-,
-CONH-(CH₂)₂-,
-CONH-(CH₂)₃-,
-CONH-(CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CON(CH₃)-(CH₂)₃-,
-CON(Ph)-(CH₂)₃-, wherein Ph means phenyl,
-CON(CH₃)-(CH₂)₆-,
-CON(Ph)-(CH₂)₆-, wherein Ph means phenyl,
-CF₂-CON(CH₃)-(CH₂)₃-,
-CF₂-CON(Ph)-(CH₂)₃-, wherein Ph means phenyl,
-CF₂-CON(CH₃)-(CH₂)₆-,
-CF₂-CON(Ph)-(CH₂)₆-, wherein Ph means phenyl,
-CONH-(CH₂)₂NH(CH₂)₃-,
-CONH-(CH₂)₆NH(CH₂)₃-,
-CH₂O-CONH-(CH₂)₃-,
-CH₂O-CONH-(CH₂)₆-,
-OCH₂-,
-O(CH₂)₃-,
-OCFHCF₂-.

In the above list, examples of further preferable R^{k1} preferably include
-CH₂OCH₂-,
-CH₂O(CH₂)₂-,
-CH₂O(CH₂)₃-,
-CH₂O(CH₂)₆-,
-CF₂-CH₂-O-CH₂-,
-CF₂-CH₂-O-(CH₂)₂-,
-CF₂-CH₂-O-(CH₂)₃-,
-CF₂-CH₂-O-(CH₂)₆-,
-CH₂OCF₂CHFOCF₂-,
-CH₂OCF₂CHFOCF₂CF₂-,
-CH₂OCF₂CHFOCF₂CF₂CF₂-,
-CH₂OCH₂CF₂CF₂OCF₂-,
-CH₂OCH₂CF₂CF₂OCF₂CF₂-,
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF₂CF₂-,
-CH₂OCH₂CF₂CF₂OCF(CF₃)CF₂OCF₂CF₂CF₂-,
-CH₂OCH₂CHFCF₂OCF₂-,
-CH₂OCH₂CHFCF₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-,
-CH₂OCF₂CHFOCF₂CF₂CF₂-C(O)NH-CH₂-,
-CONH-,
-CONH-CH₂-,
-CONH-(CH₂)₂-,
-CONH-(CH₂)₃-,
-CONH-(CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CON(CH₃)-(CH₂)₃-,
-CON(Ph)-(CH₂)₃-, wherein Ph means phenyl,
-CON(CH₃)-(CH₂)₆-,
-CON(Ph)-(CH₂)₆-, wherein Ph means phenyl,
-CF₂-CON(CH₃)-(CH₂)₃-,
-CF₂-CON(Ph)-(CH₂)₃-, wherein Ph means phenyl,
-CF₂-CON(CH₃)-(CH₂)₆-,
-CF₂-CON(Ph)-(CH₂)₆-, wherein Ph means phenyl,
-CONH-(CH₂)₂NH(CH₂)₃-,
-CONH-(CH₂)₆NH(CH₂)₃-.

In one embodiment, R^{k1} represents x^{e}'. x^{e}' is a single bond, an alkylene group having 1 to 6 carbon atoms, -R⁵¹-C₆H₄-R⁵²-, -R⁵¹-CONR⁴-R⁵²-, -R⁵¹-CONR⁴-C₆H₄-R⁵²-, -R⁵¹-CO-R⁵²-, - R⁵¹-CO-C₆H₄-R⁵²-, -R⁵¹-SO₂NR⁴-R⁵²-, -R⁵¹-SO₂NR⁴-C₆H₄-R⁵²-, -R⁵¹-SO₂-R⁵²-, or-R⁵¹-SO₂-C₆H₄-R⁵²-. R⁵¹ and R⁵² each independently represent a single bond or an alkylene group having 1 to 6 carbon atoms, preferably a single bond or an alkylene group having 1 to 3 carbon atoms. R⁴ is as defined above. The alkylene group is substituted or unsubstituted, preferably unsubstituted. Examples of the substituent of the alkylene group may include a halogen atom, preferably a fluorine atom. The alkylene group is linear or branched, preferably linear.

In a preferable embodiment, X^{e}' may be a single bond,
-X^{f}-,
an alkylene group having 1 to 6 carbon atoms, preferably 1 to 3 carbon atoms
a -X^{f}-C₁₋₆ alkylene group, preferably a -X^{f}-C₁₋₃ alkylene group, more preferably
a -X^{f}-C₁₋₂ alkylene group,
-C₆H₄-R^{52'}-,
-CONR^{4'}-R^{52'}-,
-CONR^{4'}-C₆H₄-R^{52'}-,
-X^{f}-CONR^{4'}-R^{52'}-,
-X^{f}-CONR^{4'}-C₆H₄-R^{52'}-,
-CO-R^{52'}-,
-CO-C₆H₄-R^{52'}-,
-SO₂NR^{4'}-R^{52'}-,
-SO₂NR^{4'}-C₆H₄-R^{52'}-,
-SO₂-R^{52'}-,
-SO₂-C₆H₄-R^{52'}-,
-R^{51'}-C₆H₄-,
-R^{51'}-CONR^{4'}-,
-R^{51'}-CONR^{4'}-C₆H₄-,
-R^{51'}-CO-,
-R^{51'}-CO-C₆H₄-,
-R^{51'}-SO₂NR^{4'}-,
-R^{51'}-SO₂NR^{4'}-C₆H₄-,
-R^{51'}-SO₂-,
-R^{51'}-SO₂-C₆H₄-,
-C₆H₄-
-CONR^{4'}-,
-CONR^{4'}-C₆H₄-,
-X^{f}-CONR^{4'}-,
-X^{f}-CONR^{4'}-C₆H₄-,
-CO-,
-CO-C₆H₄-,
-SO₂NR^{4'}-,
-SO₂NR^{4'}-C₆H₄-,
-SO₂-, or
-SO₂-C₆H₄-
wherein R^{51'} and R^{52'} are each independently a linear alkylene group having 1 to 6 carbon atoms, preferably 1 to 3 carbon atoms, the alkylene group is substituted or unsubstituted, as described above, and examples of the substituent of the alkylene group may include a halogen atom, preferably a fluorine atom, and
   R^{4'} is a hydrogen atom or a methyl group.

In particular, X^{e'} may be preferably
-X^{f}-,
an alkylene group having 1 to 6 carbon atoms, preferably 1 to 3 carbon atoms, or
a -X^{f}-C₁₋₆ alkylene group, preferably a -X^{f}-C₁₋₃ alkylene group, more preferably
a -X^{f}-C₁₋₂ alkylene group,
-CONR^{4'}-R^{52'}-,
-CONR^{4'}-C₆H₄-R^{52'}-,
-X^{f}-CONR^{4'}-R^{52'}-,
-X^{f}-CONR^{4'}-C₆H₄-R^{52'}-,
-R^{51'}-CONR^{4'}-,
-R^{51'}-CONR^{4'}-C₆H₄-,
-CONR^{4'}-,
-CONR^{4'}-C₆H₄-,
-X^{f}-CONR^{4'}-,
-X^{f}-CONR^{4'}-C₆H₄-,
-R^{51'}-CONR^{4'}-, or
-R^{51'}-CONR^{4'}-C₆H₄-. In the formulae, X^{f}, R^{4'}, R^{51'} and R^{52'} are as defined above, respectively.

In particular, X^{e}' may be more preferably
-CONR^{4'}-R^{52'}-,
-CONR^{4'}-C₆H₄-R^{52'}-,
-X^{f}-CONR^{4'}-R^{52'}-,
-X^{f}-CONR^{4'}-C₆H₄-R^{52'}-,
-R^{51'}-CONR^{4'}-,
-R^{51'}-CONR^{4'}-C₆H₄-,
-CONR^{4'}-,
-CONR^{4'}-C₆H₄-,
-X^{f}-CONR^{4'}-, or
-X^{f}-CONR^{4'}-C₆H₄-.

Specific examples of X^{e}' in the present embodiment include
a single bond,
a perfluoroalkylene group having 1 to 6 carbon atoms (for example, -CF₂- and -(CF₂)₂-),
an alkylene group having 1 to 6 carbon atoms,
a -CF₂-C₁₋₆ alkylene group,
-CONH-,
-CONH-CH₂-,
-CONH-(CH₂)₂-,
-CONH-(CH₂)₃-,
-CF₂-CONH-,
-CF₂CONHCH₂-,
-CF₂CONH(CH₂)₂-,
-CF₂CONH(CH₂)₃-,
-CON(CH₃)-,
-CON(CH₃)-CH₂-,
-CON(CH₃)-(CH₂)₂-
-CON(CH₃)-(CH₂)₃-,
-CF₂-CON(CH₃)-,
-CF₂-CON(CH₃)CH₂-,
-CF₂-CON(CH₃)-(CH₂)₂-,
-CF₂-CON(CH₃)-(CH₂)₃-,
-CH₂-CONH-,
-CH₂-CONH-CH₂-,
-CH₂-CONH-(CH₂)₂-,
-CH₂-CONH-(CH₂)₃-,
-CF₂-CH₂-CONH-,
-CF₂-CH₂-CONH-CH₂-,
-CF₂-CH₂-CONH-(CH₂)₂-,
-CF₂-CH₂-CONH-(CH₂)₃-,
-CONH-C₆H₄-,
-CON(CH₃)-C₆H₄-,
-CH₂-CON(CH₃)-CH₂-,
-CH₂-CON(CH₃)-(CH₂)₂-,
-CH₂-CON(CH₃)-(CH₂)₃-,
-CON(CH₃)-C₆H₄-,
-CF₂-CONH-C₆H₄-,
-CF₂-CON(CH₃)-C₆H₄-,
-CF₂-CH₂-CON(CH₃)-CH₂-,
-CF₂-CH₂-CON(CH₃)- (CH₂)₂-,
-CF₂-CH₂-CON(CH₃)- (CH₂)₃-,
-CF₂-CON(CH₃)-C₆H₄-,
-CO-,
-CO-C₆H₄-,
-C₆H₄-,
-SO₂NH-,
-SO₂NH-CH₂-,
-SO₂NH-(CH₂)₂-,
-SO₂NH-(CH₂)₃-,
-SO₂NH-C₆H₄-,
-SO₂N(CH₃)-,
-SO₂N(CH₃)-CH₂-,
-SO₂N(CH₃)- (CH₂)₂-,
-SO₂N(CH₃)- (CH₂)₃-,
-SO₂N(CH₃)-C₆H₄-,
-SO₂-,
-SO₂-CH₂-,
-SO₂-(CH₂)₂-,
-SO₂-(CH₂)₃-, or
-SO₂-C₆H₄-.

In the above list, examples of preferable x^{e'} include a perfluoroalkylene group having 1 to 6 carbon atoms (for example, -CF₂- and -(CF₂)₂-),
an alkylene group having 1 to 6 carbon atoms,
a -CF₂-C₁₋₆ alkylene group,
-CONH-,
-CONH-CH₂-,
-CONH- (CH₂)₂-,
-CONH- (CH₂)₃-,
-CF₂CONH-,
-CF₂CONHCH₂-,
-CF₂CONH(CH₂)₂-,
-CF₂CONH(CH₂)₃-,
-CON (CH₃)-,
-CON (CH₃)-CH₂-,
-CON (CH₃)- (CH₂)₂-,
-CON (CH₃)- (CH₂)₃-,
-CF₂-CON(CH₃)-,
-CF₂-CON(CH₃)CH₂-,
-CF₂-CON(CH₃)- (CH₂)₂-,
-CF₂-CON(CH₃)- (CH₂)₃-,
-CH₂-CONH-,
-CH₂-CONH-CH₂-,
-CH₂-CONH-(CH₂)₂-,
-CH₂-CONH-(CH₂)₃-,
-CF₂-CH₂-CONH-,
-CF₂-CH₂-CONH-CH₂-,
-CF₂-CH₂-CONH-(CH₂)₂-,
-CF₂-CH₂-CONH-(CH₂)₃-,
-CONH-C₆H₄-,
-CON (CH₃)-C₆H₄-,
-CH₂-CON(CH₃)-CH₂-,
-CH₂-CON(CH₃)- (CH₂)₂-,
-CH₂-CON(CH₃)- (CH₂)₃-,
-CON (CH₃)-C₆H₄-
-CF₂-CONH-C₆H₄-,
-CF₂-CON(CH₃)-C₆H₄-,
-CF₂-CH₂-CON(CH₃)-CH₂-,
-CF₂-CH₂-CON(CH₃)- (CH₂)₂-,
-CF₂-CH₂-CON(CH₃)- (CH₂)₃-, and
-CF₂-CON(CH₃)-C₆H₄-.

In the above list, examples of more preferable X^{e'} include
-CONH-,
-CONH-CH₂-,
-CONH- (CH₂)₂-,
-CONH- (CH₂)₃-,
-CF₂CONH-,
-CF₂CONHCH₂-,
-CF₂CONH(CH₂)₂-,
-CF₂CONH(CH₂)₃-,
-CON (CH₃)-,
-CON (CH₃)-CH₂-,
-CON (CH₃)- (CH₂)₂-,
-CON (CH₃)- (CH₂)₃-,
-CF₂-CON(CH₃)-,
-CF₂-CON(CH₃)CH₂-,
-CF₂-CON(CH₃)- (CH₂)₂-,
-CF₂-CON(CH₃)- (CH₂)₃-,
-CH₂-CONH-,
-CH₂-CONH-CH₂-,
-CH₂-CONH-(CH₂)₂-,
-CH₂-CONH-(CH₂)₃-,
-CF₂-CH₂-CONH-,
-CF₂-CH₂-CONH-CH₂-,
-CF₂-CH₂-CONH-(CH₂)₂-,
-CF₂-CH₂-CONH-(CH₂)₃-,
-CONH-C₆H₄-,
-CON (CH₃)-C₆H₄-,
-CH₂-CON(CH₃)-CH₂-,
-CH₂-CON(CH₃)- (CH₂)₂-,
-CH₂-CON(CH₃)- (CH₂)₃-,
-CON (CH₃)-C₆H₄-
-CF₂-CONH-C₆H₄-,
-CF₂-CON(CH₃)-C₆H₄-,
-CF₂-CH₂-CON(CH₃)-CH₂-,
-CF₂-CH₂-CON(CH₃)- (CH₂)₂-,
-CF₂-CH₂-CON(CH₃)- (CH₂)₃-, or
-CF₂-CON(CH₃)-C₆H₄-.

In one embodiment, X^{e'} is a single bond. In the present embodiment, PFPE¹ and a group having a binding ability to the base material are directly bonded.

In still another embodiment, R^{k1} is a group represented by formula: - (R¹⁶)ₓ-(CFR¹⁷)_{y}-(CH₂)_{z}-. In the formula, x, y and z are each independently an integer of 0 to 10, the sum of x, y and z is 1 or more, and the occurrence order of the respective repeating units in parentheses is not limited in the formula.

In the formula, R¹⁶, at each occurrence, each independently represents an oxygen atom, phenylene, carbazolylene, -NR¹⁸-, wherein R¹⁸ represents a hydrogen atom or an organic group, or a divalent organic group. Preferably, R¹⁶ is an oxygen atom or a divalent polar group.

The "divalent polar group" is not limited, and examples thereof include -C(O)-, -C(=NR¹⁹)-, and -C(O)NR¹⁹-, wherein R¹⁹ represents a hydrogen atom or a lower alkyl group. The "lower alkyl group" is, for example, an alkyl group having 1 to 6 carbon atoms, such as a methyl group, an ethyl group, or a n-propyl group, and such a group is optionally substituted with one or more fluorine atoms.

In the formula, R¹⁷, at each occurrence, is each independently a hydrogen atom, a fluorine atom or a lower fluoroalkyl group, preferably a fluorine atom. The "lower fluoroalkyl group" is, for example, a fluoroalkyl group having 1 to 6 carbon atoms, preferably 1 to 3 carbon atoms, preferably a perfluoroalkyl group having 1 to 3 carbon atoms, more preferably a trifluoromethyl group or a pentafluoroethyl group, further preferably a trifluoromethyl group.

In this embodiment, R^{k1} is preferably a group represented by formula: -(O)ₓ-(CF₂)_{y}-(CH₂)_{z}-, wherein x, y and z are as defined above, and the occurrence order of the respective repeating units in parentheses is not limited in the formula.

Examples of the group represented by formula: -(O)ₓ-(CF₂)_{y}-(CH₂)_{z}- include any group represented by -(O)_{x'}-(CH₂)_{z"}-O-[(CH₂)_{z'''}-O-]_{z}, and -(O)_{x'}-(CF₂)_{y"}-(CH₂)_{z"}-O-[(CH₂)_{z‴}-O-]_{zʺʺ}, wherein x' is 0 or 1, y", z" and z‴ are each independently an integer of 1 to 10, and z"" is 0 or 1. Herein, a left end of such a group is bonded to PFPE.

In another preferable embodiment, R^{k1} is -O-CFR²⁰-(CF₂)_{e‴}-.

R²⁰ each independently represents a fluorine atom or a lower fluoroalkyl group. The lower fluoroalkyl group is, for example, a fluoroalkyl group having 1 to 3 carbon atoms, preferably a perfluoroalkyl group having 1 to 3 carbon atoms, more preferably a trifluoromethyl group or a pentafluoroethyl group, further preferably a trifluoromethyl group.

e‴ is each independently 0 or 1.

In one specific example, R²⁰ is a fluorine atom and e‴ is 1.

In still another embodiment, examples of the R^{k1} group include the following groups: 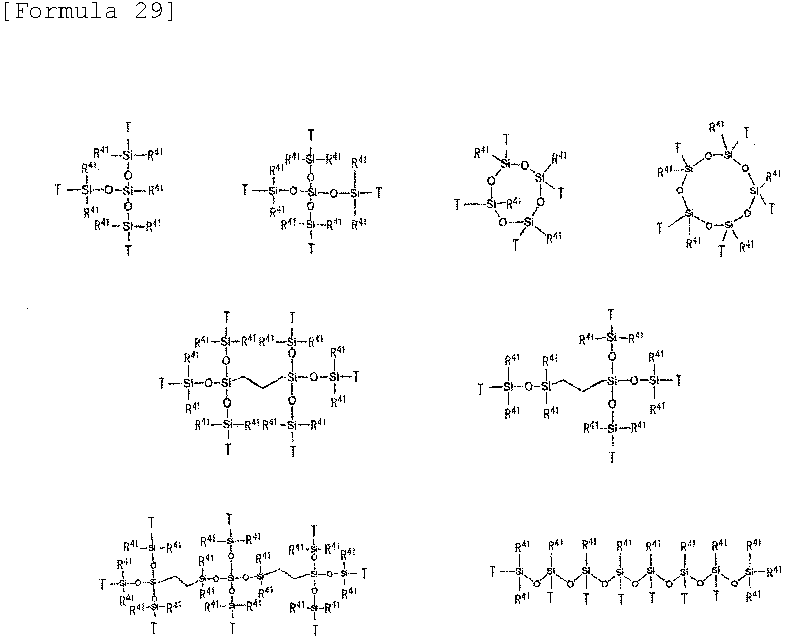 wherein
R⁴¹ each independently represents a hydrogen atom, a phenyl group, an alkyl group having 1 to 6 carbon atoms, or a C₁₋₆ alkoxy group, preferably a methyl group;
any number of the Ts in each R^{k1} group is the following group bonded to PFPE as a molecular backbone:
   -CH₂O(CH₂)₂-,
   -CH₂O(CH₂)₃-,
   -CF₂O(CH₂)₃-,
   -CH₂-,
   - (CH₂)₂-,
   - (CH₂)₃-,
   - (CH₂)₄-,
   -CONH- (CH₂)₃-,
   -CON (CH₃)- (CH₂)₃-,
   -CON (Ph) - (CH₂)₃-, wherein Ph means phenyl, or 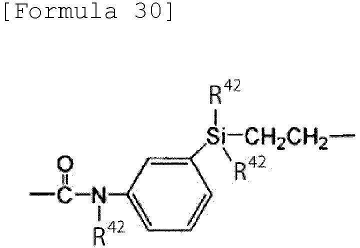
   wherein R⁴² each independently represents a hydrogen atom, a C₁₋₆ alkyl group or a C₁₋₆ alkoxy group, preferably a methyl group or a methoxy group, more preferably a methyl group,
   another of the Ts is -(CH₂)_{n"}- (n" is an integer of 2 to 6) bonded to an opposite group to PFPE as a molecular backbone, and the remaining of the Ts, if present, may be independently a methyl group, a phenyl group, a C₁₋₆ alkoxy group, or a radical scavenging group or an UV absorbing group.

The radical scavenging group is not limited as long as it can scavenge a radial generated by light irradiation, and examples thereof include a residue of benzophenones, benzotriazoles, benzoates, phenyl salicylates, crotonic acids, malonates, organoacrylates, hindered amines, hindered phenols, or triazines.

The UV absorbing group is not limited as long as it can absorb ultraviolet light, and examples thereof include a residue of benzotriazoles, hydroxybenzophenones, esters of substituted and unsubstituted benzoic acid or salicylic acid compounds, acrylates or alkoxy cinnamates, oxamides, oxanilides, benzoxazinones, and benzoxazoles.

In a preferable embodiment, examples of a preferable radical scavenging group or an UV absorbing group include

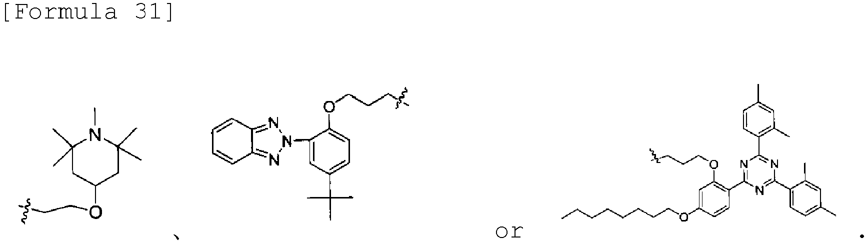

In one embodiment, examples of R^{k1} may include any group represented by -R^{k2}-CH₂-, -R^{k2}-OCH₂-, -R^{k2}-CH₂OCH₂-, or -R^{k2}-CO-NR¹-Y^{j2}-. A left portion of the formula of the divalent organic group (namely, R^{k2} portion) is bonded to PFPE.

In the embodiment, R^{k2} is a single bond or a divalent hydrocarbon group having 1 to 15 carbon atoms, and may contain an ether bond. Examples of the hydrocarbon group in R^{k2} may include an alkylene group or an alkylene group optionally containing ether oxygen. The alkylene group is optionally substituted or unsubstituted, as described above.

In one embodiment, R^{k2} is preferably a single bond. In another embodiment, examples of R^{k2} may include a divalent hydrocarbon group, preferably an alkylene group where any hydrogen atom is at least partially substituted with a fluorine atom, such as -CFH-, -CF₂-, -(CF₂)₂- or - (CF₂)₃-, specifically -CF₂-.

In the embodiment, Y^{j2} is -CH₂-, or an o, m or p-dimethylsilylphenylene group represented by the following formula. In the following formula, a phenylene group and a Si atom are bonded to a N atom, and a -CH=CH₂ group in formula (I), respectively.

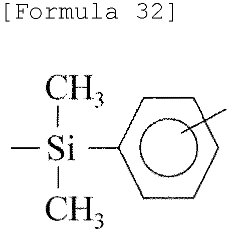

In the embodiment, R¹ is a hydrogen atom or a substituted or unsubstituted monovalent hydrocarbon group. The substituted or unsubstituted monovalent hydrocarbon group is preferably a monovalent hydrocarbon group having 1 to 12 carbon atoms, more preferably a monovalent hydrocarbon group having 1 to 10 carbon atoms. Specific examples of such a substituted or unsubstituted monovalent hydrocarbon group include alkyl groups such as a methyl group, an ethyl group, a propyl group, a butyl group, a hexyl group, a cyclohexyl group and an octyl group; aryl groups such as a phenyl group and a tolyl group; aralkyl groups such as a benzyl group and a phenylethyl group, or a monovalent hydrocarbon group where some or all hydrogen atoms are substituted with a halogen atom such as a fluorine atom. R¹ is preferably a hydrogen atom, a methyl group or a phenyl group.

In the embodiment, examples of the structure of a specific PFPE-containing unsaturated compound may include the following structures. In the following structures, PFPE and R^{k2} are as defined above.

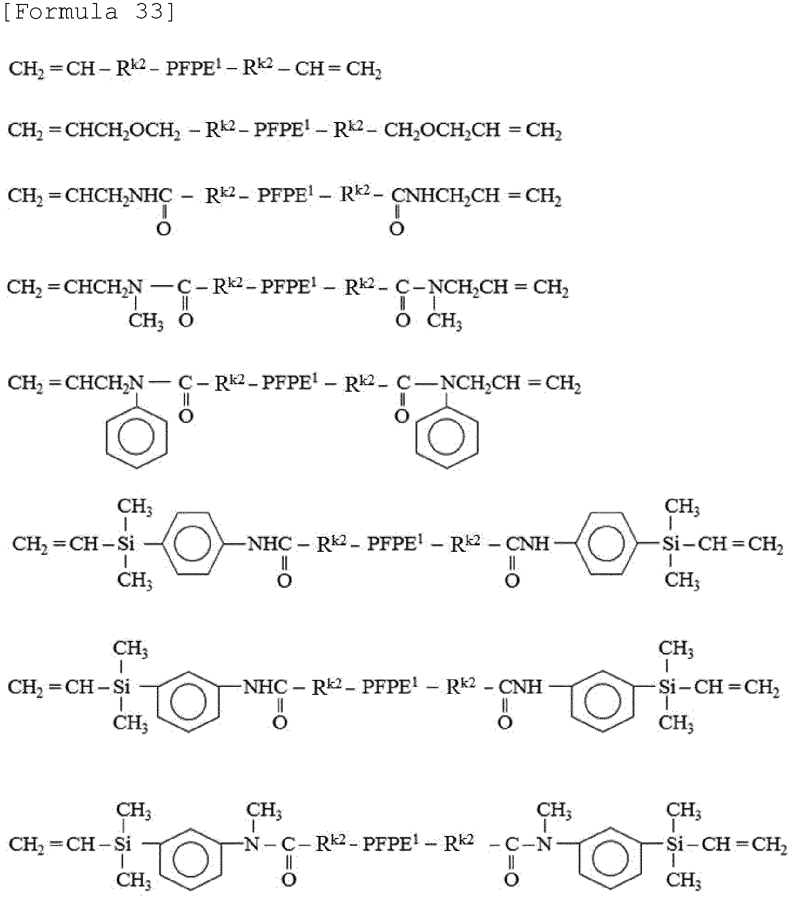

In one embodiment, the PFPE-containing compound is a PFPE-containing silane compound.

In one embodiment, the PFPE-containing compound is a PFPE-containing unsaturated compound.

The curable composition used in the present invention may further include a cross-linking agent.

The cross-linking agent is not limited as long as the agent is a compound having a portion which can undergo a crosslinking reaction (condensation reaction) or an addition reaction with the PFPE-containing compound (for example, PFPE-containing silane compound, specifically, a silane portion having a hydroxyl group or a hydrolyzable group bonded to a Si atom of the PFPE-containing silane compound, or a carbon-carbon double bond portion of the PFPE-containing unsaturated compound). The PFPE-containing compound and the cross-linking agent can be included, thereby improving physical properties (for example, tensile strength and elastic modulus) of a cured product obtained from the curable composition of the present invention.

The cross-linking agent is preferably at least one selected from the group consisting of an organosilicon compound having at least two -O-R^{g3} each bonded to a Si atom and an organosilicon compound having two or more hydrogen atoms each bonded to a silicon atom (Si-H) in one molecule. R^{g3} is described below.

In one embodiment, the cross-linking agent is an organosilicon compound having at least two -O-R^{g3} each bonded to a Si atom (hereinafter, also referred to as "cross-linking agent (1)"). In the formula, R^{g3}, at each occurrence, each independently represents a hydrogen atom or a monovalent organic group. The monovalent organic group means a carbon atom-containing group. Such a monovalent organic group is not limited, and examples thereof include a group where one hydrogen atom is further removed from a hydrocarbon group. The hydrocarbon group is as defined above.

The cross-linking agent has a structure different from the structure of the PFPE-containing silane compound (a) (specifically, PFPE-containing silane compound (a)).

Examples of the cross-linking agent (1) may include
• an organic compound where R^{g3} is a hydrogen atom, namely, an organosilicon compound having at least two silanol groups in one molecule, and
• any organosilicon compound represented by formulae (E3) to (E5) described below.

Organosilicon compound having at least two silanol groups in one molecule:
Such silanol groups are preferably present at both respective ends of a molecular backbone in the organosilicon compound. The molecular backbone here represents a relatively longest binding chain in a molecule of the organosilicon compound.

Examples of the compound having silanol groups at both respective ends of a molecular backbone may include a compound represented by the following formula (E1) or (E2).

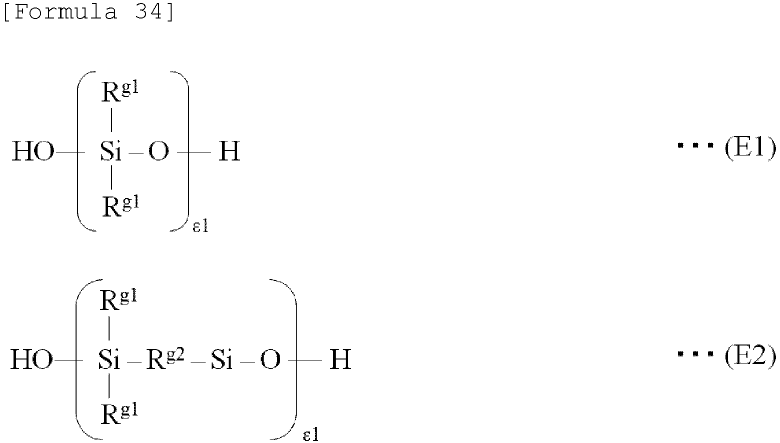

In formula (E1) or (E2), R^{g1}, at each occurrence, is each independently a substituted or unsubstituted monovalent hydrocarbon group having 1 to 8 carbon atoms. Specific examples of R^{g1} include alkyl groups such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group and a decyl group; cycloalkyl groups such as a cyclopentyl group, a cyclohexyl group and a cycloheptyl group; alkenyl groups such as a vinyl group, an allyl group, a propenyl group, an isopropenyl group, a butenyl group, an isobutenyl group, a hexenyl group and a cyclohexenyl group; aryl groups such as a phenyl group, a tolyl group, a xylyl group and a naphthyl group; aralkyl groups such as a benzyl group, a phenylethyl group and a phenylpropyl group; and groups where some or all hydrogen atoms of such a group are substituted with a halogen atom (for example, a chloromethyl group, a bromoethyl group, a chloropropyl group, a trifluoropropyl group and a nonafluorohexyl group).

In formula (E1) or (E2), R^{g2}, at each occurrence, is each independently a substituted or unsubstituted divalent hydrocarbon group having 1 to 20 carbon atoms, preferably 2 to 10 carbon atoms. Specific examples of R^{g2} include alkylene groups such as a methylene group, an ethylene group, a propylene group, a methylethylene group, a butylene group and a hexamethylene group; cycloalkylene groups such as a cyclohexylene group, arylene groups such as a phenylene group, a tolylene group, a xylylene group, a naphthylene group and a biphenylene group; a group where some or all hydrogen atoms of such a group are substituted with a halogen atom; and a combination of such a substituted or unsubstituted alkylene group and an arylene group. Among them, R^{g2} is preferably a methylene group, an ethylene group, a propylene group, a butylene group, a hexamethylene group, a cyclohexylene group or a phenylene group, and is particularly preferably an ethylene group, a propylene group, a butylene group or a phenylene group. Examples of the compound having silanol groups in a molecule include a resin compound including a bond of one unit of R^{g1}₃SiO_{1/2}, R^{g1}₂SiO, R^{g1}SiO_{3/2}, and SiO₂, or a combination of two or more kinds thereof, with a silanol group. Constituent units of the resin compound may be directly bonded or may be bonded via a di- or higher valent hydrocarbon group.

In formula (E1) or (E2), ε1, at each occurrence, is each independently an integer of 1 or more, and ε1 is preferably 2 or more, more preferably 5 or more, preferably 50 or less, more preferably 20 or less.

The organosilicon compound having at least two silanol groups in one molecule (specifically, compound represented by formula (E1) or (E2)) preferably has no PFPE structure in a molecular structure.

Any organosilicon compound represented by formula (E3), (E4) or (E5):

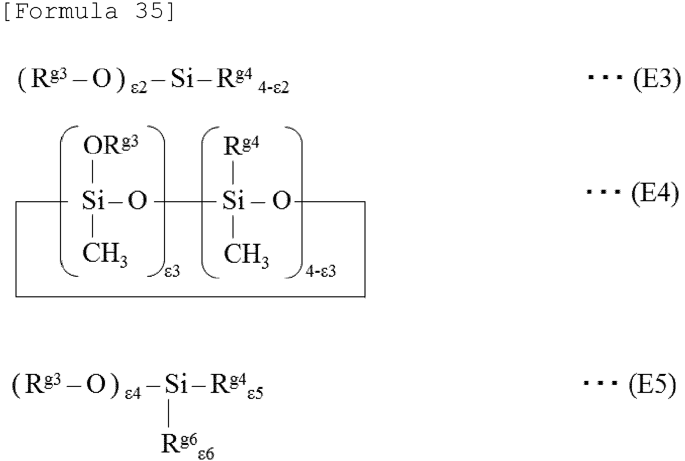

In formulae (E3) and (E4), R^{g3} is as defined above. R^{g3} is a portion which can react with a portion having a hydroxyl group or a hydrolyzable group bonded to a Si atom of the PFPE-containing silane compound represented by formula (A), (B), (C) or (D).

R^{g3} is preferably a monovalent organic group.

R^{g3}-, at each occurrence, is more preferably each independently CH₃-, C₂H₅-, C₃H₇-, CF₃CH₂-, CH₃CO-, CH₂=C(CH₃)-, CH₃CH₂C(CH₃)=N-, (CH₃)₂N-, (C₂H₅)₂N-, CH₂=C(OC₂H₅)-, (CH₃)₂C=C(OC₈H₁₇)-, or

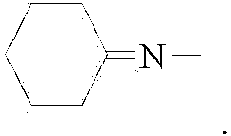

In formulae (E3) and (E4), R^{g4}, at each occurrence, is each independently a monovalent organic group. R^{g4} is preferably a substituted or unsubstituted monovalent hydrocarbon group, more preferably a substituted or unsubstituted monovalent hydrocarbon group having 1 to 12 carbon atoms. Specific examples of R^{g4} may include alkyl groups such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group and a decyl group; cycloalkyl groups such as a cyclopentyl group, a cyclohexyl group and a cycloheptyl group; aryl groups such as a phenyl group, a tolyl group, a xylyl group and a naphthyl group; aralkyl groups such as a benzyl group, a phenylethyl group and a phenylpropyl group; alkenyl groups such as a vinyl group, an allyl group, a propenyl group and a butenyl group; and groups where some or all hydrogen atoms of such a group are substituted with a halogen atom such as fluorine, chlorine or bromine (for example, a chloromethyl group, a bromoethyl group, a chloropropyl group, a trifluoropropyl group and a 3,3,4,4,5,5,6,6,6-nonafluorohexyl group).

In one embodiment, R^{g4} may be a group represented by the following general formula.

Rf¹-R^{g5}-

In the formulae, Rf¹ is a monovalent fluorinated polyether group. Examples of Rf¹ include one having a structure where CF₃O-, CF₃CF₂O-, CF₃CF₂CF₂O-, (CF₃)₂CFO-, CF₃CF₂CF₂CF₂O- or the like is bonded to a CF₂ end of PFPE above.

R^{g5} is a divalent organic group. The divalent organic group is as defined above.

R^{g5} may be a substituted or unsubstituted divalent hydrocarbon group optionally containing one or more of, for example, an oxygen atom, a nitrogen atom, a silicon atom and a sulfur atom, and an amide bond or a sulfonamide bond. The divalent hydrocarbon group preferably has 2 to 20 carbon atoms. Specific examples of a substituted or unsubstituted divalent hydrocarbon group not having any oxygen atom, nitrogen atom, silicon atom or sulfur atom interposed and not containing any amide bond or sulfonamide bond include alkylene groups such as an ethylene group, a propylene group, a methylethylene group, a butylene group and a hexamethylene group; cycloalkylene groups such as a cyclohexylene group; arylene groups such as a phenylene group, a tolylene group, a xylylene group, a naphthylene group and a biphenylene group; a combination of any alkylene group and any arylene group; and a group where some or all hydrogen atoms of such alkylene group and arylene group are substituted with a halogen atom.

The divalent hydrocarbon group can contain an oxygen atom in the form of -O-, a nitrogen atom in the form of - NR^{g51}- (R^{g51} is a hydrogen atom or an alkyl group or aryl group having 1 to 10 carbon atoms) or -N=, a silicon atom in the form of -SiR^{g52}R^{g53}- (R^{g52} and R^{g53}, at each occurrence, are each independently an alkyl group or aryl group having 1 to 10 carbon atoms), and/or a sulfur atom in the form of -S-. The divalent hydrocarbon group can contain an amide bond in the form of -C(=O)NR^{g51}- (R^{g51} is the same as described above) and/or a sulfonamide bond in the form of - SO₂NR^{g51}- (R^{g51} is the same as described above). Specific examples of such a divalent hydrocarbon group include the following. In the following formulae, Me represents a methyl group and Ph represents a phenyl group, and an Rf¹ group is bonded to a left portion (J in each formula) of each of the following formulae. 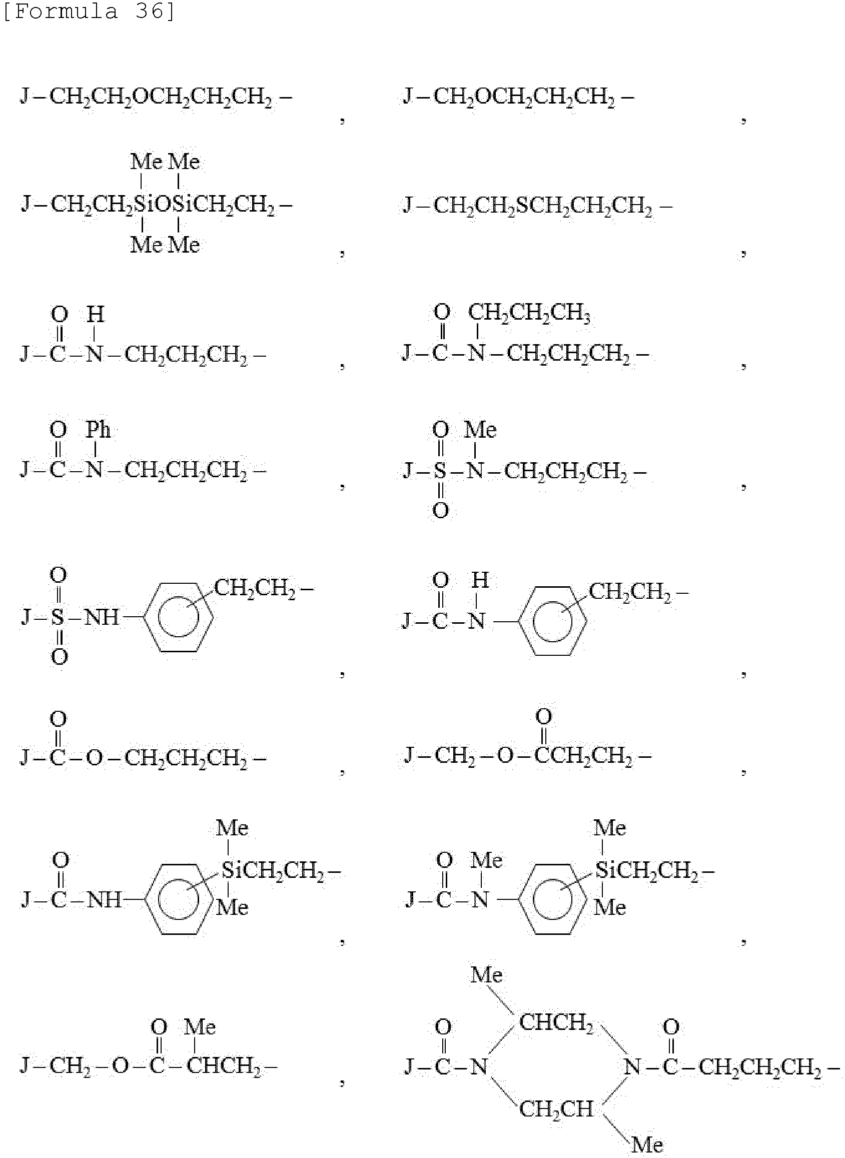 wherein J represents a bonding site.

In formulae (E3) and (E4), ε2, at each occurrence, is each independently 2 or 3, and each ε3, at each occurrence, is independently 2 or 3.

In formula (E5), R^{g3} and R^{g4} are as defined above. In formula (E5), R^{g6}-, at each occurrence, each independently represents R^{g8}-R^{g7}-.

R^{g7}, at each occurrence, each independently represents a single bond an oxygen atom or a divalent organic group. The divalent organic group is as described above.

R^{g7} is preferably an alkylene group having 1 to 10 carbon atoms or a group having 1 to 10 carbon atoms and containing a nitrogen atom or an oxygen atom in a main chain.

R^{g7} is more preferably
an alkylene group having 1 to 3 carbon atoms,
CH₂CH₂-NH-CH₂CH₂CH₂, or
CH₂-O-CH₂CH₂CH₂.

R^{g8} is a reactive functional group. R^{g8}, at each occurrence, is each independently preferably an amino group, an epoxy group, a methacrylic group, a vinyl group or a mercapto group, more preferably an amino group.

In formula (E5), ε4 is an integer of 2 or more, preferably 2 or 3, more preferably 3. In formula (E5), ε5 is an integer of 0 or more, preferably 0 or 1. In formula (E5), ε6 is 1 or 2, preferably 1, provided that the sum of ε4, ε5 and ε6 is 4.

In formula (E5), preferably ε4 is 2 or 3, ε5 is 0 or 1 and ε6 is 1 or 2, more preferably ε4 is 3, ε5 is 0 and ε6 is 1.

Preferably, the cross-linking agent (1) is any compound represented by formula (E3) or formula (E5), more preferably any compound represented by formula (E3).

In one embodiment, the cross-linking agent does not have any group represented by PFPE in a molecular chain.

In one embodiment, the molecular weight of the cross-linking agent is 1,000 or less, preferably 600 or less, more preferably 250 or less. The lower limit of the molecular weight of the cross-linking agent may be 50 or more or 100 or more.

In a preferable embodiment, the cross-linking agent (1) is at least one selected from the group consisting of tetraethoxysilane, tetratrimethoyxsilane, methyltriethoxysilane, methyltrimethoxysilane, dimethyldimethoxysilane, dimethyltrimethoxysilane, aminopropyltriethoxysilane, aminopropyltrimethoxysilane, tridecafluoro-n-octyltriethoxysilane and tridecafluoro-n-octyltrimethoxysilane.

The cross-linking agent (1) is preferably used in combination with the PFPE-containing silane compound. In such a case, a crosslinking reaction (condensation reaction) of -O-R^{g3} bonded to any Si atom of the cross-linking agent (1) and the hydroxyl group or hydrolyzable group bonded to any Si atom of the PFPE-containing silane compound can be made.

The curable composition of the present embodiment may include, for example, 0.1 parts by mass or more, specifically 0.3 parts by mass or more, and 30 parts by mass or less, specifically 10 parts by mass or less of the cross-linking agent (1) based on 100 parts by mass of the PFPE-containing silane compound. The curable composition of the present embodiment may include, for example, 0.1 to 30 parts by mass, specifically 0.3 to 10 parts by mass, more specifically 0.3 to 5.0 parts by mass of the cross-linking agent (1) based on 100 parts by mass of the PFPE-containing silane compound.

The cross-linking agent (1) may contain, for example, 1 mol or more, specifically 2 mol or more of -O-R^{g3} based on 1 mol of the hydroxyl group or hydrolyzable group bonded to any Si atom of the PFPE-containing silane compound, in the curable composition of the present embodiment. The cross-linking agent may contain, for example, 30 mol or less, specifically 20 mol or less, more specifically 10 mol or less of -O-R^{g3} based on 1 mol of the hydroxyl group or hydrolyzable group bonded to any Si atom of the PFPE-containing silane compound. R^{g3} is as defined above. The cross-linking agent (1) may contain, for example, -O-R^{g3}, for example, in the range from 1 to 30 mol, specifically in the range from 2 to 20 mol based on 1 mol of the hydroxyl group or hydrolyzable group bonded to any Si atom of the PFPE-containing silane compound.

The cross-linking agent (1) may be included, for example, in the range from 0.1 to 30 parts by mass, specifically in the range from 0.3 to 10 parts by mass based on 100 parts by mass of the curable composition of the present embodiment.

In one embodiment, the cross-linking agent is an organosilicon compound having two or more hydrogen atoms each bonded to a silicon atom (Si-H) in one molecule (hereinafter, also referred to as "cross-linking agent (2)").

In the present embodiment, such Si-H is preferably present at an end of a molecular chain of the cross-linking agent.

In the present embodiment, the cross-linking agent (2) preferably has one or more fluorine-containing groups such as monovalent perfluoroalkyl groups, monovalent perfluorooxyalkyl groups, divalent perfluoroalkylene groups or divalent perfluorooxyalkylene groups in a molecular structure. Such a structure may be contained to thereby improve miscibility and dispersibility of the cross-linking agent and the PFPE-containing compound included in the curable composition of the present embodiment, and also improve uniformity of a cured product of the curable composition of the present embodiment.

The number of carbon atoms in the monovalent perfluoroalkyl group is preferably 1 to 20, more preferably 2 to 10. The perfluoroalkyl group may be linear or branched, and is preferably linear.

The monovalent perfluorooxyalkyl group is preferably a group represented by Rf"-PFPE²-. PFPE² is represented by formula:
- (OC₆F₁₂)_{a"}-(OC₅F₁₀)_{b"}-(OC₄F₈)_{c"}-(OC₃F₆)_{d"}-(OC₂F₄)_{e"}-(OCF₂)_{f"}-. PFPE² may be linear or branched, and is preferably linear.

In the formula, a", b", c" and d" are each independently an integer of 0 or more and 30 or less, e" and f" are each independently an integer of 1 or more and 200 or less. Preferably, a", b", c", d", e" and f" are each independently an integer of 0 or more and 30 or less. Preferably, the sum of a", b", c", d", e" and f" is 5 or more, more preferably 10 or more, for example, 10 or more and 100 or less. The occurrence order of the respective repeating units in parentheses with the subscript a", b", c", d", e" or f" is not limited in the formula. The ratio of e" to f" is less than 1.0.

Here, a", b", c", d", e" and f" are as defined for a, b, c, d, e and f of PFPE, respectively. Examples of specific structures of the respective repeating units contained in PFPE² may include those exemplified as the respective repeating units of PFPE.

Preferably, PFPE² is - (OC₄F₈)_{c"}- (OC₃F₆)_{d"}-(OC₂F₄)_{e"}-(OCF₂)_{f"}-, wherein c" and d" are each independently an integer of 0 or more and 30 or less, e" and f" are each independently an integer of 1 or more and 200 or less, preferably 5 or more and 200 or less, more preferably 10 or more and 200 or less, and the occurrence order of the respective repeating units in parentheses with the subscript c", d", e" or f" is not limited in the formula. Preferably, PFPE² is - (OCF₂CF₂CF₂CF₂)_{c"}-(OCF₂CF₂CF₂)_{d"}-(OCF₂CF₂)_{e"}-(OCF₂)_{f"}-. In one embodiment, PFPE² may be - (OC₂F₄)_{e"}-(OCF₂)_{f"}-, wherein e" and f" are each independently an integer of 1 or more and 200 or less, preferably 5 or more and 200 or less, more preferably 10 or more and 200 or less, and the occurrence order of the respective repeating units in parentheses with the subscript e" or f" is not limited in the formula.

In the formulae, Rf", at each occurrence, each independently represents a chlorine atom, a fluorine atom, or an alkyl group having 1 to 16 carbon atoms, the group being optionally substituted with one or more fluorine atoms or chlorine atoms.

The "alkyl group having 1 to 16 carbon atoms" with respect to the alkyl group having 1 to 16 carbon atoms, the group being optionally substituted with one or more fluorine atoms, is optionally linear or branched, is preferably a linear or branched alkyl group having 1 to 6 carbon atoms, particularly 1 to 3 carbon atoms, more preferably a linear alkyl group having 1 to 3 carbon atoms.

Rf" is preferably a fluorine atom, or an alkyl group having 1 to 16 carbon atoms, the group being optionally substituted with one or more fluorine atoms, more preferably a CF₂H-C₁₋₁₅ fluoroalkylene group or a C₁₋₁₆ perfluoroalkyl group, further preferably a C₁₋₁₆ perfluoroalkyl group.

The perfluoroalkyl group having 1 to 16 carbon atoms may be linear or branched, and is preferably a linear or branched perfluoroalkyl group having 1 to 6 carbon atoms, in particular, 1 to 3 carbon atoms, more preferably a linear perfluoroalkyl group having 1 to 3 carbon atoms, specifically -CF₃, -CF₂CF₃, or -CF₂CF₂CF₃.

Preferably, the monovalent perfluorooxyalkyl group is Rf"-(OC₂F₄)_{e"}-(OCF₂)_{f"}-, wherein e" and f" are each independently an integer of 1 or more and 200 or less, preferably 5 or more and 200 or less, more preferably 10 or more and 200 or less, and the occurrence order of the respective repeating units in parentheses with the subscript e" or f" is not limited in the formula.

The ratio of e" to f" in the monovalent perfluorooxyalkyl group is preferably 0.10 or more, more preferably 0.20 or more, further preferably 0.40 or more, and preferably less than 1.00, more preferably 0.85 or less, further preferably 0.80 or less.

The ratio of e" to f" in the monovalent perfluorooxyalkyl group is preferably 0.1 or more and less than 1.0, more preferably 0.20 or more and 0.90 or less, further preferably 0.40 or more and 0.85 or less, particularly preferably 0.40 or more and 0.80 or less.

The number of carbon atoms in the divalent perfluoroalkylene group is preferably 1 to 20, more preferably 2 to 10. The perfluoroalkylene group may be linear or branched, and is preferably linear.

The divalent perfluorooxyalkylene group is preferably represented by -PFPE²-, and is more preferably a group represented by -(OC₄F₈)_{c"}-(OC₃F₆)_{d"}-(OC₂F₄)_{e"}-(OCF₂)_{f"}-. Here, c", d", e", and f" are as defined above. The perfluorooxyalkyl group may be linear or branched, and is preferably linear. PFPE² is as defined above.

The fluorine-containing group is preferably the monovalent perfluoroalkyl group or the divalent perfluoroalkylene group.

The fluorine-containing group may be linked to any silicon atom by a divalent organic group. The divalent organic group is as defined above.

For example, the divalent organic group may be any of an alkylene group, an arylene group, and a combination thereof, or may be such a group with an ether bond oxygen atom, an amide bond, a carbonyl bond, or the like interposed. Examples of such a divalent organic group include groups having 2 to 12 carbon atoms, such as
-CH₂CH₂-,
-CH₂CH₂CH₂-,
-CH₂CH₂CH₂OCH₂-,
-CH₂CH₂CH₂-NH-CO-,
-CH₂CH₂CH₂-N (Ph)-CO- (provided that Ph is a phenyl group.),
-CH₂CH₂CH₂-N(CH₃)-CO-,
-CH₂CH₂CH₂-O-CO-. A left portion and a right portion of the divalent organic group are bonded to a Si atom and a fluorine-containing group, respectively.

In the present embodiment, examples of any group of the cross-linking agent (2), which is a monovalent substituent bonded to any silicon atom and which is other than the fluorine-containing group, include alkyl groups such as a methyl group, an ethyl group, a propyl group, a butyl group, a hexyl group, a cyclohexyl group, an octyl group and a decyl group; alkenyl groups such as a vinyl group and an allyl group; aryl groups such as a phenyl group, a tolyl group and a naphthyl group; aralkyl groups such as a benzyl group and a phenylethyl group, and any substituted or unsubstituted hydrocarbon groups having 1 to 20 carbon atoms, where at least some hydrogen atoms of such a group is substituted with a chlorine atom, a cyano group or the like, such as a chloromethyl group, a chloropropyl group and a cyanoethyl group.

Preferably, the organosilicon compound (B) does not have any alkoxy group and epoxy group as a substituent bonded to any silicon atom.

In the present embodiment, the cross-linking agent (2) may be a cyclic, linear or three-dimensional network agent, or a combination thereof.

In the present embodiment, the number of silicon atoms contained in the cross-linking agent (2) is not limited, and may be usually 2 to 60, preferably about 3 to 30.

In the present embodiment, examples of the cross-linking agent (2) may include the following compounds. Such a compound may be used singly or in combinations of two or more kinds thereof.

In the following formulae:
PFPE², at each occurrence, each independently is as defined above (in the following formulae, a group represented by PFPE² is bonded to a group represented by Rf on an oxygen atom at an end);
Rf", at each occurrence, each independently is as defined above;
R^{k3}, at each occurrence, is each independently an alkyl group having 1 to 10 carbon atoms or an alkoxy group represented by OR^{k7}, preferably a methyl group or an alkoxy group represented by OR^{k7}, more preferably a methyl group;
R^{k4}, at each occurrence, is each independently a hydrogen atom, an alkyl group having 1 to 10 carbon atoms or an alkoxy group represented by OR^{k7}, preferably a hydrogen atom or an alkoxy group represented by OR^{k7}, more preferably a hydrogen atom;
R^{k5}, at each occurrence, is each independently a hydrogen atom, an alkyl group having 1 to 10 carbon atoms or an alkoxy group represented by OR^{k7}, preferably a hydrogen atom or an alkoxy group represented by OR^{k7}, more preferably a hydrogen atom;
R^{k6}, at each occurrence, is each independently a hydrogen atom, a fluorine atom, or an alkylene group where one or more hydrogen atoms are each substituted with a fluorine atom, preferably a hydrogen atom;
R^{k7}, at each occurrence, is each independently an alkyl group having 1 to 10 carbon atoms, preferably an alkylene group having 1 to 6 carbon atoms;
the number of carbon atoms contained in the alkylene group where one or more hydrogen atoms are each substituted with a fluorine atom is preferably 1 to 8, more preferably 1 to 6;
R^{k8} is represented by -(O-(CH₂)_{α5})_{α6}- (where an oxygen atom is bonded to a group represented by -(CR^{k6}₂)_{α1});
α1, at each occurrence, is each independently an integer of 1 to 10, preferably 2 or 3;
2, at each occurrence, is each independently an integer of 1 to 50, preferably 10;
α3, at each occurrence, is each independently an integer of 1 to 50, preferably an integer of 3 to 5;
α4, at each occurrence, is each independently an integer of 1 to 50, preferably an integer of 3 to 5;
α5 is an integer of 1 to 6, preferably 1 to 3, more preferably 1; and
α6 is 0 or 1.

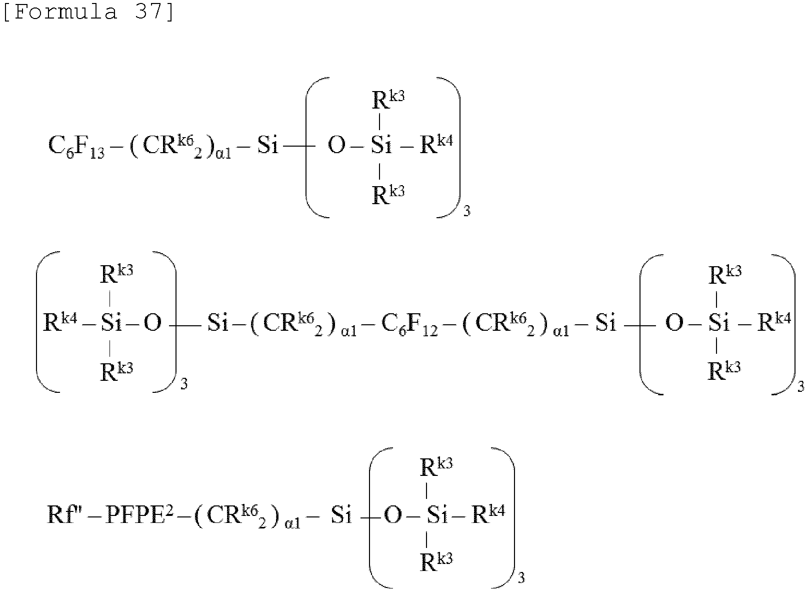

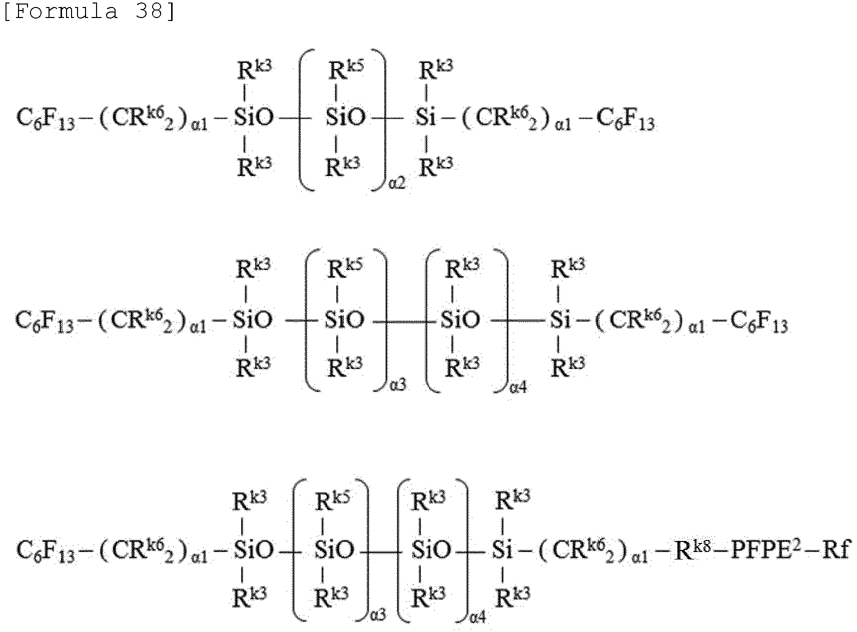

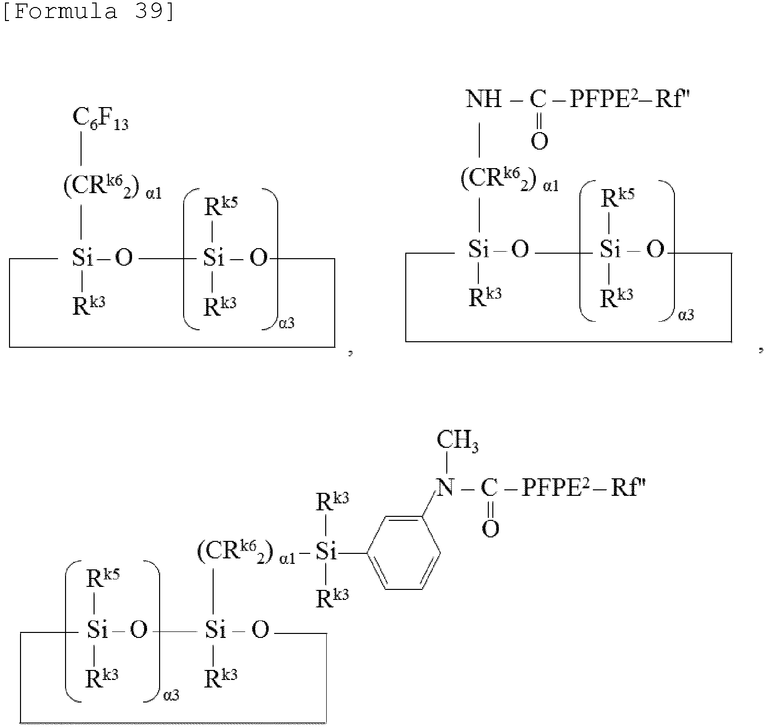

In the present embodiment, the content of the cross-linking agent (2) may be an amount effective for curing the PFPE-containing compound.

The cross-linking agent (2) is preferably used together with the PFPE-containing unsaturated compound. In such a case, an addition reaction may occur by Si-H of the cross-linking agent (2) and a carbon-carbon double bond of the PFPE-containing unsaturated compound.

The content of the cross-linking agent (2) is preferably in the range from 0.5 to 5.0 mol, more preferably in the range from 0.8 to 3.0 mol in terms of a hydrogen atom bonded to a silicon atom contained in the cross-linking agent (hydrosilyl group, namely, SiH group) based on 1 mol of an alkenyl group contained in the PFPE-containing unsaturated compound. The curable composition of the present embodiment may include such a content of the cross-linking agent to thereby contribute to formation of a cured product having an appropriate degree of crosslink, and reduce foaming in curing.

In one embodiment, the cross-linking agent is an organosilicon compound having at least two -O-R^{g3} each bonded to a Si atom (cross-linking agent (1)). R^{g3} is as defined above.

In one embodiment, the cross-linking agent is an organosilicon compound having two or more hydrogen atoms each bonded to a silicon atom (Si-H) in one molecule (cross-linking agent (2)).

The cross-linking agent may be used singly or in combinations of two or more kinds thereof.

The curable composition used in the present invention may further include a catalyst.

The catalyst promotes a condensation reaction of the PFPE-containing compound and the cross-linking agent.

The catalyst may be a metal-based catalyst, an organic acid-based catalyst, an inorganic acid-based catalyst, a base-based catalyst (for example, ammonia, triethylamine or diethylamine), or the like.

Examples of the organic acid-based catalyst may include a compound having carboxylic acid, sulfonic acid or phosphoric acid, and may specifically include acetic acid, trifluoroacetic acid, methanesulfonic acid, toluenezenesulfonic acid and alkylphosphoric acid.

Examples of the inorganic acid-based catalyst may include hydrochloric acid and sulfuric acid.

The metal-based catalyst preferably contains a transition metal atom.

The catalyst is preferably a metal-based catalyst.

In one embodiment, examples of any metal atom contained in the metal-based catalyst may include titanium, zirconium and tin. In particular, titanium or zirconium is preferably used.

In the present embodiment, the metal-based catalyst preferably has alkoxide (-O-R^{h}) as a ligand. Such a metal-based catalyst is preferably at least one selected from the group consisting of tetra-n-butyl titanate, tetraisopropyl titanate, n-butyl zirconate, n-propyl zirconate, dibutyltin dimethoxide and dibutyltin dilaurate, more preferably at least one selected from the group consisting of tetraisopropyl titanate and n-propyl zirconate. Such a metal-based catalyst is used to thereby promote a condensation reaction of the PFPE-containing compound (for example, PFPE-containing silane compound) and the cross-linking agent. Such a metal-based catalyst can be easily dissolved or dispersed in the curable composition and can contribute to promotion of a uniform reaction. The curable composition of the present embodiment, which includes such a metal-based catalyst, can include less foreign substances and can contribute to formation of a cured product of the curable composition, having high transparency.

In the present embodiment, R^{h} is preferably an alkyl group having 1 to 4 carbon atoms. A catalyst having such an alkyl group is used to particularly promote a condensation reaction.

In the present embodiment, R^{h} is further preferably an alkyl group having 1 to 3 carbon atoms. The alkyl group having 1 to 3 carbon atoms is, namely, a methyl group, an ethyl group, a n-propyl group or an i-propyl group. The catalyst, which has such R^{h}, can be easily dissolved in a solvent and can contribute to promotion of a uniform reaction.

The catalyst of the present embodiment is preferably used together with the PFPE-containing silane compound.

The catalyst of the present embodiment is preferably used together with the PFPE-containing silane compound and the cross-linking agent (1).

In the present embodiment, the curable composition preferably includes 0.05 parts by mass or more, more preferably 0.07 parts by mass or more of the catalyst based on 100 parts by mass of the PFPE-containing silane compound. The curable composition of the present embodiment preferably includes 1.0 part by mass or less, more preferably 0.7 parts by mass or less of the catalyst based on 100 parts by mass of the PFPE-containing silane compound. The curable composition includes the concentration of the catalyst, thereby allowing a condensation reaction of the PFPE-containing compound and the cross-linking agent to be particularly promoted.

In the present embodiment, the curable composition preferably includes 0.05 to 1.0 parts by mass, more preferably 0.07 to 0.7 parts by mass of the catalyst based on 100 parts by mass of the PFPE-containing silane compound.

In one embodiment, the catalyst may contain at least one metal atom selected from the group consisting of platinum, rhodium, ruthenium, iridium and palladium.

In the present embodiment, platinum or a platinum compound is preferably used as the catalyst. Such a catalyst has the advantages of a reduction in catalyst cost and catalyst availability.

Examples of the platinum compound may include hydrogen chloroplatinate or a complex of hydrogen chloroplatinate and olefin such as ethylene, a complex thereof with alcohol or vinylsiloxane, and metallic platinum carried on silica, alumina, carbon or the like.

Examples of the catalyst containing rhodium, ruthenium, iridium or palladium may include RhCl(PPh₃)₃,
RhCl(CO) (PPh₃)₂, Ru₃(CO)₁₂, IrCl(CO) (PPh₃)₂ and Pd (PPh₃)₄. In the formulae, Ph is a phenyl group.

In the present embodiment, the catalyst may be used in the form of a solid when the catalyst is a solid, and hydrogen chloroplatinate or a complex, dissolved in a proper solvent, is preferably used with being miscible with the PFPE-containing unsaturated compound in order to provide a more uniform cured product.

In the present embodiment, the catalyst is preferably used together with the PFPE-containing unsaturated compound.

In the present embodiment, the catalyst is preferably used together with the PFPE-containing unsaturated compound and the cross-linking agent (2).

In the present embodiment, the catalyst may be included in the curable composition in an effective amount so as to be able to contribute to a reaction, for example, in an effective amount so as to be able to contribute to a reaction with serving as a hydrosilylation catalyst. The content of the catalyst can be appropriately increased or decreased depending on a desired curing rate. The content of the catalyst is usually preferably 0.1 to 500 ppm (in terms of metal atom) based on 100 parts by mass of the PFPE-containing compound (A).

In the present embodiment, the catalyst can serve as a hydrosilylation catalyst. Such a hydrosilylation catalyst can promote an addition reaction of an alkenyl group in the PFPE-containing unsaturated compound and a hydrogen atom bonded to a silicon atom in the cross-linking agent (hydrosilyl group).

The catalyst may be used singly or in combinations of two or more kinds thereof.

For example, the curable composition used in the present invention may further include a solvent. The composition, which includes a solvent, is thus improved in handleability. In the case where such a curable composition is used to form a layer, the layer formed may be a continuous thin film. Such a curable composition can contribute to formation of a thin film having any thickness.

The composition preferably includes 300 parts by mass or less, more preferably 200 parts by mass or less, further preferably 100 parts by mass or less of the solvent based on 100 parts by mass of the total of the fluorine-containing silane compound, the organosilicon compound and the catalyst. The composition includes 1 part by mass or more, more preferably 20 parts by mass or more, further preferably 50 parts by mass or more of the solvent based on 100 parts by mass of the total of the fluorine-containing silane compound, the organosilicon compound and the catalyst.

The solvent is preferably included in the range from 1 to 300 parts by mass, more preferably in the range from 20 to 200 parts by mass, further preferably in the range from 50 to 100 parts by mass based on 100 parts by mass of the total of the PFPE-containing compound, the cross-linking agent and the catalyst.

Examples of the solvent include:
a fluorine atom-containing solvent selected from the group consisting of perfluorohexane, CF₃CF₂CHCl₂, CF₃CH₂CF₂CH₃, CF₃CHFCHFC₂F₅, 1,1,1,2,2,3,3,4,4,5,5,6,6-tridecafluorooctane, 1,1,2,2,3,3,4-heptafluorocyclopentane ((Zeorora H (trade name) or the like), C₄F₉OCH₃, C₄F₉OC₂H₅, CF₃CH₂OCF₂CHF₂, C₆F₁₃CH=CH₂, xylene hexafluoride, perfluorobenzene, methylpentadecafluoroheptylketone, trifluoroethanol, pentafluoropropanol, hexafluoroisopropanol, HCF₂CF₂CH₂OH, methyltrifluoromethanesulfonate, trifluoroacetic acid, CF₃O(CF₂CF₂O)ₘ₁(CF₂O)ₙ₁CF₂CF₃, wherein m1 and n1 are each independently an integer of 0 or more and 1000 or less and the occurrence order of the respective repeating units in parentheses with m1 or n1 is not limited in the formula, provided that the sum of m1 and n1 is 1 or more, 1,1-dichloro-2,3,3,3-tetrafluoro-1-propene, 1,2-dichloro-1,3,3,3-tetrafluoro-1-propene, 1,2-dichloro-3,3,3-trifluoro-1-propene, 1,1-dichloro-3,3,3-trifluoro-1-propene, 1,1,2-trichloro-3,3,3-trifluoro-1-propene, 1,1,1,4,4,4-hexafluoro-2-butene, ethyl perfluorobutyl ether and methyl perfluorobutyl ether. Such a solvent may be used singly or as a mixture of two or more kinds thereof.

In particular, a preferable solvent is a fluorine atom-containing solvent. The fluorine atom-containing solvent is preferably at least one selected from the group consisting of ethyl perfluorobutyl ether and methyl perfluorobutyl ether. Such a solvent is used to thereby enhance storage stability of the curable composition of the present invention.

In one embodiment, the curable composition may include the PFPE-containing compound, the cross-linking agent, the catalyst and the solvent to thereby allow for formation of a continuous film (herein, sometimes referred to such a film as "uniformity"), as described above. The continuous film refers to a film not having any region not coated, like a pinhole. In the case where the curable composition of the present invention is used, a thin film having any thickness (for example, 0.1 to 100 µm, specifically 1 to 50 µm) can be formed.

The curable composition enables a gel-like cured product to be formed. The curable composition can be thus suited for use as, for example, a sealing material.

The content of moisture contained in the solvent is preferably 100 ppm by mass or less, more preferably 50 ppm by mass or less. The lower limit of the content of moisture contained in the solvent is not limited, and is, for example, 1 ppm by mass or more. The content of moisture can be measured with a Karl Fischer method. The content of moisture may be in the range to thereby allow storage stability of the curable composition to be enhanced.

The content of moisture contained in the curable composition of the present invention is preferably 20 ppm by mass or less relative to the composition. The lower limit of the content of moisture contained in the curable composition is not limited, and no moisture may be substantially contained (for example, 0 ppm by mass). The content of moisture can be measured with a Karl Fischer method. The content of moisture may be in the range to thereby allow storage stability of the curable composition to be enhanced. The content of moisture may be in the range to thereby allow stability (for example, storage stability) of the curable composition of the present invention to be enhanced.

The viscosity of the curable composition of the present invention is preferably in the range from 5 to 1000 mPa·s. The viscosity of the curable composition is more preferably 500 mPa·s or less, further preferably 300 mPa·s or less, more preferably 100 mPa·s or less, further preferably 60 mPa·s or less, particularly preferably 50 mPa·s or less. The viscosity of the curable composition is more preferably 3 mPa·s or more, further preferably 5 mPa·s or more.

Preferably, the viscosity of the composition for formation of a cured product is in the range from 3 to 500 mPa·s, more preferably in the range from 5 to 300 mPa·s.

The curable composition of the present invention, which has such a viscosity, can be thus more enhanced in handleability.

The viscosity corresponds to a viscosity at 25°C, as determined by a B-type viscometer, and can be measured according to JIS K7117-1:1999.

In a preferable embodiment, the PFPE-containing compound is a PFPE-containing unsaturated compound, the cross-linking agent is an organosilicon compound having two or more hydrogen atoms each bonded to a silicon atom (Si-H) in one molecule, and the catalyst is a metal-based catalyst containing at least one selected from the group consisting of platinum, rhodium, ruthenium, iridium and palladium, preferably platinum or a platinum compound.

In the embodiment, the curable composition may preferably further include an organosilicon compound having one or more hydrolyzable groups each bonded to a silicon atom in one molecule (hereinafter, also referred to as "organosilicon compound (3)"). The organosilicon compound (3) can serve as an adhesion-imparting agent which can impart self-adhesiveness to the curable composition. The hydrolyzable group is as defined above.

The organosilicon compound (3) may be used singly or in combinations of two or more kinds thereof.

The organosilicon compound (3) may have one or more monovalent perfluoroalkyl groups or monovalent perfluorooxyalkyl groups. Such a structure may be contained to thereby particularly improve miscibility and dispersibility of the organosilicon compound (3) and the PFPE-containing unsaturated compound contained in the curable composition, and improve uniformity of a cured product of the curable composition.

The organosilicon compound (3) may have one or more hydrogen atoms each bonded to a silicon atom in one molecule from the viewpoint of addition reactivity with the PFPE-containing unsaturated compound.

The organosilicon compound (3) is preferably organosiloxane or trialkoxysilane having one or more alkoxysilyl groups each bonded to a silicon atom via a carbon atom or a carbon atom and an oxygen atom.

The siloxane backbone of the organosiloxane in the organosilicon compound (3) may be a cyclic, linear or branched backbone, or a combination thereof. The organosiloxane may be the organosiloxane represented by the following general formula.

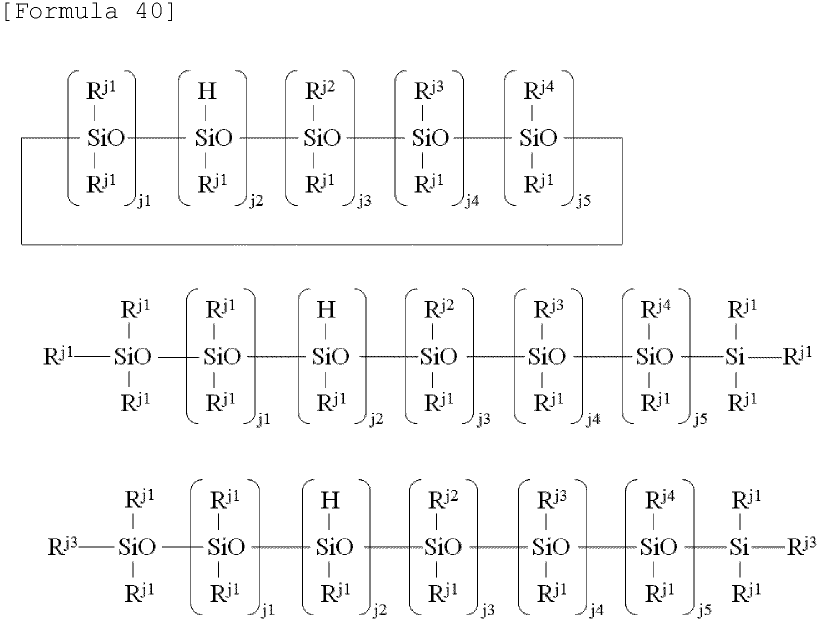

In the general formulae, j1, at each occurrence, is preferably each independently an integer of 0 to 50, more preferably an integer of 0 to 20. In the general formulae, j2, at each occurrence, is preferably each independently an integer of 0 to 50, more preferably an integer of 0 to 20. In the general formulae, j3, at each occurrence, is preferably each independently an integer of 1 to 50, more preferably an integer of 1 to 20. In the general formulae, j4, at each occurrence, is preferably each independently an integer of 0 to 50, more preferably an integer of 0 to 20. In the general formulae, j5, at each occurrence, is preferably each independently an integer of 0 to 50, more preferably an integer of 0 to 20. The sum of j1, j2, j3, j4 and j5 is an integer which allows the weight average molecular weight in terms of polystyrene according to gel permeation chromatography (GPC) to satisfy 500 to 20,000.

In the general formulae, R^{j1}, at each occurrence, is each independently a halogen-substituted or unsubstituted monovalent hydrocarbon group. The number of carbon atoms contained in the halogen-substituted or unsubstituted monovalent hydrocarbon group of R^{j1} is preferably in the range from 1 to 10, more preferably in the range from 1 to 8. Specific examples of such a monovalent hydrocarbon group may include alkyl groups such as a methyl group, an ethyl group, a propyl group, a butyl group, a hexyl group, a cyclohexyl group and an octyl group; aryl groups such as a phenyl group and a tolyl group; aralkyl groups such as a benzyl group and a phenylethyl group, or a substituted monovalent hydrocarbon group where some or all hydrogen atoms of such a group are substituted with a halogen atom such as a fluorine atom. In particular, the monovalent hydrocarbon group is more preferably a methyl group.

In the general formulae, R^{j2} represents an alkoxysilyl group bonded to a silicon atom via a carbon atom or a carbon atom and an oxygen atom, and specific examples thereof include
-R^{j5}-Si(OR^{j6})₃, or a group represented by the following formula.

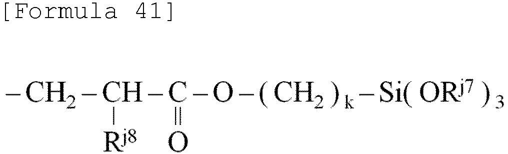

In the formulae, R^{j5} is a divalent hydrocarbon group having 1 to 10 carbon atoms, in particular, 1 to 4 carbon atoms, specifically, an alkylene group such as a methylene group, an ethylene group, a propylene group, a butylene group, a hexylene group, a cyclohexylene group or an octylene group, and R^{j6} is a monovalent hydrocarbon group having 1 to 8 carbon atoms, in particular, 1 to 4 carbon atoms, specifically, for example, an alkyl group such as a methyl group, an ethyl group or a n-propyl group. R^{j7} is a monovalent hydrocarbon group having 1 to 8 carbon atoms, in particular, 1 to 4 carbon atoms, specifically, an alkyl group such as a methyl group, an ethyl group or a n-propyl group, R^{j8} is a hydrogen atom or a methyl group, and k is an integer of 2 to 10.

In the general formulae, R^{j3} is a group represented by the following general formula:

-Z^{j1}-Rf^{j1}.

Herein, a right portion of Z^{j1} is bonded to Rf^{j1}.

In the formula, Z^{j1} is a group represented by -(CH₂)ⱼ₆-, - (CH₂)ⱼ₇-X^{j1}-, wherein X^{j1} is -OCH₂-, or -Y^{j1}-NR^{j9}-CO-, wherein Y^{j1} is -CH₂- or an o, m or p-dimethylsilylphenylene group represented by the following structural formula: 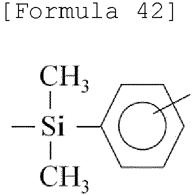 wherein a phenylene group is bonded to a N atom, and R^{j9} is a hydrogen atom, or a substituted or unsubstituted monovalent hydrocarbon group preferably having 1 to 12 carbon atoms, in particular, 1 to 10 carbon atoms, and j6 and j7, at each occurrence, are each independently an integer of 1 to 10, preferably an integer of 1 to 5. In the formulae, Rf^{j1} represents a monovalent perfluoroalkyl group or a monovalent perfluorooxyalkyl group.

The monovalent perfluoroalkyl group or the monovalent perfluorooxyalkyl group is as defined above.

R^{j4} is an epoxy group bonded to a silicon atom via a carbon atom or a carbon atom and an oxygen atom, and specific examples thereof may include the following groups: 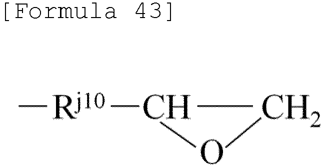 wherein R^{j10} is a divalent hydrocarbon group having 1 to 10 carbon atoms, in particular, 1 to 5 carbon atoms, optionally with an oxygen atom interposed, specifically, an alkylene group such as a methylene group, an ethylene group, a propylene group, a butylene group, a hexylene group, a cyclohexylene group or an octylene group.

Specific examples of the organosiloxane used as the organosilicon compound (3) include any organosiloxane represented by the following structural formula. In the following, a group represented by PFPE² is bonded to a group represented by Rf, on an oxygen atom at an end.

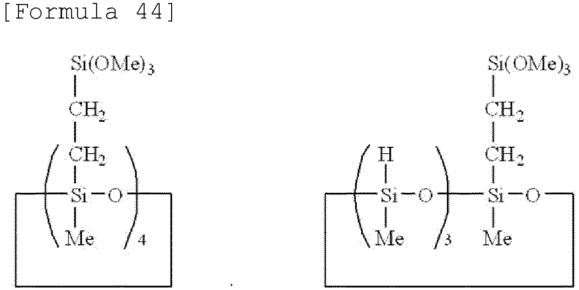

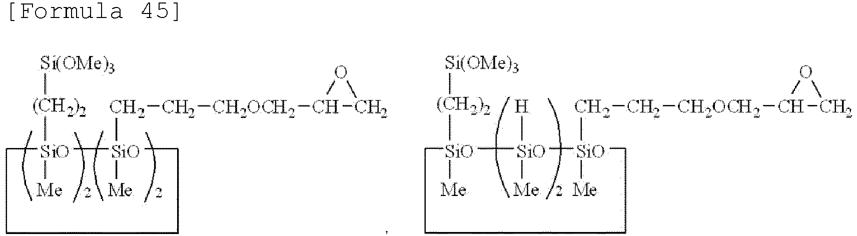

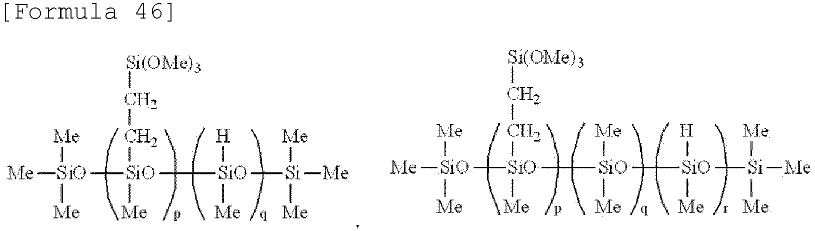

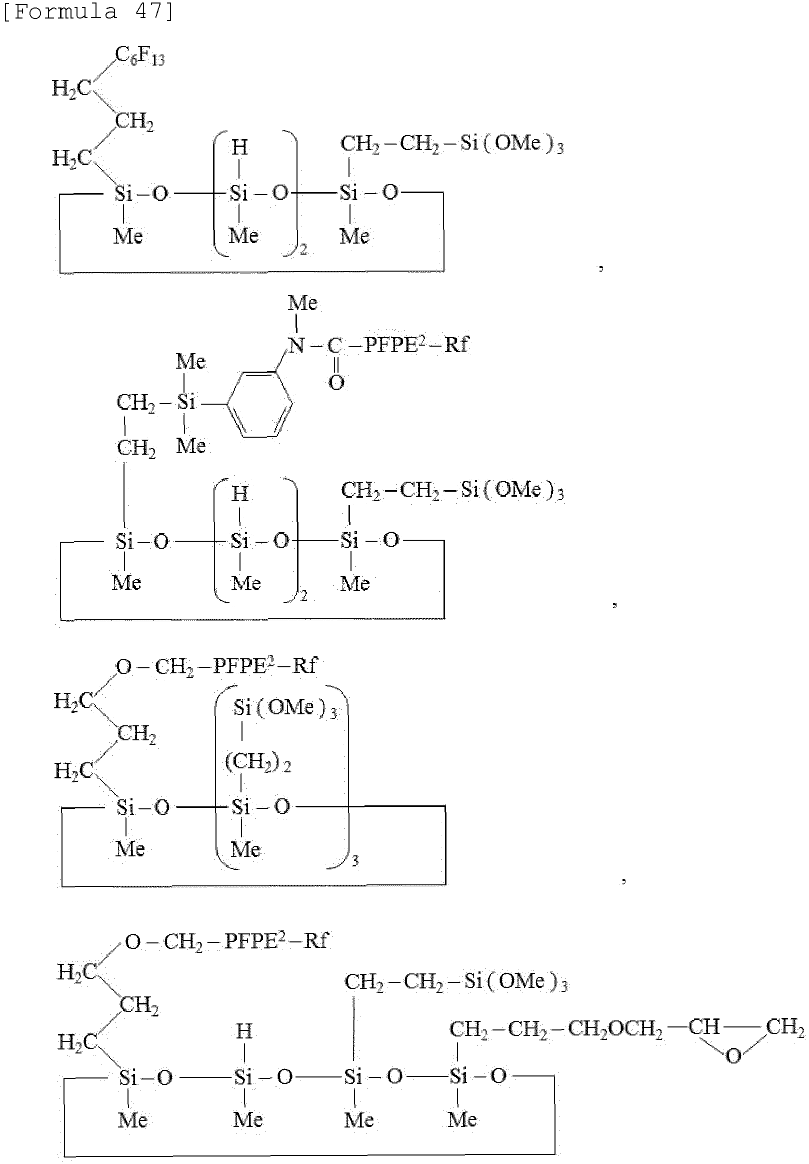

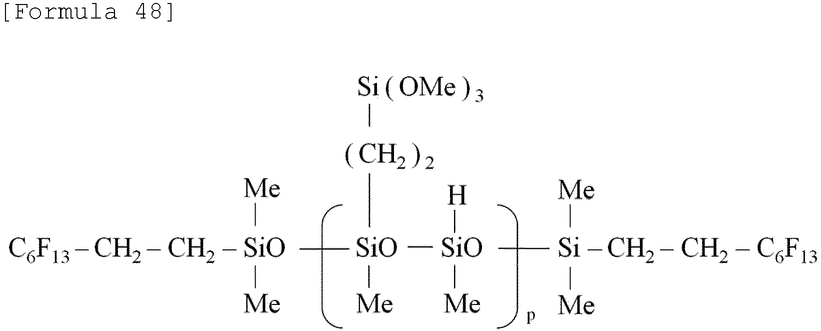

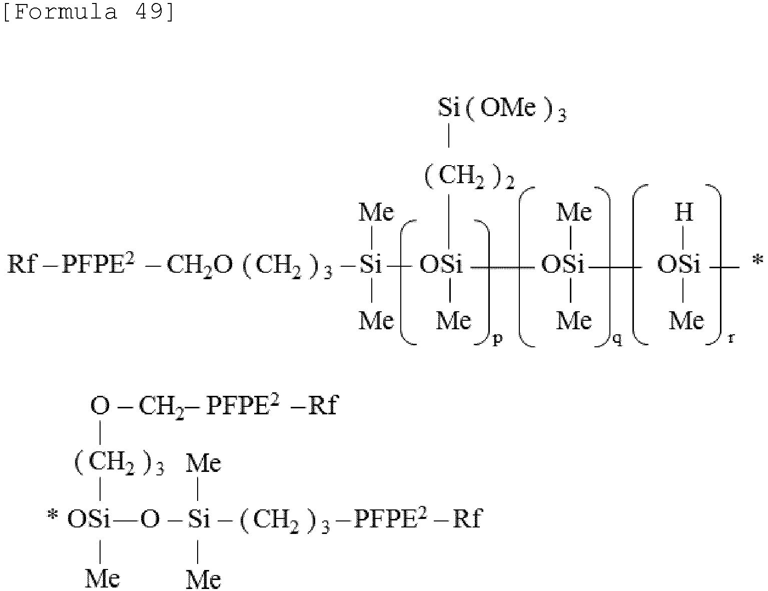

In the formulae, Me represents a methyl group, and p, q and r, at each occurrence, are each independently an integer of 0 or more. PFPE² and Rf are as defined above.

The trialkoxysilane used as the organosilicon compound (3) is not limited, and is preferably any silane having a reactive organic group other than an alkoxy group in the same molecule, such as vinyltrimethoxysilane, 3-glycidoxypropyltrimethoxysilane, 3-glycidoxypropyltriethoxysilane, 3-aminopropyltrimethoxysilane, 3-(methacryloxypropyl)trimethoxysilane, 2-(3,4-epoxycyclohexyl)ethyltrimethoxysilane, N-2-(aminoethyl)-3-aminopropyltrimethoxysilane, N-phenyl-3-aminopropyltrimethoxysilane, 3-mercaptopropyltrimethoxysilane or 3-isocyanatopropyltriethoxysilane, or fluorine-containing trialkoxysilane such as perfluoropropyltrimethoxysilane.

The amount of the organosilicon compound (3) compounded is preferably in the range from 0.01 to 10 parts by mass, more preferably in the range from 0.05 to 5 parts by mass based on 100 parts by mass of the PFPE-containing unsaturated compound. The organosilicon compound (3) may be included in the range to thereby allow the curable composition to have sufficient adhesiveness and have appropriate fluidity and curability. Such a curable composition may be favorable in physical hardness.

In the case where the curable composition includes the PFPE-containing unsaturated compound, the cross-linking agent (2) and the organosilicon compound (3), the curable composition may further include a hydrolysis catalyst (hereinafter, also referred to as "hydrolysis catalyst (E)"). The hydrolysis catalyst has a catalyst function for enhancing hydrolyzability of the organosilicon compound (3).

The hydrolysis catalyst is not limited as long as the catalyst does not impair addition curability of the composition, and examples thereof include organotitanium compounds such as titanium tetraisopropoxide, titanium tetra-n-butoxide and titanium tetraacetylacetonate; organozirconium compounds such as zirconium tetra-n-propoxide, zirconium tetra-n-butoxide and zirconium tetraacetylacetonate; organotin compounds such as dibutyltin dilaurate, dibutyltin diacetate and dibutyltin acetylacetonate; organoaluminum compounds such as aluminum trisacetylacetonate, aluminum trisethylacetoacetate and diisopropoxy aluminum ethylacetoacetate; and other acidic catalysts and basic catalysts. In particular, at least one selected from the group consisting of such organotitanium compounds, organozirconium compounds, organotin compounds and organoaluminum compounds is preferably used from the viewpoint of storage stability of the curable composition of the present embodiment. The hydrolysis catalyst may be used singly or in combinations of two or more kinds thereof.

The amount of the hydrolysis catalyst compounded is preferably in the range from 0.001 to 5 parts by mass, more preferably in the range from 0.01 to 1 part by mass based on 100 parts by mass of the PFPE-containing unsaturated compound. The hydrolysis catalyst may be included in the range in the curable composition of the present embodiment, thereby exerting a sufficient catalyst effect. The hydrolysis catalyst may be included in the range, thereby allowing the curable composition of the present embodiment to have appropriate fluidity. The hydrolysis catalyst can also be prevented from being cured into a gel.

The curable composition used in the present invention may further include any compound represented by the following formula (A1), (B1), (C1) or (D1).

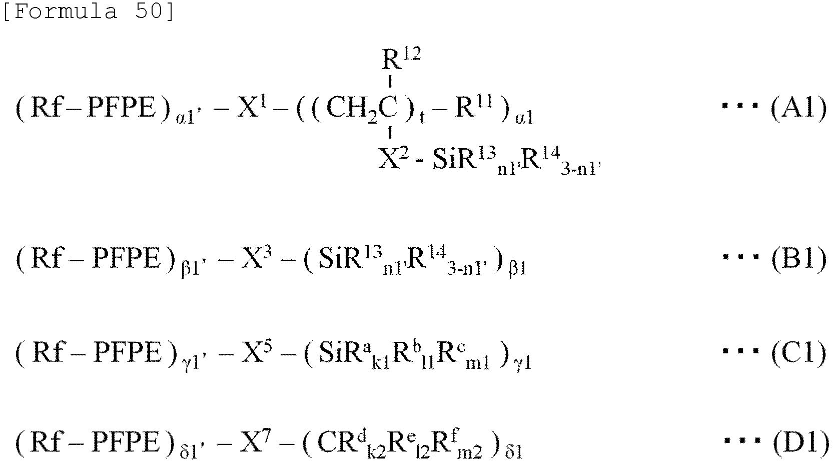

Any portion of the descriptions of formulae (A1), (B1), (C1) and (D1), overlapped with those of (A), (B), (C) and (D), will be omitted.

In the formulae, Rf, at each occurrence, independently represents an alkyl group having 1 to 16 carbon atoms, optionally substituted with one or more fluorine atoms.

The "alkyl group having 1 to 16 carbon atoms" with respect to the alkyl group having 1 to 16 carbon atoms, the group being optionally substituted with one or more fluorine atoms, is optionally linear or branched, is preferably a linear or branched alkyl group having 1 to 6 carbon atoms, particularly 1 to 3 carbon atoms, more preferably a linear alkyl group having 1 to 3 carbon atoms.

Rf is preferably an alkyl group having 1 to 16 carbon atoms, the group being optionally substituted with one or more fluorine atoms, more preferably a CF₂H-C₁₋₁₅ fluoroalkylene group or a C₁₋₁₆ perfluoroalkyl group, further preferably a C₁₋₁₆ perfluoroalkyl group.

The perfluoroalkyl group having 1 to 16 carbon atoms may be linear or branched, and is preferably a linear or branched perfluoroalkyl group having 1 to 6 carbon atoms, in particular, 1 to 3 carbon atoms, more preferably a linear perfluoroalkyl group having 1 to 3 carbon atoms, specifically -CF₃, -CF₂CF₃, or -CF₂CF₂CF₃.

In formula (A1), α1 is an integer of 1 to 9 and α1' is an integer of 1 to 9. Here, α1' may be varied depending on the valence of X¹. In formula (A1), the sum of α1 and α1' is the same as the valence of X¹. For example, in the case where X¹ is a decavalent organic group, the sum of α1 and α1' may be 10, for example, α1 may be 9 and α1' may be 1, α1 may be 5 and α1' may be 5, or α1 may be 1 and α1' may be 9. In the case where X¹ is a divalent organic group, α1 and α1' are 1.

X¹ is preferably a 2-7 valent, more preferably 2-4 valent, further preferably divalent organic group.

In one embodiment, X¹ is a 2-4 valent organic group, α1 is 1 to 3, and α1' is 1.

In another embodiment, X¹ is a divalent organic group, α1 is 1, and α1' is 1.

In formula (A1), n1' with respect to a (-SiR¹³_{n1'}R¹⁴_{3-n1'}) unit is independently an integer of 0 to 3, preferably 1 to 3, more preferably 3. In the formula, at least one n1' is an integer of 1 to 3, namely, there is not any case where all n1' are simultaneously 0. In other words, at least one R¹³ is present in formula (A1).

In formula (B1), β1 is an integer of 1 to 9 and β1' is an integer of 1 to 9. Such β1 and β1' may be varied depending on the valence of X³. In formula (B1), the sum of β1 and β1' is the same as the valence of, X³. For example, in the case where X³ is a decavalent organic group, the sum of β1 and β1' may be 10, for example, β1 may be 9 and β1' may be 1, β1 may be 5 and β1' may be 5, or β1 may be 1 and β1' may be 9. In the case where X³ is a divalent organic group, β1 and β1' are 1. In the case where X³ is a single bond, β1 and β'1 are 1.

X³ is preferably a 2-7 valent, more preferably 2-4 valent, further preferably divalent organic group.

In one embodiment, X³ is a 2-4 valent organic group, β1 is 1 to 3, and β1' is 1.

In another embodiment, X³ is a divalent organic group, β1 is 1, and β1' is 1.

In formula (B1), n1' is as defined for described with respect to (A1).

In formula (C1), γ1 is an integer of 1 to 9 and γ1' is an integer of 1 to 9. Such γ1 and γ1' may be varied depending on the valence of X⁵. In formula (C1), the sum of γ1 and γ1' is the same as the valence of X³. For example, in the case where X⁵ is a decavalent organic group, the sum of γ1 and γ1' may be 10, for example, γ1 may be 9 and γ1' may be 1, γ1 may be 5 and γ1' may be 5, or γ1 may be 1 and γ1' may be 9. In the case where X⁵ is a divalent organic group, γ1 and γ1' are 1. In the case where X⁵ is a single bond, γ1 and γ'1 are 1.

X⁵ is preferably a 2-7 valent, more preferably 2-4 valent, further preferably divalent organic group.

In one embodiment, X³ is a 2-4 valent organic group, γ1 is 1 to 3, and γ1' is 1.

In another embodiment, X⁵ is a divalent organic group, γ1 is 1, and γ1' is 1.

In formula (D1), δ1 is an integer of 1 to 9 and δ1' is an integer of 1 to 9. Such δ1 and δ1' may be varied depending on the valence of X⁷. In formula (D1), the sum of δ1 and δ1' is the same as the valence of X⁷. For example, in the case where X⁷ is a decavalent organic group, the sum of δ1 and δ1' may be 10, for example, δ1 may be 9 and δ1' may be 1, δ1 may be 5 and δ1' may be 5, or δ1 may be 1 and δ1' may be 9. In the case where X⁷ is a divalent organic group, δ1 and δ1' are 1. In the case where X⁷ is a single bond, δ1 and δ'1 are 1.

X⁷ is preferably a 2-7 valent, more preferably 2-4 valent, further preferably divalent organic group.

In one embodiment, X⁷ is a 2-4 valent organic group, δ1 is 1 to 3, and δ1' is 1.

In another embodiment, X⁷ is a divalent organic group, δ1 is 1, and δ1' is 1.

In one embodiment, the compound represented by formula (A1), (B1), (C1) or (D1) is preferably a compound represented by formula (A1), (C1) or (D1). Such a silane compound may be used to thereby allow adhesion properties to the base material to be enhanced.

In one embodiment, the curable composition of the present invention includes 0.1% by mol or more and 35% by mol or less of any compound represented by formulae (A1), (B1), (C1) and (D1) based on the total of any compound represented by formulae (A), (B), (C) and (D) (hereinafter, also referred to as "component (1)") and any compound represented by formulae (A1), (B1), (C1) and (D1) (hereinafter, also referred to as "component (2)"). The lower limit of the content of any compound represented by formulae (A1), (B1), (C1) and (D1) based on the total of the component (1) and the component (2) may be preferably 0.1% by mol, more preferably 0.2% by mol, further preferably 0.5% by mol, still more preferably 1% by mol, particularly preferably 2% by mol, particularly 5% by mol. The upper limit of the content of any compound represented by formulae (A1), (B1), (C1) and (D1) based on the total of the component (1) and the component (2) may be preferably 35% by mol, more preferably 30% by mol, further preferably 20% by mol, still more preferably 15% by mol or 10% by mol. Any compound represented by formulae (A1), (B1), (C1) and (D1) based on the total of the component (1) and the component (2) is preferably 0.1% by mol or more and 30% by mol or less, more preferably 0.1% by mol or more and 20% by mol or less, further preferably 0.2% by mol or more and 10% by mol or less, still more preferably 0.5% by mol or more and 10% by mol or less, particularly preferably 1% by mol or more and 10% by mol or less, for example, 2% by mol or more and 10% by mol or less or 5% by mol or more and 10% by mol or less. The component (1) and the component (2) may be included in such a range, thereby allowing the curable composition of the present invention to contribute to formation of a cured product favorable in friction durability.

The combination of the component (1) and the component (2) in the curable composition is preferably a combination of a compound represented by formula (A) and a compound represented by formula (A1), a combination of a compound represented by formula (B) and a compound represented by formula (B1), a combination of a compound represented by formula (C) and a compound represented by formula (C1), or a combination of a compound represented by formula (D) and a compound represented by formula (D1).

In such any compound represented by formula (A) and formula (A1), t is preferably 2 or more, more preferably an integer of 2 to 10, further preferably an integer of 2 to 6. Here, t may be 2 or more, thereby allowing a plurality of Si atoms each having R¹³ or R^{13"} to be present and allowing a cured product formed from the curable composition of the present invention to achieve higher durability (for example, friction durability).

In such any compound represented by formula (C) and formula (C1), k1 is preferably 2 or 3, more preferably 3.

In a preferable embodiment, the compound represented by formula (C) has a structure represented by -Si-(Z³-SiR⁷²₃)₂, -Si-(Z³-SiR^{72"}₃)₂, -Si-(Z³-SiR⁷²₃)₃ or -Si-(Z³-SiR^{72"}₃)₃, further preferably has a structure represented by -Si-(Z³-SiR⁷²₃)₃ or -Si-(Z³-SiR^{72"}₃)₃ at an end; the compound represented by formula (C1) has a structure represented by -Si-(Z³-SiR⁷²₃)₂ or -Si-(Z³-SiR⁷²₃)₃, further preferably has a structure represented by -Si-(Z³-SiR⁷²₃)₃ at an end. Such a structure may be at an end, thereby allowing a cured product formed from the curable composition of the present invention to achieve higher durability (for example, friction durability).

Specific examples of the group represented by -Si-(Z³-SiR⁷²₃)₂ or -Si-(Z³-SiR^{72"}₃)₂ may include
-Si-R^{a}₂R^{b}ₗ₁R^{c}ₘ₁ wherein R^{a} is a group represented by -Z³-SiR⁷²₃ and the sum of l1 and m1 is 1,
-Si-R^{a"}₂R^{b"}ₗ₁R^{c"}ₘ₁ wherein R^{a"} is a group represented by - Z³-SiR^{72"}₃ and the sum of l1 and m1 is 1,
-Si-R⁷¹₂R⁷²_{q1}R⁷³ᵣ₁ wherein R⁷¹ is a group represented by - Z³-SiR⁷²₃ and the total of q1 and r1 is 1, or
-Si-R⁷¹₂R^{72"}_{q1}R⁷³ᵣ₁ wherein R⁷¹ is a group represented by -Z³-SiR⁷²₃ and the total of q1 and r1 is 1.

In such any compound represented by formula (D) and formula (D1), 12 is preferably 2 or 3, more preferably 3.

In a preferable embodiment, the compound represented by formula (D) has a -C-(Y-SiR⁸⁵₃)₂, -C-(Y-SiR^{85"}₃)₂ (specifically, -C-(Y-SiR⁸⁵₃)₂R⁸³, -C-(Y-SiR⁸⁵₃)₂R^{f}, -C-(Y-SiR^{85"}₃)₂R⁸³, -C-(Y-SiR^{85"}₃)₂R⁸³), -C-(Y-SiR⁸⁵)₃ or -C-(Y-SiR^{85"})₃ structure, further preferably a -C-(Y-SiR⁸⁵)₃ or -C-(Y-SiR^{85"})₃ structure at an end; and the compound represented by formula (D1) has a -C-(Y-SiR⁸⁵₃)₂ (specifically, -C-(Y-SiR⁸⁵₃)₂R⁸³) or -C-(Y-SiR⁸⁵)₃ structure, further preferably a -C-(Y-SiR⁸⁵)₃ structure at an end. Such a structure may be at an end, thereby allowing the curable composition of the present invention to contribute to formation of a cured product having higher durability (for example, friction durability).

The curable composition used in the present invention may further include other component. Such other component is not limited, and may include, for example, a (nonreactive) fluoropolyether compound which can be understood as a fluorine-containing oil, preferably a perfluoro(poly)ether compound (hereinafter, referred to as "fluorine-containing oil") a stabilizing material (dehydrating agent, molecular sieve, magnesium sulfate or methyl o-formate), a viscosity modifier, a filler, a fluorescent agent, a storage stabilizer, a filling agent, a colorant, a heat resistance improver, a cold resistance improver, a rust inhibitor, an adhesiveness improver, a liquid strengthening agent, and/or a polymerization initiator.

The fluorine-containing oil is not limited, and examples thereof include a compound (perfluoro(poly)ether compound) represented by the following general formula (III):

Rf⁵-(OC₄F₈)_{a'}-(OC₃F₆)_{b'}-(OC₂F₄)_{c'}-(OCF₂)_{d'}-Rf⁶ ... (III)

wherein Rf⁵ represents an alkyl group having 1 to 16 carbon atoms optionally substituted with one or more fluorine atoms (preferably C₁₋₁₆ perfluoroalkyl group), Rf⁶ represents an alkyl group having 1 to 16 carbon atoms optionally substituted with one or more fluorine atoms (preferably C₁₋₁₆ perfluoroalkyl group), a fluorine atom or a hydrogen atom, and Rf⁵ and Rf⁶ are more preferably, each independently, a C₁₋₃ perfluoroalkyl group; and
a', b', c' and d' represent the respective four numbers of repeating units in perfluoro(poly)ether constituting a main backbone of the polymer and are mutually independently an integer of 0 or more and 300 or less, the sum of a', b', c' and d' is at least 1, preferably 1 to 300, more preferably 20 to 300, the occurrence order of the respective repeating units in parentheses with the subscript a', b', c' or d' is not limited in the formula, and, among such repeating units, - (OC₄F₈) - may be any of -(OCF₂CF₂CF₂CF₂)-, -(OCF(CF₃)CF₂CF₂)-, -(OCF₂CF(CF₃)CF₂)-, -(OCF₂CF₂CF(CF₃))-, -(OC(CF₃)₂CF₂)-, - (OCF₂C(CF₃)₂)-, -(OCF(CF₃)CF(CF₃))-, -(OCF(C₂F₅)CF₂)- and - (OCF₂CF(C₂F₅))-, and is preferably -(OCF₂CF₂CF₂CF₂)-, and - (OC₃F₆)- may be any of - (OCF₂CF₂CF₂)-, -(OCF(CF₃)CF₂)- and - (OCF₂CF(CF₃))-, and is preferably -(OCF₂CF₂CF₂)-, and, for example, -(OC₂F₄)- may be any of -(OCF₂CF₂)- and - (OCF(CF₃))-, and is preferably -(OCF₂CF₂)-.

Examples of the perfluoro(poly)ether compound represented by general formula (III) include a compound represented by any of the following general formulae (IIIa) and (IIIb) (which may be adopted singly or as a mixture of two or more kinds thereof).

Rf⁵-(OCF₂CF₂CF₂)_{b"}-Rf⁶ ... (IIIa)

Rf⁵-(OCF₂CF₂CF₂CF₂)_{a"}-(OCF₂CF₂CF₂)_{b"}-(OCF₂CF₂)_{c''}- (OCF₂)_{d"}-Rf⁶ ... (IIIb)

In such formulae, Rf⁵ and Rf⁶ are as described above; in formula (IIIa), b'' is an integer of 1 or more and 100 or less; in formula (IIIb), a'' and b'' are each independently an integer of 1 or more and 30 or less, and c'' and d'' are each independently an integer of 1 or more and 300 or less, and the occurrence order of the respective repeating units in parentheses with subscript a'', b'', c'', d'' is not limited in the formulae.

The fluorine-containing oil may have a number average molecular weight of 1,000 to 30,000. In particular, the number average molecular weight of the compound represented by formula (IIIa) is preferably 2,000 to 8,000. In one embodiment, the number average molecular weight of the compound represented by formula (IIIb) is 3,000 to 8,000. In another embodiment, the number average molecular weight of the compound represented by formula (IIIb) is 8,000 to 30,000.

The curable composition may contain, for example, 0 to 500 parts by mass, preferably 0 to 100 parts by mass, more preferably 1 to 50 parts by mass, further preferably 1 to 5 parts by mass of the fluorine-containing oil based on 100 parts by mass of the PFPE-containing silane compound.

The fluorine-containing oil may be a compound represented by general formula Rf'-F, wherein Rf' is C₅₋₁₆ perfluoroalkyl group, from another viewpoint. The fluorine-containing oil may be a chlorotrifluoroethylene oligomer. The compound represented by Rf'-F and the chlorotrifluoroethylene oligomer are preferable in that high affinity with the perfluoro(poly)ether group-containing silane compound where Rf is a C₁₋₁₆ perfluoroalkyl group is obtained.

Examples of the storage stabilizer may include methyltrimethoxysilane, methyltripropenoxysilane, vinyltributanoximesilane and methyltriacetoxysilane.

Examples of the filling agent may include fibrous filling agents such as asbestos, glass fiber and an organic fiber.

Examples of the colorant may include a pigment and a dye.

Examples of the heat resistance improver may include colcothar and cerium oxide.

Examples of the adhesiveness improver may include β-(3,4-epoxycyclohexyl)ethyltrimethoxysilane, γ-glycidoxypropyltriethoxysilane, γ-methacryloxypropyltrimethoxysilane, γ-methacryloxypropylmethyldiethoxysilane, N-β-(aminoethyl)-γ-aminopropyltrimethoxysilane, γ-aminopropyltriethoxysilane, γ-chloropropyltrimethoxysilane, γ-mercaptopropyltrimethoxysilane and γ-isocyanatopropyltriethoxysilane.

Examples of the liquid strengthening agent may include reticular polysiloxane having a triorganosiloxy unit and a SiO₂ unit.

The polymerization initiator may be an azo initiator such as azobisisobutyronitrile, methyl azoisobutyrate or azobisdimethylvaleronitrile; or benzoyl peroxide, potassium persulfate, ammonium persulfate, a benzophenone derivative, a phosphine oxide derivative, a benzoketone derivative, a phenylthioether derivative, an azido derivative, a diazo derivative or a disulfide derivative. Such a polymerization initiator may be used singly or in combinations of two or more kinds thereof.

A protecting layer is formed on the edge of the laminated product by treating the edge of the laminated product with the curable composition.

The treatment method is not limited, and, for example, the treating method is performed by coating the edge of the laminated product with the curable composition, and, if necessary, performing a heat treatment or light irradiation to thereby cure the curable composition.

The protecting layer formed from the curable composition may be enhanced in adhesiveness by, if necessary, subjecting a portion to be treated, to a primer treatment prior to the treatment with the curable composition.

While the laminated product of the present invention, including the first base material layer, the adhesive layer and the second base material layer, is described above, the laminated product of the present invention may include an additional layer. For example, the laminated product may further include a second adhesive layer and a third base material layer.

The laminated product of the present invention is used in various articles. Accordingly, the present invention also provides an article including the laminated product of the present invention.

Examples of the article include a touch panel, a display, an electron element adhering onto an electronic board, an electronic component secured to a metal housing of a smartphone or a tablet personal computer by a tape, and an operation panel secured to the surface of a home appliance such as a refrigerator or a laundry machine by an adhesion tape.

The laminated product and the article of the present invention are described above in detail. The application, the usage method, the article or the like of the laminated product of the present invention is not limited to those exemplified above.

### Examples

The occurrence order of repeating units (CF₂O) and (CF₂CF₂O) constituting perfluoropolyether is not limited in the present Examples. All chemical formulae shown below are represented in terms of average compositional feature.
- Preparation of PFPE curing composition

### Example 1

- Preparation of edge-protecting agent

PFPE-containing compound A, tetraethoxysilane as a cross-linking agent, and tetraisopropaxy titanium as a curing catalyst were weighed in a glass vessel for mixing in amounts of 100 parts by weight, 1 part by weight, and 0.5 parts by weight, respectively, and stirred with a magnetic stirrer, to prepare a curable composition.
PFPE-containing compound A
(C₂H₅O)₃SiCH₂CH₂CH₂NHCOCF₂-(OC₂F₄)ₑ-(OCF₂)_{f}-CF₂CONHCH₂CH₂CH₂Si(OC₂H₅)₃
wherein e = 45 and f = 38

### • Preparation of base material

Two glass slides were sandwiched by a transparent adhesion film (LUCIACS CS9864 manufactured by Nitto Denko Corporation) having a thickness of 100 µm to produce a laminated product of glass slide/adhesion film/glass slide. The edge of the laminated product was coated with the PFPE-containing curing composition by a syringe, and left to still stand and cured at a temperature of 25°C for 24 hours, thereby preparing a laminated product whose edge was protected.

### • Evaluation

A sample produced was immersed in oleic acid, and placed in an electrical furnace at 70°C and heated for one week, and thereafter the state of the laminated product was visually confirmed. The distance between the glass slides in the laminated product and the rate of change in weight of the entire laminated product before and after immersion were calculated. A case where no change in weight was observed at all was defined as 0%.

### Example 2

A sample was prepared and evaluated by the same methods as in Example 1 except that PFPE-containing compound B was used.
PFPE-containing compound B
H ((CH₃O)₃SiCHCH₂)₃CF₂-(OC₂F₄)ₑ-(OCF₂)_{f}-CF₂(CH₂CHSi(OCH₃)₃)₃H wherein e = 40, f = 58 and e/f = 0.7

### Example 3

### • Preparation of edge-protecting agent

Compound D as a cross-linking agent and a xylene solution containing 2% of a Pt complex of 1,3-divinyl-1,1,3,3-tetramethyldisiloxane as a curing catalyst were weighed in a glass vessel for mixing, in amounts of 4 parts by weight and 0.4 parts by weight based on 100 parts by weight of PFPE-containing compound C, and stirred and mixed, to prepare a curable composition.

PFPE-containing compound C
CH₂=CHCH₂OCH₂CF₂(OCF₂CF(CF₃))ₘOCF₂CF₂O(CF(CF₃)CF₂O)ₙ-CF₂CH₂OCH₂CH=CH₂
wherein m + n = 54
   Compound D

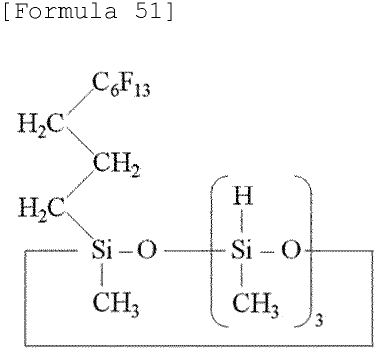

A sample was prepared and evaluated by the same methods as in Example 1 except that the resulting curing composition was used for edge protection and the curing conditions after coating were conditions of 100°C and 2 hours.

### Comparative Example 1

Evaluation was performed with a laminated product including no protecting layer.

The test results are shown below.

**[Table 1]**

| Test | Appearance | Distance between pieces of glass | | Rate of change in weight |
|---|---|---|---|---|
| | | Initial | After immersion in oleic acid | |
| Example 1 | No change | 98 µm | 96 µm | 0.1% |
| Example 2 | No change | 95 µm | 97 µm | 0.0% |
| Example 3 | No change | 96 µm | 98 µm | 0.1% |
| Comparative Example 2 | Swollening | 99 µm | 134 µm | 8.7% |

| | |
|---|---|
| #1 | Test |
| #2 | Example |
| #3 | Comparative Example |
| #4 | Appearance |
| #5 | No change |
| #6 | Swollen |
| #7 | Distance between pieces of glass |
| #8 | Initial |
| #9 | After immersion in oleic acid |
| #10 | Rate of change in weight |

### Industrial Applicability

The laminated product of the present invention is excellent in chemical resistance and thus can be used in various applications.

## Claims

1. A laminated product in which a first base material layer, an adhesive layer and a second base material layer are stacked in this order, wherein
an edge face of the laminated product is covered with a layer formed by a curable composition comprising a perfluoropolyether group-containing compound, wherein 50% or more, preferably 80% or more, further preferably substantially 100% of the surface area of the adhesive layer exposed on the edge face of the laminated product is covered with the layer formed by a curable composition.

2. The laminated product of claim 1, wherein the perfluoropolyether group-containing compound is a perfluoropolyether group-containing silane compound.

3. The laminated product of claim 2, wherein the perfluoropolyether group-containing silane compound is at least one compound of formula (A), (B), (C) or (D): 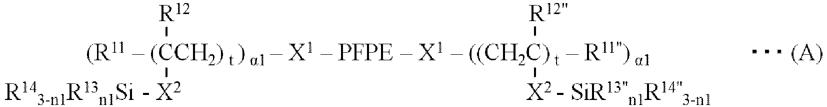
(R¹⁴₃₋ₙ₁R¹³ₙ₁Si)_{β1}-X³-PFPE-X³-(SiR^{13"}ₙ₁R^{14"}₃₋ₙ₁)_{β1} ··· (B)
(R^{c}ₘ₁R^{b}ₗ₁R^{a}ₖ₁Si)_{γ1}-X⁵-PFPE-X⁵-(SiR^{a"}ₖ₁R^{b"}ₗ₁R^{c"}ₘ₁)_{γ1} ··· (C)
(R^{f}ₘ₂R^{e}ₗ₂R^{d}ₖ₂C)_{δ1}-X⁷-PFPE-X⁷-(CR^{d"}ₖ₂R^{e"}ₗ₂R^{f"}ₘ₂)_{δ1} ··· (D)
Wherein, each independently and at each occurrence
PFPE is each a group of the formula:
-(OC₆F₁₂)ₐ-(OC₅F₁₀)_{b}-(OC₄F₈)_{c}-(OC₃X¹⁰₆)_{d}-(OC₂F₄)ₑ-(OCF₂)_{f}-
wherein a-f each independently are an integer of 0-200, (a+b+c+d+e+f) is ≥ 1, the order of the repeating units in parentheses with the subscript a, b, c, d, e or f is not limited, and X¹⁰ each independently is H, F or Cl;
R¹¹, R^{11"} is H or halogen;
R¹², R^{12"} is H or lower alkyl;
R¹³, R^{13"} is OH or a hydrolyzable group;
R¹⁴, R^{14"} is H or C₁₋₂₂-alkyl;
n1 for each (-SiR¹³ₙ₁R¹⁴₃₋ₙ₁) or (-SiR^{13"}ₙ₁R^{14"}₃₋ₙ₁) unit
is an integer of 0-3;
provided that at least two groups selected from R¹³ and R^{13"} are present in formulae (A) and (B);
X¹ is a single bond or a 2-10 valent organic group;
X² is a single bond or a divalent organic group;
t is an integer of 1-10;
α1 is an integer of 1-9;
X³ is a single bond or a 2-10 valent organic group;
β1 is an integer of 1-9;
X⁵ is a single bond or a 2-10 valent organic group;
γ1 is an integer of 1-9;
R^{a}, R^{a"} is -Z³-SiR⁷¹ₚ₁R⁷²_{q1}R⁷³ᵣ₁ wherein, each independently and at each occurrence
Z³ is -O- or a divalent organic group;
R⁷¹ is R^{a'}; with R^{a'} is being defined as R^{a};
the number of Si linearly linked via a Z³ group in R^{a} is ≤ 5;
R⁷² is OH or a hydrolyzable group;
R⁷³ is H or lower alkyl;
p1 is an integer of 0-3;
q1 is an integer of 0-3;
r1 is an integer of 0-3;
provided that (p1+q1+r1) = 3 for each (-Z³-SiR⁷¹ₚ₁R⁷²_{q1}R⁷³ᵣ₁) and at least one q1 in formula (C) is an integer of 1-3;
R^{b}, R^{b"} is OH or a hydrolyzable group;
R^{c}, R^{c"} is H or lower alkyl;
k1 is an integer of 0-3;
11 is an integer of 0-3;
m1 is an integer of 0-3;
provided that (k1+l1+m1) = 3 for each (SiR^{a}ₖ₁R^{b}ₗ₁R^{c}ₘ₁) or (SiR^{a"}ₖ₁R^{b"}ₗ₁R^{c"}ₘ₁);
at least two groups selected from R^{b}, R^{b"}, R⁷² and R^{72"} are present in formula (C);
X⁷ is a single bond or a 2-10 valent organic group;
δ1 is an integer of 1-9;
R^{d}, R^{d"} is -Z⁴-CR⁸¹ₚ₂R⁸²_{q2}R⁸³ᵣ₂ wherein, each independently and at each occurrence
Z⁴ is -O- or a divalent organic group;
R⁸¹ is R^{d'}; with R^{d'} being defined as R^{d};
the number of C linearly bonded via a Z⁴ group in R^{d} is at most 5;
R⁸² is -Y-SiR⁸⁵ₙ₂R⁸⁶₃₋ₙ₂ wherein, each independently and at each occurrence
Y is a divalent organic group;
R⁸⁵ is OH or a hydrolyzable group;
R⁸⁶ is H or lower alkyl;
n2 is an integer of 0-3 for each (-Y-SiR⁸⁵ₙ₂R⁸⁶₃₋ₙ₂) ;
R⁸³ is H, OH or lower alkyl;
p2 is an integer of 0-3;
q2 is an integer of 0-3;
r2 is an integer of 0-3;
provided that (p2+q2+r2) = 3 for each (-Z⁴-CR⁸¹ₚ₂R⁸²_{q2}R⁸³ᵣ₂);
R^{e}, R^{e"} is -Y-SiR⁸⁵ₙ₂R⁸⁶₃₋ₙ₂;
R^{f}, R^{f"} is H, OH or lower alkyl;
k2 is an integer of 0-3;
12 is an integer of 0-3; and
m2 is an integer of 0-3;
provided that (k2+l2+m2) = 3 for each (CR^{d}ₖ₂R^{e}ₗ₂R^{f}ₘ₂), and two or more groups -Y-SiR⁸⁵ₙ₂R⁸⁶₃₋ₙ₂ wherein n2 is ≥ 1 are present in formula (D).

4. The laminated product of claim 1, wherein the perfluoropolyether group-containing compound has a carbon-carbon double bond at a molecular end.

5. The laminated product of claim 4, wherein the perfluoropolyether group-containing compound is a compound of the formula:
CH₂=CH-R^{k1}-PFPE-R^{k1}-CH=CH₂ (I)
wherein R^{k1} each independently is a single bond or a divalent organic group, and PFPE is a group of the formula:
- (OC₆F₁₂)ₐ-(OC₅F₁₀)_{b}-(OC₄F₈)_{c}-(OC₃X¹⁰₆)_{d}-(OC₂F₄)ₑ-(OCF₂)_{f}-
wherein a-f each independently are an integer of 0-200, (a+b+c+d+e+f) is ≥ 1, the order of the repeating units in parentheses with the subscript a, b, c, d, e or f is not limited, and X¹⁰ each independently is H, F or Cl.

6. The laminated product of any of claims 1-5, wherein the adhesive is an adhesive comprising a resin selected from an epoxy resin, an acrylic resin, a silicone resin, a phenol resin, a polyimide resin, an imide resin, a polyvinyl chloride resin, a polyvinyl butyral resin and an ethylene vinyl acetate resin.

7. The laminated product of any of claims 1-6, wherein the first base material layer and the second base material layer are each independently a base material layer formed from a material selected from a resin, a metal, a metal oxide, a ceramic and glass.

8. An article comprising the laminated product of any of claims 1-7.

## Patentansprüche

1. Laminiertes Produkt, worin eine erste Basismaterialschicht, eine Adhäsivschicht und eine zweite Basismaterialschicht in dieser Reihenfolge gestapelt sind, worin
eine Kantenfläche des laminierten Produkts mit einer Schicht bedeckt ist, die aus einer härtbaren Zusammensetzung gebildet ist, umfassend eine Perfluorpolyethergruppe-haltige Verbindung, worin 50 % oder mehr, bevorzugt 80 % oder mehr, ferner bevorzugt im Wesentlichen 100 % der Oberfläche der Adhäsivschicht, die an der Kantenfläche des laminierten Produkts freigelegt ist, mit der aus einer härtbaren Zusammensetzung gebildeten Schicht bedeckt ist.

2. Laminiertes Produkt gemäß Anspruch 1, worin die Perfluorpolyethergruppe-haltige Verbindung eine Perfluorpolyethergruppe-haltige Silanverbindung ist.

3. Laminiertes Produkt gemäß Anspruch 2, worin die Perfluorpolyethergruppe-haltige Silanverbindung zumindest eine Verbindung der Formel (A), (B), (C) oder (D) ist: 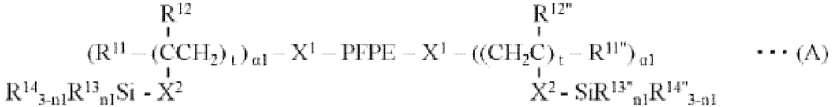
(R¹⁴₃₋ₙ₁R¹³ₙ₁Si)_{β1}-X³-PFPE-X³-(SiR^{13"}ₙ₁R^{14"}₃₋ₙ₁)_{β1} ··· (B)
(R^{c}ₘ₁R^{b}ₗ₁R^{a}ₖ₁Si)_{γ1}-X⁵-PFPE-X⁵-(SiR^{a"}ₖ₁R^{b"}ₗ₁R^{c"}ₘ₁)_{γ1} ··· (C)
(R^{f}ₘ₂R^{e}ₗ₂R^{d}ₖ₂C)_{δ1}-X⁷-PFPE-X⁷-(CR^{d"}ₖ₂R^{e"}ₗ₂R^{f"}ₘ₂)_{δ1} ··· (D)
worin jeweils unabhängig und bei jedem Auftreten
PFPE jeweils eine Gruppe der Formel:
-(OC₆F₁₂)ₐ-(OC₅F₁₀)_{b}-(OC₄F₈)_{c}- (OC₃X¹⁰₆)_{d}-(OC₂F₄)ₑ- (OCF₂)_{f}-
ist, worin a-f jeweils unabhängig eine ganze Zahl von 0-200 sind, (a+b+c+d+e+f) ≥ 1 ist, die Reihenfolge der Wiederholungseinheiten in Klammern mit den Indizes a, b, c, d, e oder f nicht beschränkt ist und X¹⁰ jeweils unabhängig H, F oder Cl ist;
R¹¹, R^{11"} H oder Halogen ist;
R¹², R^{12"} H oder Niederalkyl ist;
R¹³, R^{13"} OH oder eine hydrolysierbare Gruppe ist;
R¹⁴, R^{14"} H oder C₁₋₂₂-Alkyl ist;
n1 for jede (-SiR¹³ₙ₁R¹⁴₃₋ₙ₁)- oder (-SiR^{13"}ₙ₁R^{14"}₃₋ₙ₁)-Einheit eine ganze Zahl von 0-3 ist;
vorausgesetzt, dass zumindest zwei Gruppen, ausgewählt aus R¹³ und R^{13"}, in den Formeln (A) und (B) vorliegen;
X1 eine Einfachbindung oder eine 2-10-bindige organische Gruppe ist;
X2 eine Einfachbindung oder eine zweibindige organische Gruppe ist;
t eine ganze Zahl von 1-10 ist;
α1 eine ganze Zahl von 1-9 ist;
X3 eine Einfachbindung oder eine 2-10-bindige organische Gruppe ist;
β1 eine ganze Zahl von 1 bis 9 ist;
X5 eine Einfachbindung oder eine 2-10-bindige organische Gruppe ist;
γ1 eine ganze Zahl von 1-9 ist;
R^{a}, R^{a"} -Z³-SiR⁷¹ₚ₁R⁷²_{q1}R⁷³ᵣ₁ ist, worin jeweils unabhängig und bei jedem Auftreten
Z³ -O- oder eine zweibindige organische Gruppe ist;
R71 R^{a'} ist, wobei R^{a'} wie R^{a} definiert ist; die Anzahl von über eine Z³-Gruppe in R^{a} linear verknüpftem Si ≤ 5 ist;
R72 OH oder eine hydrolysierbare Gruppe ist;
R73 H oder Niederalkyl ist;
p1 eine ganze Zahl von 0-3 ist;
q1 eine ganze Zahl von 0-3 ist;
r1 eine ganze Zahl von 0-3 ist;
vorausgesetzt, dass (p1+q1+r1) = 3 für jedes (-Z³-SiR⁷¹ₚ₁R⁷²_{q1}R⁷³ᵣ₁) und mindestens ein q1 in der Formel (C) eine ganze Zahl von 1-3 ist;
R^{b}, R^{b"} OH oder eine hydrolysierbare Gruppe ist,
Rc, Rc" H oder Niederalkyl ist;
k1 eine ganze Zahl von 0-3 ist;
l1 eine ganze Zahl von 0-3 ist;
m1 eine ganze Zahl von 0-3 ist;
vorausgesetzt, dass (k1+l1+m1) = 3 für jedes (SiR^{a}ₖ₁R^{b}ₗ₁R^{c}ₘ₁) oder (SiR^{a"}ₖ₁R^{b"}ₗ₁R^{c"}ₘ₁);
wobei mindestens zwei Gruppen, ausgewählt aus R^{b}, R^{b"}, R⁷² und R^{72"}, in der Formel (C) vorliegen;
X7 eine Einfachbindung oder eine 2-10-bindige organische Gruppe ist;
δ1 eine ganze Zahl von 1-9 ist;
R^{d}, R^{d"} -Z⁴-CR⁸¹ₚ₂R⁸²_{q1}R⁸³ᵣ₂ ist, wobei jeweils unabhängig und bei jedem Auftreten
Z⁴ -O- oder eine zweibindige organische Gruppe ist;
R81 R^{d'} ist, wobei R^{d'} wie R^{d} definiert ist; wobei die Anzahl von linear über eine Z⁴-Gruppe gebundenen C in R^{d} höchstens 5 ist;
R⁸² -Y-SiR⁸⁵ₙ₂R⁸⁶₃₋ₙ₂ ist, worin jeweils unabhängig und jedem Auftreten
Y eine zweibindige organische Gruppe ist;
R85 OH oder eine hydrolysierbare Gruppe ist;
R86 H oder Niederalkyl ist;
n2 eine ganze Zahl von 0-3 für jedes (-Y-SiR⁸⁵ₙ₂R⁸⁶₃₋ₙ₂) ist;
R83 H, OH oder Niederalkyl ist;
p2 eine ganze Zahl von 0-3 ist;
q2 eine ganze Zahl von 0-3 ist;
r2 eine ganze Zahl von 0-3 ist;
vorausgesetzt, dass (p2+q2+r2) = 3 für jedes (-Z⁴-CR⁸¹ₚ₂R⁸²_{q1}R⁸³ᵣ₂);
Re, Re" -Y-SiR⁸⁵ₙ₂R⁸⁶₃₋ₙ₂ ist;
Rf, Rf" H, OH oder Niederalkyl ist;
k2 eine ganze Zahl von 0-3 ist;
l2 eine ganze Zahl von 0-3 ist; und
m2 eine ganze Zahl von 0-3 ist;
vorausgesetzt, dass (k2+l2+m2) = 3 für jedes (CR^{d}ₖ₂R^{e}ₗ₂R^{f}ₘ₂) und zwei oder mehr Gruppen -Y-SiR⁸⁵ₙ₂R⁸⁶₃₋ₙ₂, worin n2 ≥ 1 ist, in der Formel (D) vorliegen.

4. Laminiertes Produkt gemäß Anspruch 1, worin die Perfluorpolyethergruppe-haltige Verbindung endständig eine Kohlenstoff-Kohlenstoff-Doppelbindung aufweist.

5. Laminiertes Produkt gemäß Anspruch 4, worin die Perfluorpolyethergruppe-haltige Verbindung eine Verbindung der Formel:
CH₂=CH-R^{k1}-PFPE-R^{k1}-CH=CH₂ (I)
ist,
worin R^{k1} jeweils unabhängig eine Einfachbindung oder eine zweibindige organische Gruppe ist und PFPE eine Gruppe der Formel:
-(OC6F12)a(OC5F10)b-(OC4F8)c (OC₃X¹⁰₆)_{d}-(OC₂F₄)ₑ-(OCF₂)_{f}-
ist,
worin a-f jeweils unabhängig eine ganze Zahl von 0-200 sind, (a+b+c+d+e+f) ≥ 1 ist, die Reihenfolge der Wiederholungseinheiten in Klammern mit den Indizes a, b, c, d, e oder f nicht beschränkt ist und X¹⁰ jeweils unabhängig H, F oder Cl ist.

6. Laminiertes Produkt gemäß irgendeinem der Ansprüche 1-5, worin das Adhäsiv ein Adhäsiv ist, das ein Harz umfasst, ausgewählt aus einem Epoxyharz, einem Acrylharz, einem Silikonharz, einem Phenolharz, einem Polymidharz, einem Imidharz, einem Polyvinylchloridharz, einem Polyvinylbutyralharz und einem Ethylenvinylacetatharz.

7. Laminiertes Produkt gemäß irgendeinem der Ansprüche 1-6, worin die erste Basismaterialschicht und die zweite Basismaterialschicht jeweils unabhängig eine Basismaterialschicht sind, die aus einem Material gebildet ist, ausgewählt aus einem Harz, einem Metall, einem Metalloxid, einer Keramik und Glas.

8. Artikel, umfassend das laminierte Produkt gemäß einem der Ansprüche 1-7.

## Revendications

1. Produit stratifié dans lequel une première couche de matériau de base, une couche adhésive et une seconde couche de matériau de base sont empilées dans cet ordre, dans lequel
une face d'extrémité du produit stratifié est recouverte d'une couche formée à partir d'une composition durcissable comprenant un composé contenant un groupe perfluoropolyéther, dans lequel 50 % ou plus, de préférence 80 % ou plus, plus de préférence sensiblement 100 % de la surface de la couche adhésive exposée sur la face d'extrémité du produit stratifié est recouverte par la couche formée à partir d'une composition durcissable.

2. Produit stratifié selon la revendication 1, dans lequel le composé contenant un groupe perfluoropolyéther est un composé de silane contenant un groupe perfluoropolyéther.

3. Produit stratifié selon la revendication 2, dans lequel le composé de silane contenant un groupe perfluoropolyéther est au moins un composé de formule (A) , (B), (C) ou (D) : 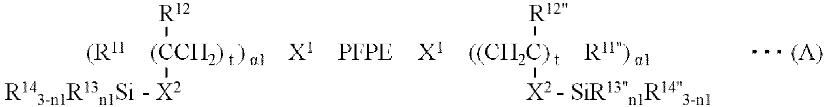
(R¹⁴₃₋ₙ₁R¹³ₙ₁Si)_{β1}-X³-PFPE-X³-(SiR^{13"}ₙ₁R^{14"}₃₋ₙ₁)_{β1} ··· (B)
(R^{c}ₘ₁R^{b}ₗ₁R^{a}ₖ₁Si)_{γ1}-X⁵-PFPE-X⁵-(SiR^{a"}ₖ₁R^{b"}ₗ₁R^{c"}ₘ₁)_{γ1} ··· (C)
(R^{f}ₘ₂R^{e}ₗ₂R^{d}ₖ₂C)_{δ1}-X⁷-PFPE-X⁷-(CR^{d"}ₖ₂R^{e"}ₗ₂R^{f"}ₘ₂)_{δ1} ··· (D)
Dans lequel, indépendamment et à chaque occurrence
PFPE est chaque fois un groupe de la formule :
-(OC₆F₁₂)ₐ-(OC₅F₁₀)_{b}-(OC₄F₈)_{c}-(OC₃X¹⁰₆)_{d}-(OC₂F₄)ₑ-(OCF₂)_{f}-
dans lequel a-f sont chacun indépendamment un nombre entier de 0 à 200, (a+b+c+d+e+f) est ≥ 1, l'ordre des unités répétitives entre parenthèses avec l'indice a, b, c, d, e ou f n'est pas limité, et X¹⁰ est, à chaque occurrence, indépendamment H, F ou Cl ;
R¹¹, R¹¹" est H ou halogène ;
R¹², R¹²" est H ou alkyle inférieur ;
R¹³, R¹³" est OH ou un groupe hydrolysable ;
R¹⁴, R¹⁴" est H ou C₁-₂₂-alkyle ;
n1 pour chaque unité (-SiR¹³ₙ₁R¹⁴₃₋ₙ₁) ou (-SiR¹³"ₙ₁R¹⁴"₃₋ₙ₁) est un nombre entier de 0 à 3 ;
étant entendu qu'au moins deux groupes choisis parmi R¹³ et R¹³" sont présents dans les formules (A) et (B) ;
X¹ est une liaison simple ou un groupe organique 2-10-valent ;
X² est une liaison simple ou un groupe organique divalent ;
t est un nombre entier de 1 à 10 ;
α1 est un nombre entier de 1 à 9 ;
X³ est une liaison simple ou un groupe organique 2-10-valent ;
β1 est un nombre entier de 1 à 9 ;
X⁵ est une liaison simple ou un groupe organique 2-10-valent ;
γ1 est un nombre entier de 1 à 9 ;
R^{a}, R^{a"} est -Z³-SiR⁷¹ₚ₁R⁷²_{q1}R⁷³ᵣ₁ dans lequel, indépendamment et à chaque occurrence
Z³ est -O- ou un groupe organique divalent ;
R⁷¹ est R^{a'} ; R^{a'} étant défini comme R^{a} ;
le nombre de Si liés linéairement via un groupe Z³ dans R^{a} est ≤ 5 ;
R⁷² est OH ou un groupe hydrolysable ;
R⁷³ est H ou alkyle inférieur ;
p1 est un nombre entier de 0 à 3 ;
q1 est un nombre entier de 0 à 3 ;
r1 est un nombre entier de 0 à 3 ;
étant entendu que (p1+q1+r1) = 3 pour chaque (-Z³-SiR⁷¹ₚ₁R⁷²_{q1}R⁷³ᵣ₁ et qu'au moins un q1 dans la formule (C) est un nombre entier de 1 à 3 ;
R^{b}, R^{b"} est OH ou un groupe hydrolysable ;
R^{c}, R^{c"} est H ou alkyle inférieur ;
k1 est un nombre entier de 0 à 3 ;
l1 est un entier de 0 à 3 ;
m1 est un nombre entier de 0 à 3 ;
étant entendu que (k1+l1+m1) = 3 pour chaque (SiR^{a}ₖ₁R^{b}₁₁R^{c}ₘ₁) ou (SiR^{a}"ₖ₁R^{b}"₁₁R^{c}"ₘ₁) au moins deux groupes choisis parmi R^{b}, R^{b"}, R⁷² et R⁷²" sont présents dans la formule (C) ;
X⁷ est une liaison simple ou un groupe organique 2-10-valent ;
δ1 est un nombre entier de 1 à 9 ;
R^{d}, R^{d}" est -Z⁴-CR⁸¹ₚ₂R⁸²_{q2}R⁸³ᵣ₂ dans lequel, indépendamment et à chaque occurrence
Z⁴ est -O- ou un groupe organique divalent ;
R⁸¹ est R^{d'} ; R^{d'} étant défini comme R^{d} ;
le nombre de C liés linéairement via un groupe Z⁴ dans R^{d} est au plus 5 ;
R⁸² est -Y-SiR8⁵ₙ₂R⁸⁶₃₋ₙ₂ dans lequel,
indépendamment et à chaque occurrence
Y est un groupe organique divalent ;
R⁸⁵ est OH ou un groupe hydrolysable ;
R⁸⁶ est H ou alkyle inférieur ;
n2 est un nombre entier de 0 à 3 pour chaque (-Y-SiR⁸⁵ₙ₂R⁸⁶_{3- n2}) ;
R⁸³ est H, OH ou alkyle inférieur ;
p2 est un entier de 0 à 3 ;
q2 est un entier de 0 à 3 ;
r2 est un nombre entier de 0 à 3 ;
étant entendu que (p2+q2+r2) = 3 pour chaque (-Z⁴-CR⁸¹ₚ₂R⁸²_{q2}R⁸³ᵣ₂) ;
Re, Re" est -Y-SiR⁸⁵ₙ₂R⁸⁶₃₋ₙ₂ ;
Rf, Rf" est H, OH ou alkyle inférieur ;
k2 est un nombre entier de 0 à 3 ;
l2 est un nombre entier de 0 à 3 ; et
m2 est un nombre entier de 0 à 3 ;
étant entendu que (k2+l2+m2) = 3 pour chaque (CR^{d}ₖ₂R^{e}₁₂R^{f}ₘ₂) et que deux groupes ou plus -Y-SiR⁸⁵ₙ₂R⁸⁶₃₋ₙ₂ dans lesquels n2 est ≥ 1 sont présents dans la formule (D)

4. Produit stratifié selon la revendication 1, dans lequel le composé contenant un groupe perfluoropolyéther présente une double liaison carbone-carbone à une extrémité moléculaire.

5. Produit stratifié selon la revendication 4, dans lequel le composé contenant un groupe perfluoropolyéther est un composé de la formule :
CH₂=CH-R^{k1}-PFPE-R^{k1}-CH=CH₂ (I)
dans lequel Rk¹ est chacun indépendamment une liaison simple ou un groupe organique divalent, et PFPE est un groupe de la formule :
-(OC₆F₁₂)ₐ-(OC₅F₁₀)_{b}-(OC₄F₈)_{c}-(OC₃X¹⁰₆)_{d}-(OC₂F₄)ₑ-(OCF₂)_{f}-
dans lequel a-f sont, chacun indépendamment, un nombre entier de 0 à 200, (a+b+c+d+e+f) est ≥ 1, l'ordre des unités répétitives entre parenthèses avec l'indice a, b, c, d, e ou f n'est pas limité, et X¹⁰ est, à chaque occurrence, indépendamment H, F ou Cl.

6. Produit stratifié selon l'une quelconque des revendications 1 à 5, dans lequel l'adhésif est un adhésif comprenant une résine choisie parmi une résine époxyde, une résine acrylique, une résine silicone, une résine phénolique, une résine polyimide, une résine imide, une résine de chlorure de polyvinyle, une résine de polybutyral de vinyle et une résine d'éthylène-acétate de vinyle.

7. Produit stratifié selon l'une quelconque des revendications 1 à 6, dans lequel la première couche de matériau de base et la seconde couche de matériau de base sont chacune indépendamment une couche de matériau de base formée à partir d'un matériau choisi parmi une résine, un métal, un oxyde métallique, une céramique et le verre.

8. Article comprenant le produit stratifié selon l'une quelconque des revendications 1 à 7.
